# EUROPEAN PATENT SPECIFICATION

(11) **EP 1 389 912 B1**
(45) Date of publication and mention of the grant of the patent: **11.11.2009**
(21) Application number: 02713759.5
(22) Date of filing: 01.03.2002
(51) Int. Cl.: A01N 57/20, A01N 37/04

(54) **PESTICIDE COMPOSITIONS CONTAINING OXALIC ACID**
OXALSÄURE ENTHALTENDE PESTIZIDE ZUSAMMENSETZUNGEN
COMPOSITIONS PESTICIDES CONTENANT UN ACIDE OXALIQUE

(30) Priority: 02.03.2001 US 273234 P; 08.03.2001 US 274368 P; 21.05.2001 WO PCT/US01/16550; 14.11.2001 US 926521; 19.11.2001 US 988353
(43) Date of publication of application: 25.02.2004
(73) Proprietor: Monsanto Technology LLC, St. Louis, Missouri 63167 (US)
(72) Inventor: XU, Xiaodong, C., Valley Park, MO 63088 (US); BRINKER, Ronald, J., Ellisville, MO 63021 (US); ABRAHAM, William, Wildwood, MO 63038 (US); REYNOLDS, Tracey, L., Ballwin, MO 63011 (US); GRAHAM, Jeffrey, A., Chesterfield, Missouri 63017 (US)
(74) Representative: Bosch, Henry
(86) International application number: PCT/US2002/006709
(87) International publication number: WO 2002/069718

(56) References cited:
- US-A- 5 863 863
- RESEARCH DISCLOSURE 15334, January 1977 (1977-01), pages 35-36, XP002018087 Havant, GB cited in the application

## Description

### BACKGROUND OF THE INVENTION

The present invention relates to enhanced glyphosate compositions. More particularly, the present invention relates to glyphosate acid, salt or ester concentrate and tank mix formulations containing one or more surfactants enhansed through the addition of oxalic acid or a salt thereof which increases cell membrane permeability or suppresses oxidative burst.

Glyphosate is well known in the art as an effective post-emergent foliar-applied herbicide. In its acid form, glyphosate has a structure represented by formula (1): 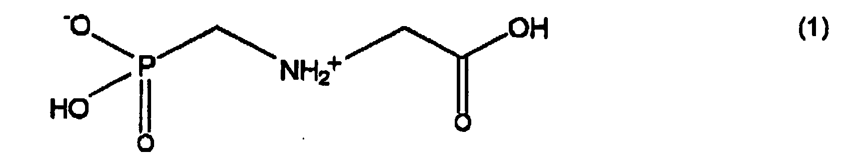 and is relatively insoluble in water (1.16% by weight at 25°C). For this reason it is typically formulated as a water-soluble salt.

Monobasic, dibasic and tribasic salts of glyphosate can be made. However, it is generally preferred to formulate glyphosate and apply glyphosate to plants in the form of a monobasic salt. The most widely used salt of glyphosate is the mono(isopropylammonium), often abbreviated to IPA, salt. Commercial herbicides of Monsanto Company having the IPA salt of glyphosate as active ingredient include Roundup®, Roundup® Ultra, Roundup® UltraMax, Roundup® Xtra and Rodeo® herbicides. All of these are aqueous solution concentrate (SL) formulations and are generally diluted in water by the user prior to application to plant foliage. Another glyphosate salt which have been commercially formulated as SL formulations include the mono(trimethylsulfonium), often abbreviated to TMS salt, used for example in Touchdown® herbicide of Syngenta. Various salts of glyphosate, methods for preparing salts of glyphosate, formulations of glyphosate or its salts and methods of use of glyphosate or its salts for killing and controlling weeds and other plants are disclosed in U.S. Patent No. 4,507,250 to Bakel, U.S. Patent No. 4,481,026 to Prisbylla, U.S. Patent No. 4,405,531 to Franz, U.S. Patent No. 4,315,765 to Large, U.S. Patent No. 4,140,513 to Prill, U.S. Patent No. 3,977,860 to Franz, U.S. Patent No. 3,853,530 to Franz, and U.S. Patent No. 3,799,758 to Franz.

Among the water soluble salts of glyphosate known in the literature, but not known to be used commercially, is the potassium salt, having a structure represented by formula (2): 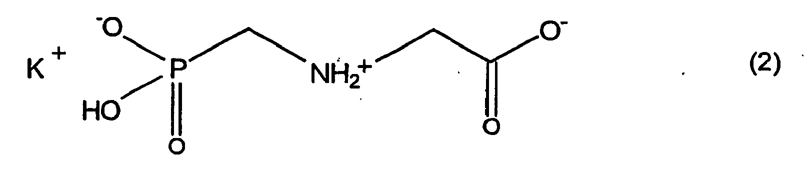 in the ionic form predominantly present in aqueous solution at a pH of about 4. This salt is disclosed, for example, by Franz in U.S. Patent No. 4,405,531 cited above, as one of the "alkali metal" salts of glyphosate useful as herbicides, with potassium being specifically disclosed as one of the alkali metals, along with lithium, sodium, cesium and rubidium. Example C discloses the preparation of the monopotassium salt by reacting the specified amounts of glyphosate acid and potassium carbonate in an aqueous medium.

Very few herbicides have been commercialized as their potassium salts. The Pesticide Manual, 11th Edition, 1997, lists as potassium salts the auxin type herbicides 2,4-DB ((2,4-dichlorophenoxy)butanoic acid), dicamba (3,6-dichloro-2-methoxybenzoic acid), dichlorprop (2-(2,4-dichlorophenoxy)propanoic acid), MCPA ((4-chloro-2-methylphenoxy)acetic acid), and picloram (4-amino-3,5,6-trichloro-2-pyridinecarboxylic acid), the active ingredient of certain herbicide products sold by DowElanco under the trademark Tordon.

The solubility of glyphosate potassium salt in water is recorded in pending application Serial No. 09/444,766, filed November 22, 1999, the entire disclosure of which is incorporated herein by reference. As disclosed therein, glyphosate potassium salt has a solubility in pure water at 20°C of about 54% by weight, that is, about 44% glyphosate acid equivalent (a.e.) by weight. This is very similar to the solubility of the IPA salt. Concentrations expressed as percent by weight herein relate to parts by weight of salt or acid equivalent per 100 parts by weight of solution. Thus a simple aqueous solution concentrate of glyphosate potassium salt can readily be provided at a concentration of, for example, 44% a.e. by weight, comparable to that commercially obtainable with glyphosate IPA salt, as in the aqueous solution concentrate available from Monsanto Company under the name D-Pak. Somewhat higher concentrations can be obtained by slight over neutralization, 5 to 10% for example, of an aqueous solution of glyphosate potassium salt with potassium hydroxide.

Polycarboxylic acid have been used as chelators to enhance glyphosate efficacy in tank mix compositions. For example, D. J. Turner reported in Butterworths (1985), at pages 229-230, that 2% concentrations of polycarboxylic acids in glyphosate (Roundup^{®}) tank mixes gave efficacy enhancement. Further, Research Disclosure publication number RD15334, Industrial Opportunities Ltd., Homewell-Havant-Hampshire P09 1 EF, United Kingdom (January 1977), disclosed that glyphosate tank mixes formulated with water containing calcium and/or magnesium ions in concentrations greater than 200 ppm (hard water) had diminished herbicidal activity. Herbicidal activity was restored by adding oxalic acid to the tank mix in weight ratios to glyphosate of between about 1:10 to about 10:1.

U.S. Patent No. 5,863,863 to Hasabe et al. teaches tank mix formulations comprising about 0.08 wt% a.i. IPA glyphosate (as Roundup^{®}) and about 0.001 moles/l of dipotassium, disodium, diammonium, diethanolamine or dimethylamine oxalate, and an ethoxylated tertiary amine or quaternary ammonium surfactant. Concentrates containing about 41 wt% a.i. IPA glyphosate, 0.21 mols/kg of dipotassium, disodium, diammonium, diethanolamine or dimethylamine oxalate are also described. Example 3 describes a maximum glyphosate concentration of 360 g a.e. per liter.

U.S. Patent No. 5,525,576 to Medina-Vega et al. discloses a process for preparing a seed hull extract containing a mixture of polycarboxylic acids for use as a herbicide assimilation agent. 0.25% of the extract was added to tank mixes containing the trlmethylsulfonium (TMS) salt of glyphosate (sold commercially as Touchdown^{®}) or the isopropylamine (IPA) salt of glyphosate (sold commercially as Roundup^{®}). U.S. 5,436,220 to Hickey teaches an efficacy enhancing formulation comprising a seed hull extract containing tricarboxylic acids and Roundup^{®} herbicide, with glyphosate application rates of 64 to 191 g/ha in combination with 82 g/ha of a seed hull extract containing about 5 wt% tricarboxylic acid.

U.S. Patent Nos. 5,849,663 and 6,008,158 to Hasabe et al. disclose tank mix formulations containing Roundup^{®} herbicide at 0.08 wt% a.i. or TMS glyphosate, polycarboxylic acid salt chelating agents including oxalate salts at 0.02 wt%, and ethoxylated tertiary amine and quaternary ammonium surfactants. Hasabe reports polycarboxylic acid to surfactant weight ratios between about 1:2 and about 1:9 with efficacy enhancement resulting from complexation of metal ions.

U.S. Patent No. 6,093,679 to Azuma et al. discloses tank mixes containing 0.38 wt% glyphosate TMS (Touchdown^{®}), 0.53 wt% hydroxycarboxylic acid-based chelating agents, including potassium oxalate, and a quaternary ammonium surfactant having an alkoxylated carboxy alkyl anion.

U.S. Patent No. 6,218,336 to Coleman discloses tank mixes containing up to 1.25 wt% Roundup® Ultra IPA glyphosate and 2.5 wt% of succinic, tartaric or malic acids or their ammonium salts. Sylgard 309^{®} (ethoxylated organosilicone) and Emsorb 6900^{®} (polyoxyethylenated sorbitol ester) surfactants may be added to the tank mixes.

U.S. Patent No. 5,948,421 to Okano et al. describes aqueous concentrate formulations containing 42 and 51 wt%, respectively of the diammonium or isopropylamine salts of glyphosate, dicarboxylic acid chelating agents including potassium oxalate at 8 wt%, and an ethoxylated quaternary ammonium surfactant.

Polycarboxylic acids have not been reported to be effective in potassium glyphosate formulations. Perhaps this is because commercial applications of potassium herbicide formulations have been limited, and the action of polycarboxylic acids on the numerous surfactants used in the herbicide formulation industry is varied and unpredictable.

The choice of a surfactant has a major bearing on herbicidal performance. For example, in an extensive study reported in Weed Science, 1977, volume 25, pages 275-287, Wyrill and Burnside found wide variation among surfactants in their ability to enhance the herbicidal efficacy of glyphosate, applied as the IPA salt. Suitable surfactants for potassium glyphosate formulations are disclosed in pending application Serial No. 09/926,521, filed November 14, 2001, (the national stage of International Application No. PCT/US01/16550, filed May 21, 2001), the entire disclosure of which is incorporated by reference. Surfactants tending to give the most useful enhancement of glyphosate herbicidal effectiveness are generally, but not exclusively, cationic surfactants, including surfactants which form cations in aqueous solution or dispersion at pH levels of around 4-5 characteristic of SL formulations of monobasic salts of glyphosate.

Beyond some broad generalizations, the relative ability of different surfactants to enhance the herbicidal effectiveness of glyphosate is highly unpredictable.

Surfactants tending to give the most useful enhancement of glyphosate herbicidal effectiveness are generally but not exclusively cationic surfactants, including surfactants which form cations in aqueous solution or dispersion at pH levels of around 4-5 characteristic of SL formulations of monobasic salts of glyphosate. Examples are long-chain (typically C₁₂ to C₁₈) tertiary alkylamine surfactants and quaternary alkylammonium surfactants. An especially common tertiary alkylamine surfactant used in aqueous solution concentrate formulations of glyphosate IPA salt has been the very hydrophilic surfactant polyoxyethylene (15) tallowamine, *i*.*e*., tallowamine having in total about 15 moles of ethylene oxide in two polymerized ethylene oxide chains attached to the amine group as shown in formula (3): 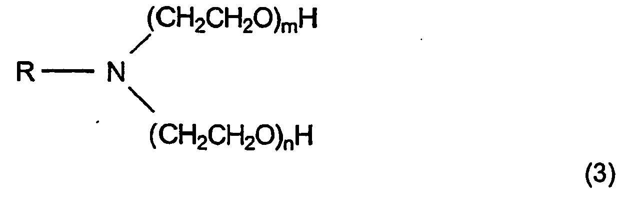 wherein R is a mixture of predominantly C₁₆ and C₁₈ alkyl and alkenyl chains derived from tallow and the total of m+n is an average number of about 15.

For certain applications, it has been found desirable to use a somewhat less hydrophilic alkylamine surfactant, such as one having less than about 10 moles of ethylene oxide, as suggested in U.S. Patent No. 5,668,085 to Forbes et al., for example polyoxyethylene (2) cocoamine. That patent discloses illustrative aqueous compositions comprising such a surfactant together with the IPA, ammonium or potassium salts of glyphosate. The highest concentration of glyphosate in the potassium salt formulations shown in Table 3 of the '085 patent is 300 g glyphosate a.e./I, with a weight ratio of glyphosate a.e. to surfactant of 2:1.

A class of alkoxylated alkylamines is disclosed in WO OO/59302 for use in herbicidal spray compositions. Potassium glyphosate solutions including various Jeffamine™ EO/PO propylamines or propyldiamines are described therein.

A wide variety of quaternary ammonium surfactants have been disclosed as components of aqueous solution concentrate formulations of glyphosate IPA salt. Illustrative examples are N-methylpolyoxyethylene (2) cocoammonium chloride, disclosed in European Patent No. 0274369, N-methylpolyoxyethylene (15) cocoammonium chloride, disclosed in U.S. Patent No. 5,317,003, and various quaternary ammonium compounds having formula (4):

(R¹)(R²)(R³)N⁺-CH₂CH₂O-(CH₂CH(CH₃)O)ₙH Cl⁻ (4)

where R¹, R²and R³ are each C₁₋₃ alkyl groups and n is an average number from 2 to 20, disclosed in U.S. Patent No. 5,464,807.

PCT Publication No. WO 97/16969 discloses aqueous solution concentrate compositions of glyphosate, in the form of the IPA, methylammonium and diammonium salts, comprising a quaternary ammonium surfactant and an acid salt of a primary, secondary or tertiary alkylamine compound.

Other cationic surfactants which have been indicated as useful in aqueous solution concentrate compositions of glyphosate salts include those disclosed in PCT Publication No. WO 95/33379. It is further disclosed in PCT Publication No. WO 97/32476 that highly concentrated aqueous compositions of glyphosate salts can be made with certain of these same cationic surfactants, with the further addition of a defined component that enhances stability of the compositions. Glyphosate salts exemplified therein are the IPA salt and the mono- and diammonium salts.

A class of alkyl etheramine, alkylether ammonium salt and alkyl etheramine oxide surfactants has been disclosed in U.S. Patent No. 5,750,468 to be suitable for preparation of aqueous solution concentrate formulations of various glyphosate salts, the potassium salt being included in the list of salts mentioned. It is disclosed therein that an advantage of the subject surfactants when used in an aqueous composition with glyphosate salts is that these surfactants permit the glyphosate concentration of the composition to be increased to very high levels.

Anionic surfactants, except in combination with cationic surfactants as disclosed in U.S. Patent No. 5,389,598 and U.S. Patent No. 5,703,015, are generally of little interest in SL formulations of glyphosate IPA salt. The '015 patent discloses a surfactant blend of a dialkoxylated alkylamine and an anionic eye irritancy reducing compound. The surfactant blend is disclosed as being suitable for preparation of aqueous solution concentrate formulations of various glyphosate salts, the potassium salt being included in the list of salts mentioned. Concentrates of the '015 patent contain from about 5 to about 50%, preferably about 35% to about 45% glyphosate a.i. and from about 5 to about 25% surfactant. Further, PCT Publication No. WO 00/08927 discloses the use of certain polyalkoxylated phosphate esters in combination with certain polyalkoxylated amidoamines in glyphosate containing formulations. Potassium is identified as one of several salts of glyphosate noted as being "suitable."

Nonionic surfactants are generally reported to be less effective in enhancing herbicidal activity than cationic or amphoteric surfactants when used as the sole surfactant component of SL formulations of glyphosate IPA salt; exceptions appear to include certain alkyl polyglucosides, as disclosed for example in Australian Patent No. 627503, and polyoxyethylene (10-100) C₁₆₋₂₂ alkylethers, as disclosed in PCT Publication No. WO 98/17109. Other nonionic surfactants are generally mixed with cationic surfactants to form a compatible surfactant system for use in liquid herbicidal concentrates. However, cationic/nonionic surfactant systems generally do not provide acceptable low temperature storage stability. Concentrates containing these surfactant systems can crystallize at temperatures at or below about 0°C, limiting the use of such concentrates in cold climates.

Glyphosate concentrates containing nonionic alkylether and cationic amine surfactants are described in U.S. Patent No. 6,245,713. The surfactant mixture is said to enhance biological effectiveness of the glyphosate and provide enhanced rainfastness. Suitable glyphosates for use in the concentrates include sodium, potassium, ammonium, dimethylammonium, IPA, monoethanolammonium and TMS glyphosate salts. This patent is incorporated herein in its entirety by reference.

It is likely that serious consideration of glyphosate potassium salt as a herbicidal active ingredient has been inhibited by the relative difficulty in formulating this salt as a highly concentrated SL product together with preferred surfactant types. For example, a widely used surfactant in glyphosate IPA salt compositions, namely polyoxyethylene (15) tallowamine of formula (3) above, is highly incompatible in aqueous solution with glyphosate potassium salt. Further, PCT Publication No. WO 00/15037 notes the low compatibility of alkoxylated alkylamine surfactants in general with high-strength glyphosate concentrates. As disclosed therein, in order to "build in" an effective level of surfactant, an alkylglycoside surfactant is used in combination with an alkoxylated alkylamine surfactant to obtain high-strength concentrates containing the potassium salt of glyphosate.

The addition of such alkylglycosides resulted in higher viscosity formulations (as compared to formulations without alkylglycosides). Such an increase in the viscosity of these high-strength formulations is undesirable for various reasons. In addition to being more difficult to conveniently pour from the container or to wash residues therefrom, the deleterious effects resulting from higher viscosity formulations is more dramatically observed with respect to pumping requirements. Increasing volumes of liquid aqueous glyphosate products are being purchased by end-users in large refillable containers sometimes known as shuttles, which typically have an integral pump or connector for an external pump to permit transfer of liquid. Liquid aqueous glyphosate products are also shipped in bulk, in large tanks having a capacity of up to about 100,000 liters. The liquid is commonly transferred by pumping to a storage tank at a facility operated by a wholesaler, retailer or cooperative, from which it can be further transferred to shuttles or smaller containers for onward distribution. Because large quantities of glyphosate formulations are purchased and transported in early spring, the low temperature pumping characteristics of such formulations are extremely important.

When such alkylglycosides (e.g., Agrimul™ APG-2067 and 2-ethyl-hexyl glucoside) are added to a glyphosate concentrate, the concentrate is dark brown in color. It is desirable for a glyphosate concentrate to be lighter in color than the alkylglycoside-containing concentrates as disclosed in WO 00/15037, which have a color value of about 10 to 18 as measured by a Gardner colorimeter. When dye is added to a glyphosate concentrate having a Gardner color of 18, the concentrate remains dark brown in color. Concentrates having a Gardner color value of 10 are difficult to dye a wide variety of colors, for example blue, green, red or yellow, as is often desired to distinguish the glyphosate product from other herbicidal products.

It would be desirable to provide a storage-stable aqueous concentrate composition of the potassium salt of glyphosate having an agronomically useful surfactant content, or that is "fully loaded" with surfactant. These formulations exhibit a reduced viscosity such that they may be pumped with standard bulk pumping equipment at 0°C at rates of at least *7.5 gallons per minute, usually more than 10 gallons per minute and preferably greater than 12.5 gallons per minute. An "agronomically useful surfactant content" means containing one or more surfactants of such a type or types and in such an amount that a benefit is realized by the user of the composition in terms of herbicidal effectiveness by comparison with an otherwise similar composition containing no surfactant. By "fully loaded" is meant having a sufficient concentration of a suitable surfactant to provide, upon conventional dilution in water and application to foliage, herbicidal effectiveness on one or more important weed species without the need for further surfactant to be added to the diluted composition.
*1 gallon = 37.85 l

By "storage-stable," in the context of an aqueous concentrate composition of glyphosate salt further containing a surfactant, is meant not exhibiting phase separation on exposure to temperatures up to about 50°C, and preferably not forming crystals of glyphosate or salt thereof on exposure to a temperature of about 0°C for a period of up to about 7 days (i.e., the composition must have a crystallization point of 0°C or lower). For aqueous solution concentrates, high temperature storage stability is often indicated by a cloud point of about 50°C or more. Cloud point of a composition is normally determined by heating the composition until the solution becomes cloudy, and then allowing the composition to cool, with agitation, while its temperature is continuously monitored. A temperature reading taken when the solution clears is a measure of cloud point. A cloud point of 50°C or more is normally considered acceptable for most commercial purposes for a glyphosate SL formulation. Ideally the cloud point should be 60°C or more, and the composition should withstand temperatures as low as about -10°C, preferably as low as about -20°C, for up to about 7 days without crystal growth, even in the presence of seed crystals of the glyphosate salt.

A surfactant that is described herein as "compatible" with a glyphosate salt at specified surfactant and glyphosate a.e. concentrations is one that provides a storage-stable aqueous concentrate as defined immediately above containing that surfactant and salt at the specified concentrations.

Users of liquid herbicidal products typically meter the dosage by volume rather than by weight, and such products are usually labeled with directions for suitable use rates expressed in volume per unit area, e.g., liters per hectare (I/ha) or fluid ounces per acre (oz/acre). Thus the concentration of herbicidal active ingredient that matters to the user is not percent by weight, but weight per unit volume, e.g., grams per liter (g/l) or pounds per gallon (lb/gal). In the case of glyphosate salts, concentration is often expressed as grams of acid equivalent per liter (g a.e./l).

Historically, surfactant-containing glyphosate IPA salt products such as Roundup® and Roundup® Ultra herbicides of Monsanto Company have most commonly been formulated at a glyphosate concentration of about 360 g a.e./l. The surfactant-containing glyphosate TMS salt product Touchdown® of Syngenta has been formulated at a glyphosate concentration of about 330 g a.e./l. Products at lower a.e. concentration, *i*.*e*., more dilute, are also sold in some markets, but carry a cost penalty per unit of glyphosate they contain, primarily reflecting packaging, shipping and warehousing costs.

Further benefits in cost savings and in convenience to the user are possible if a "fully loaded" aqueous concentrate composition, or at least one having an agronomically useful surfactant content, can be provided at a glyphosate concentration of at least about 320 g a.e./l, 340 g a.e./l, or significantly more than 360 g a.e./I, for example at least about 420 g a.e./l or more, or at least 440, 450, 460, 470, 480, 490, 500, 510, 520, 530, 540, 550, 560, 570, 580, 590, 660 g a.e./l or more.

At very high glyphosate a.e. concentrations such as these, a significant problem normally occurs. This is the difficulty in pouring and/or pumping of the aqueous concentrate arising from the high viscosity of the concentrate, especially as manifested at low temperatures. It would therefore be highly desirable to have a highly concentrated aqueous solution of glyphosate potassium salt fully loaded with an agronomically useful surfactant, such formulation preferably being less viscous than glyphosate potassium salt formulations containing alkylglycoside surfactants, such as those disclosed in PCT Publication No. WO 00/15037.

It would be a significant commercial advantage if the efficacy of potassium glyphosate formulations could be increased. Higher efficacy affords lower application rates of the herbicide to achieve the same degree of weed control. Application of less herbicide is cost effective to the consumer since less product provides equivalent weed control. Moreover, such an enhanced efficacy formulation is environmentally responsible because packaged volume is reduced, less storage space is required, shipping cost savings may be realized, and most importantly, environmental burden is minimized. As will be clear from the disclosure that follows, these and other benefits are provided by the present invention.

### SUMMARY OF THE INVENTION

Among the several features of the invention, therefore, may be noted the provision of a pesticidal composition useful in agriculture wherein cellular uptake of the water-soluble pesticide into the foliage of a plant is increased by formulating the composition so as to include a compound which increases cell membrane permeability; the provision of herbicidal compositions exhibiting improved control of a broad spectrum of broadleaf plants including velvetleaf and momingglory; the provision of storage stable herbicidal concentrates which can be formulated with minimal surfactant to reduce the aquatic toxicity of the formulation without reducing Its performance; and the provision of storage-stable solid or liquid concentrates that is relatively easy to dilute and use.

Briefly, therefore, the present Invention is directed to an aqueous herbicidal concentrate composition comprising:
glyphosate or a salt or ester thereof dissolved in an aqueous medium;
a surfactant component in solution or stable suspension, emulsion, or dispersion in said medium, comprising one or more surfactants; and
oxalic acid or a salt thereof,
wherein said surfactant and said oxalic acid or salt thereof are present in a weight ratio of between 5:1 and 40:1 and wherein the glyphosate concentration is In excess of 400 grams glyphosate a.e. per liter.

According to a further aspect, the invention provides a solid herbicidal concentrate composition comprising:
a glyphosate salt or ester;
a surfactant component comprising one or more surfactants; and
oxalic acid or a salt thereof.

According to yet another aspect, the invention is directed to a method of use of the aqueous herbicidal concentrate composition to control a wide variety of plants, comprising diluting the composition of claim 1 and applying a herbicidally effective amount of the diluted composition to the foliage of the plant.

The invention also provides a method of use of the solid herbicidal concentrate to kill or control unwanted vegetation comprising the steps of diluting a solid composition of claim 12 or claim 13 In a convenient amount of water to form a tank mix and applying a herbicidally effective amount of the tank mix to the foliage of the unwanted vegetation. oxidative burst interferes with plant defense response which would otherwise limit glyposate bioefficacy.

Although oxalic acid has proven most effective in improving the performance of the compositions of the Invention, other components are also effective in formulating the pesticide compositions. Organic acids, particularly polycarboxylic acids, may be added to the compositions to enhance herbicidal effectiveness. Preferred polycarboxylic acids include dicarboxylic acids, Suitable dicarboxylic acids that may be added to the formulations include oxalic acid, malonic acid, succinic acid, glutaric acid, maleic acid, adipic acid, and fumaric acid, salts thereof and mixtures thereof, with oxalic acid being preferred. Suitable salts include, for example, alkali metal salts such as sodium and potassium salts, alkanolamine salts and alkylamine salts such as IPA. Preferred salts include potassium oxalate, dipotassium oxalate, sodium oxalate, disodium oxalate, diammonium oxalate, diethanolamine oxalate, dimethylamine oxalate, alkanolamine salts of oxalic acid, and lower alkylamine salts of oxalic acid. Formulations contain such compounds in an amount sufficient to enhance the resulting efficacy of the formulation. Typically, in liquid systems the weight ratio of total surfactant to dicarboxylic acid compound may be from 5:1 to 40:1 and preferably from 5:1 to 20:1. This ratio of total surfactant to dicarboxylic acid significantly enhances the herbicidal performance of the resulting formulation. Preferably, the weight ratio of glyphosate in the free acid, or a.e., form to dicarboxylic acid is between 1:1 and 500:1, more preferably 2:1 to 100:1, and most preferably between 2:1 to 50:1. In dry formulations, the weight ratio of total surfactant to dicarboxylic acid compound is between 50:1 and 1:30, more preferably between 1:1 and 5:1, and most preferably between 1:1 and 3:1.

The liquid concentrate compositions of the invention preferably comprise a water-soluble herbicide in a concentration between 20 and 45% by weight of the composition, a surfactant component in a concentration between 0.1 and 25% by weight of the composition, and a dicarboxylic acid in a concentration between 0.01 and 20% by weight of the composition. More preferably, the compositions comprise glyphosate or a salt or ester thereof in a concentration between 25 and 40% by weight of the composition, a surfactant component in a concentration between 0.1 and 20% by weight of the composition, and a dicarboxylic acid in a concentration between 0.01 and 15% by weight of the composition. Even more preferably, the compositions comprise glyphosate or a salt or ester thereof in a concentration between 30 and 40% by weight of the composition, a surfactant component in a concentration between 0.1 and 10% by weight of the composition, and a dicarboxylic acid in a concentration between 0.01 and 10% by weight of the composition. Most preferably, the compositions comprise glyphosate or a salt or ester thereof in a concentration between 31 and 40% by weight of the composition, a surfactant component in a concentration between 0.1 and 7% by weight of the composition, and oxalic acid or a salt or ester thereof in a concentration between 0.01 and 5% by weight of the composition.

The solid concentrate compositions of the invention preferably comprise glyphosate or a salt or ester thereof in a concentration between 50 and 80% by weight of the composition, a surfactant component in a concentration between 5 and 25% by weight of the composition, and a dicarboxylic acid in a concentration between 1 and 25% by weight of the composition. Even more preferably, the compositions comprise glyphosate or a salt or ester thereof in a concentration between 60 and 80% by weight of the composition, a surfactant component in a concentration between 7.5 and 20% by weight of the composition, and a dicarboxylic acid in a concentration between 1 and 20% by weight of the composition. Most preferably, the compositions comprise glyphosate or a salt or ester thereof in a concentration between 60 and 80% by weight of the composition, a surfactant component in a concentration between 7.5 and 25% by weight of the composition, and oxalic acid or a salt or ester thereof in a concentration between 5 and 20% by weight of the composition.

Compositions of the invention have a viscosity of not greater than 1000 cPs at 10°C, preferably not greater than 900 cPs at 10°C, more preferably not greater than 800, 700, 600, 500, 400 or 300 cPs at 10°C, and even more preferably not greater than 200 cPs at 10°C, at 45/s shear rate.

Compositions of the invention can optionally contain more than one water-soluble herbicide in solution in the aqueous phase.

The term "water-soluble" as used herein in relation to a herbicide or salt or ester thereof means having a solubility in deionized water at 20°C of not less than about 50 g/l. Preferred water-soluble herbicides have a solubility in deionized water at 20°C of not less than 200 g/l. Particularly preferred water-soluble herbicides have a herbicidal active acid or anionic moiety and are most usefully present in a composition of the invention in the form of one or more water-soluble salts. The aqueous phase of the composition can optionally contain, in addition to the water-soluble herbicide, other salts contributing to the ionic strength of the aqueous phase.

A particularly preferred group of water-soluble herbicides are those that are normally applied post-emergence to the foliage of plants. While the invention is not limited to any particular class of foliar-applied water-soluble herbicide, it has been found to provide useful benefits for compounds that rely at least in part for their herbicidal effectiveness on systemic movement in plants. Systemic movement in plants can take place via apoplastic (non-living) pathways, including within xylem vessels and in intercellular spaces and cell walls, via symplastic (living) pathways, including within phloem elements and other tissues composed of cells connected symplastically by plasmodesmata, or via both apoplastic and symplastic pathways. For foliar-applied systemic herbicides, the most important pathway is the phloem, and the present invention is believed to provide the greatest benefits where the water-soluble herbicide is phloem-mobile. However, compositions of the invention can also be useful where the water-soluble herbicide is non-systemic, as in the case of paraquat.

Water-soluble herbicides suitable for use in compositions of the invention include acifluorfen, acrolein, amitrole, asulam, benazolin, bentazon, bialaphos, bromacil, bromoxynil, chloramben, chloroacetic acid, clopyralid, 2,4-D, 2,4-DB, dalapon, dicamba, dichlorprop, difenzoquat, diquat, endothall, fenac, fenoxaprop, flamprop, flumiclorac, fluoroglycofen, flupropanate, fomesafen, fosamine, glufosinate, imazameth, imazamethabenz, imazamox, imazapic, imazapyr, imazaquin, imazethapyr, ioxynil, MCPA, MCPB, mecoprop, methylarsonic acid, naptalam, nonanoic acid, paraquat, picloram, quinclorac, sulfamic acid, 2,3,6-TBA, TCA, triclopyr and water-soluble salts thereof.

Phloem-mobile herbicides that are preferred for use in compositions of the invention include but are not limited to aminotriazole, asulam, bialaphos, clopyralid, dicamba, glufosinate, imidazolinones such as imazameth, imazamethabenz, imazamox, imazapic, imazapyr, imazaquin and imazethapyr, phenoxies such as 2,4-D, 2,4-DB, dichlorprop, MCPA, MCPB and mecoprop, picloram and triclopyr. A particularly preferred group of water-soluble herbicides are salts of bialaphos and glufosinate. Another particularly preferred group of water-soluble herbicides are salts of imidazolinone herbicides.

Glyphosate salts useful in compositions of the present invention are disclosed in U.S. Patents No. 3,799,758 and No. 4,405,531. Glyphosate salts that can be used according to the present invention include but are not restricted to alkali metal, for example sodium and potassium, salts; ammonium salt; C₁₋₆ alkylammonium, for example dimethylammonium and isopropylammonium, salts; C₁₋₆ alkanolammonium, for example monoethanolammonium, salt; C₁₋₆ alkylsulfonium, for example trimethylsulfonium, salts; and mixtures thereof. The N-phosphonomethylglycine molecule has three acid sites having different pKa values; accordingly mono-, di- and tribasic salts, or any mixture thereof, or salts of any intermediate level of neutralization, can be used. Especially preferred glyphosate salts include the potassium salt, isopropylamine salt, ammonium salt, diammonium salt, monoethanolamine salt, and trimethylsulfonium salt. The potassium salt is most preferred.

The relative amount of potassium glyphosate loading in the pesticidal compositions of the present invention will vary depending upon many factors including the surfactant system employed, the rheological characteristics of the composition, and the temperature range at which the composition will be exposed. The potassium glyphosate loading in the herbicidal compositions of the invention is preferably at least 320 g a.e./L, and more preferably at least 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690 or 700 g a.e./L.

Compositions of the invention can optionally contain one or more water-insoluble herbicides in solution in an organic solvent or in suspension in a concentration that is biologically effective when the composition is diluted in a suitable volume of water and applied to the foliage of a susceptible plant.

The surfactant component of the composition of the present invention when applied with the above-mentioned herbicidal components of the invention is of the type and present in a sufficient concentration to allow the plant to cellularly uptake and translocate a herbicidally effective amount of glyphosate. One way to accomplish this is to provide more intimate contact between the applied herbicidal composition and the microtopographically rough surface of the plant, for example by flattening the contact angle of the composition, so as to permit the composition to spread into crevices and pores in the plant. For example, the surfactant composition should preferably also enhance sticking or adhesion to a plant surface when used in aqueous solution, and it should allow the solution to dry on a time scale that is effective to permit penetration.

Various surfactants have been found to be effective in formulating herbicidal compositions and concentrates of the invention, particularly in formulating compositions and concentrates containing potassium glyphosate.

Cationic surfactants effective in forming herbicide formulations include:
(a) aminated alkoxylated alcohol having the formula: 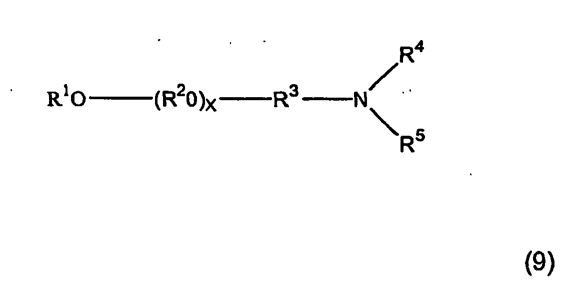 or 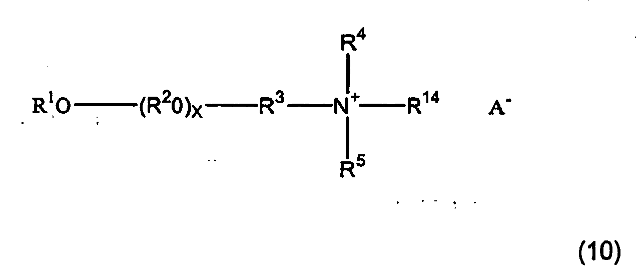 wherein R¹ is hydrogen or hydrocarbyl or substituted hydrocarbyl having from 1 to about 30 carbon atoms; R² in each of the x (R²O) and y (R²O) groups is independently C₂-C₄ alkylene; R³ and R⁶ are each independently hydrocarbylene or substituted hydrocarbylene having from 1 to about 6 carbon atoms; R⁴ is hydrogen, hydrocarbyl or substituted hydrocarbyl having from 1 to about 30 carbon atoms, hydroxy substituted hydrocarbyl, -(R⁶)ₙ-(R²O)_{y}R⁷, -C(=NR¹¹)NR¹²R¹³, -C(=O)NR¹²R¹³, -C(=S)NR¹²R¹³ or together with R⁵ and the nitrogen atom to which they are attached, form a cyclic or heterocyclic ring; R⁵ is hydrogen, hydrocarbyl or substituted hydrocarbyl having from 1 to about 30 carbon atoms, hydroxy substituted hydrocarbyl, -(R⁶)ₙ-(R²O)_{y}R⁷, -C(=NR¹¹)NR¹²R¹³, -C(=O)NR¹²R¹³, -C(=S)NR¹²R¹³, or together with R⁴ and the nitrogen atom to which they are attached, form a cyclic or heterocyclic ring; R⁷ is hydrogen or a linear or branched alkyl group having 1 to about 4 carbon atoms; R¹¹, R¹² and R¹³ are hydrogen, hydrocarbyl or substituted hydrocarbyl, R¹⁴ is hydrogen, hydrocarbyl or substituted hydrocarbyl having from 1 to about 30 carbon atoms, hydroxy substituted hydrocarbyl, -(R⁶)ₙ-(R²O)_{y}R⁷, -C(=NR¹¹)NR¹²R¹³, -C(=O)NR¹²R¹³, or -C(=S)NR¹²R¹³, n is 0 or 1, x and y are independently an average number from 1 to about 60, and A- is an agriculturally acceptable anion. In this context, preferred R¹, R³, R⁴, R⁵, R⁶, R¹¹, R¹² and R¹³ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. In one embodiment, R³ is linear alkylene, preferably ethylene, and R¹, R², R⁴ and R⁵ are as previously defined. In another embodiment, R⁴ is H, alkyl, or -R²OR⁷ and R¹, R², R³, R⁵ and R⁷ are as previously defined. In yet another embodiment, R¹ is a linear or branched alkyl or linear or branched alkenyl group having from about 8 to about 25 carbon atoms, R² in each of the x (R²O) groups is independently C₂-C₄ alkylene, R³ is a linear or branched alkylene group having from 1 to about 6 carbon atoms, R⁴ and R⁵ are each independently hydrogen or a linear or branched alkyl group having from 1 to about 6 carbon atoms, and x is an average number from 1 to about 30. More preferably, R¹ is a linear or branched alkyl group having from about 12 to about 22 carbon atoms, R² in each of the x (R²O) groups is independently ethylene or propylene, R³ is a linear or branched alkylene group having from 1 to about 4 carbon atoms, R⁴ and R⁵ are each independently hydrogen, methyl, or tris(hydroxymethyl)methyl, and x is an average number from about 2 to about 30. Even more preferably, R¹ is a linear or branched alkyl group having from about 12 to about 18 carbon atoms, R² in each of the x (R²O) groups is independently ethylene or propylene, R³ is an ethylene or a 2-hydroxypropylene group, R⁴ and R⁵ are each independently hydrogen or methyl, and x is an average number from about 4 to about 20. Most preferably, R¹ is a linear or branched alkyl group having from about 12 to about 18 carbon atoms, R² in each of the x (R²O) groups is independently ethylene or propylene, R³ is an ethylene or a 2-hydroxypropylene group, R⁴ and R⁵ are methyl, and x is an average number from about 4 to about 20. Compounds of formula (10) have the preferred groups as described above and R¹⁴ is preferably hydrogen or a linear or branched alkyl or alkenyl group, more preferably alkyl, and most preferably methyl. Preferred monoalkoxylated amines include PEG 13 or 18 C₁₄₋₁₅ ether propylamines and PEG 7, 10, 15 or 20 C₁₆₋₁₈ ether propylamines (from Tomah) and PEG 13 or 18 C₁₄₋₁₅ ether dimethyl propylamines and PEG 10, 15 or 20 or 25 C₁₆₋₁₈ ether dimethyl propylamines (from Tomah).
(b) hydroxylated amides having the formula: 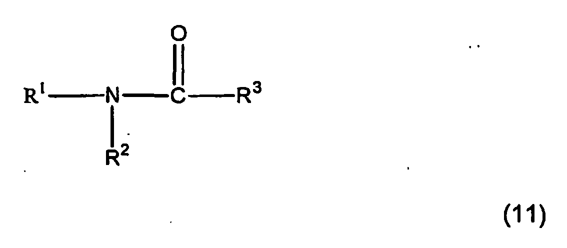 wherein R¹ is hydrocarbyl or substituted hydrocarbyl having from about 4 to about 30 carbon atoms, R² is hydrogen or hydrocarbyl or substituted hydrocarbyl having from 1 to about 30 carbon atoms, and R³ is hydroxyalkyl, polyhydroxyalkyl, or poly(hydroxyalkyl)alkyl. In this context, preferred R¹ and R² hydrocarbyl groups are linear or branched alkyl, linear or branched alkenyl, linear or branched alkynyl, aryl, or aralkyl groups. Preferably, the hydroxylated amides have the formula: 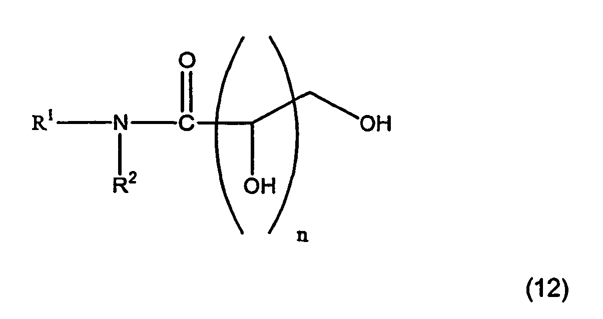 wherein R¹ is hydrocarbyl or substituted hydrocarbyl having from about 4 to about 30 carbon atoms, R² is hydrogen or hydrocarbyl or substituted hydrocarbyl having from 1 to about 30 carbon atoms, and n is 1 to about 8. In this context, preferred R¹ and R² hydrocarbyl groups are linear or branched alkyl, linear or branched alkenyl, linear or branched alkynyl, aryl, or aralkyl groups. Preferably, R¹ is a linear or branched alkyl or linear or branched alkenyl group having from about 8 to about 30 carbon atoms, R² is hydrogen, a linear or branched alkyl or linear or branched alkenyl group having from 1 to about 30 carbon atoms, and n is about 4 to about 8; or R¹ and R² are independently linear or branched alkyl or linear or branched alkenyl groups having from about 4 to about 30 carbon atoms and n is about 4 to about 8. More preferably, R¹ is a linear or branched alkyl or linear or branched alkenyl group having from about 8 to about 22 carbon atoms, R² is hydrogen or a linear or branched alkyl or linear or branched alkenyl group having from 1 to about 6 carbon atoms, and n is about 4 to about 8; or R¹ and R² are independently linear or branched alkyl or linear or branched alkenyl groups having from about 4 to about 8 carbon atoms, and n is about 4 to about 8.
(c) diamines having the formula: 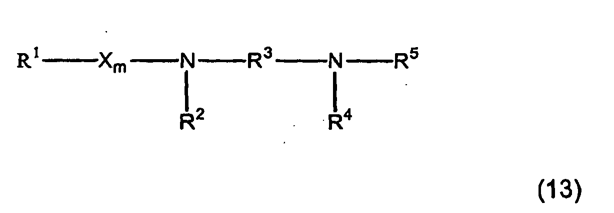 wherein R¹, R² and R⁵ are independently hydrogen or hydrocarbyl or substituted hydrocarbyl having from 1 to about 30 carbon atoms or -R⁸(OR⁹)ₙOR¹⁰, R³ is hydrocarbylene or substituted hydrocarbylene having from 2 to about 18 carbon atoms, R⁸ and R⁹ are individually hydrocarbylene or substituted hydrocarbylene having from 2 to about 4 carbon atoms, R⁴ and R¹⁰ are independently hydrogen or hydrocarbyl or substituted hydrocarbyl having from 1 to about 30 carbon atoms, m is 0 or 1, n is an average number from 0 to about 40, and X is -C(O)- or -SO₂-. In this context, preferred R¹, R², R³, R⁴, R⁵ and R¹⁰ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹, R², R⁴ and R⁵ are independently hydrogen, a linear or branched alkyl or alkenyl group having from 1 to about 6 carbon atoms, and R³ is a linear or branched alkylene having from 2 to about 6 carbon atoms. More preferably, R¹, R², R⁴ and R⁵ are independently hydrogen, or a linear or branched alkyl group having from 1 to about 6 carbon atoms, and R³ is a linear or branched alkylene having from 2 to about 6 carbon atoms. Most preferably, R¹, R², R⁴, and R⁵ are independently hydrogen or methyl, and R³ is ethylene or propylene.
(d) mono- or di-ammonium salts having the formula: 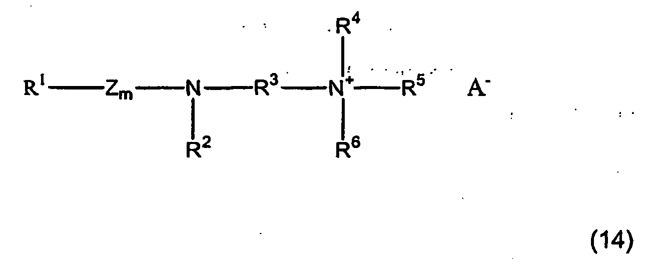 or 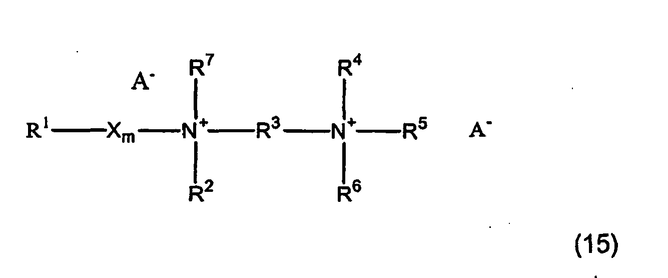 wherein R¹, R², R⁴, R⁵ and R⁷ are independently hydrogen or hydrocarbyl or substituted hydrocarbyl having from 1 to about 30 carbon atoms or -R⁸(OR⁹)ₙOR¹⁰, R⁶ is hydrocarbyl or substituted hydrocarbyl having from 1 to about 30 carbon atoms, R³ is hydrocarbylene or substituted hydrocarbylene having from 2 to about 30 carbon atoms, R⁸ and R⁹ are individually hydrocarbylene or substituted hydrocarbylene having from 2 to about 4 carbon atoms, R¹⁰ is hydrogen or hydrocarbyl or substituted hydrocarbyl having from 1 to about 30 carbon atoms, m is 0 or 1, n is an average number from 0 to about 40, X is -C(O)- or -SO₂-, Z is -C(O)-, and A⁻ is an agriculturally acceptable anion. In this context, preferred R¹-R¹⁰ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹, R², R⁴, R⁵ and R⁷ are independently hydrogen, or a linear or branched alkyl or alkenyl group having from 1 to about 6 carbon atoms, R⁶ is a linear or branched alkyl or alkenyl group having from about 8 to about 30 carbon atoms, m is 0 or 1, and R³ is a linear or branched alkylene having from 2 to about 22 carbon atoms. More preferably, R¹, R², R⁴, R⁵ and R⁷ are independently hydrogen, or a linear or branched alkyl group having from 1 to about 6 carbon atoms, R⁶ is a linear or branched alkyl group having from about 8 to about 22 carbon atoms, m is 0 or 1, and R³ is a linear or branched alkylene having from 2 to about 20 carbon atoms. Most preferably, R¹, R², R⁴, R⁵ and R⁷ are independently hydrogen or methyl, R⁶ is a linear or branched alkyl group having from about 8 to about 18 carbon atoms, m is 0 or 1, and R³ is ethylene or propylene.
(e) poly(hydroxyalkyl)amines having the formula: 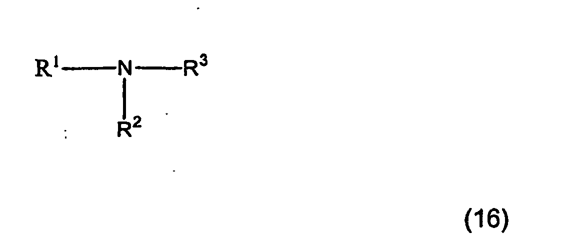 or 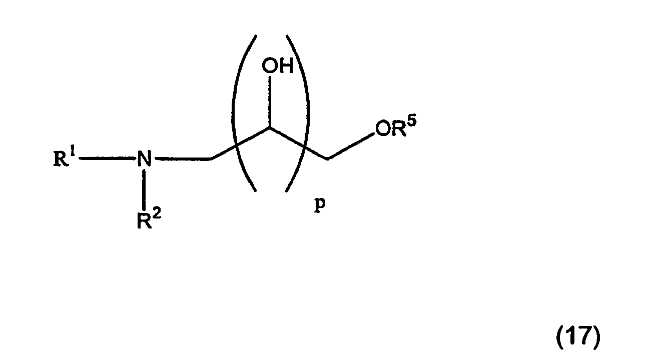 wherein R¹ is hydrocarbyl or substituted hydrocarbyl having from about 4 to about 30 carbon atoms or -R⁴OR⁸, R² is hydrogen or hydrocarbyl or substituted hydrocarbyl having from 1 to about 30 carbon atoms, R³ is hydroxyalkyl, polyhydroxyalkyl, or poly(hydroxyalkyl)alkyl, R⁴ is hydrocarbylene or substituted hydrocarbylene having from 2 to about 18 carbon atoms, R⁸ is hydrogen or hydrocarbyl or substituted hydrocarbyl having from 1 to about 30 carbon atoms; R⁵ is -(R⁶O)_{y}R⁷;R⁶ in each of the y(R⁶O) groups is independently C₂-C₄ alkylene; R⁷ is hydrogen or a linear or branched alkyl group having 1 to about 4 carbon atoms; and y is an average number from 0 to about 30. Preferably, the poly(hydroxyalkyl)amines have the formula: 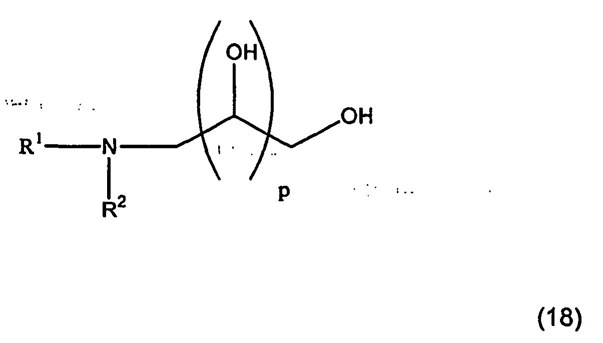 or 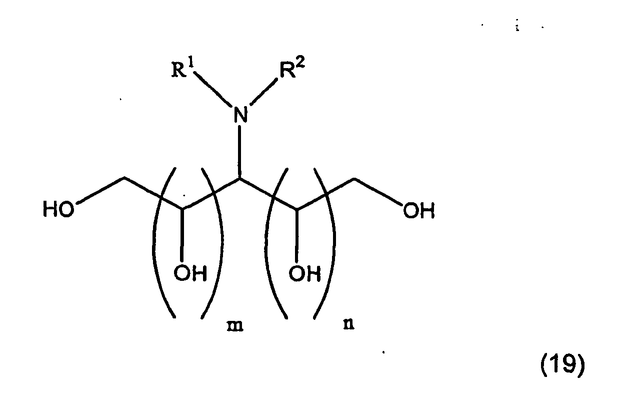 wherein R¹ is hydrocarbyl or substituted hydrocarbyl having from about 4 to about 30 carbon atoms or -R³OR⁴; R² is hydrogen or hydrocarbyl or substituted hydrocarbyl having from 1 to about 30 carbon atoms, R³ is hydrocarbylene or substituted hydrocarbylene having from 2 to about 18 carbon atoms, R⁴ is hydrogen or hydrocarbyl or substituted hydrocarbyl having from 1 to about 30 carbon atoms, m and n are independently integers from 0 to about 7, the sum of m and n is not greater than about 7, and p is an integer from 1 to about 8. In this context, preferred R¹, R², R³, and R⁴ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ is a linear or branched alkyl or linear or branched alkenyl group having from about 8 to about 30 carbon atoms or -R³OR⁴, R² is hydrogen, a linear or branched alkyl or linear or branched alkenyl group having from 1 to about 30 carbon atoms, R³ is a linear or branched alkylene or alkenylene group having from 2 to about 6 carbon atoms, R⁴ is a linear or branched alkyl or alkenyl group having from about 8 to about 22 carbon atoms, m and n are independently integers from 0 to about 7, the sum of m and n is from about 3 to 7, and p is an integer from about 4 to about 8; or R¹ and R² are independently linear or branched alkyl or linear or branched alkenyl groups having from about 4 to about 30 carbon atoms, m and n are independently integers from 0 to about 7, the sum of m and n is from about 3 to 7, and p is an integer from about 4 to about 8. More preferably, R¹ is a linear or branched alkyl or linear or branched alkenyl group having from about 8 to about 22 carbon atoms or -R³OR⁴, R² is hydrogen or a linear or branched alkyl or linear or branched alkenyl group having from 1 to about 6 carbon atoms, R³ is a linear or branched alkylene or alkenylene group having from 2 to about 6 carbon atoms, R⁴ is a linear or branched alkyl or alkenyl group having from about 8 to about 18 carbon atoms, m and n are independently integers from 0 to about 7, the sum of m and n is from about 3 to 7, and p is an integer from about 4 to about 8; or R¹ and R² are independently linear or branched alkyl or linear or branched alkenyl groups having from about 4 to about 8 carbon atoms, m and n are independently integers from 0 to about 7, the sum of m and n is from about 3 to 7, and p is an integer from about 4 to about 8. Even more preferably, R¹ is a linear or branched alkyl group having from about 8 to about 18 carbon atoms or -R³OR⁴, R² is hydrogen or methyl, m and n are independently integers from 0 to about 4, R³ is a linear or branched alkylene group having from 2 to about 6 carbon atoms, R⁴ is a linear or branched alkyl group having from about 8 to about 18 carbon atoms, the sum of m and n is about 4, and p is an integer of about 4. Most preferably, R¹ is a linear or branched alkyl group having from about 8 to about 18 carbon atoms or -R³OR⁴, R² is methyl, R³ is ethylene, propylene, hydroxyethylene or 2-hydroxypropylene, R⁴ is a linear or branched alkyl group having from about 8 to about 18 carbon atoms, m and n are independently integers from 0 to about 4, the sum of m and n is about 4, and p is an integer of about 4. Such compounds are commercially available from Aldrich and Clariant.
(f) alkoxylated poly(hydroxyalkyl)amines having the formula: 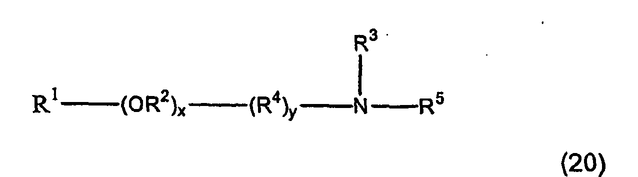 wherein R¹ and R³ are independently hydrogen, hydrocarbyl or substituted hydrocarbyl having from 1 to about 30 carbon atoms, R² in each of the x (R²O) groups is independently C₂-C₄ alkylene; R⁴ is hydrocarbylene or substituted hydrocarbylene having from 1 to about 30 carbon atoms, R⁵ is hydroxyalkyl, polyhydroxyalkyl, or poly(hydroxyalkyl)alkyl; x is an average number from 0 to about 30, and y is 0 or 1. In this context, preferred R¹, R³, and R⁴ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) group. Preferred alkoxylated poly(hydroxyalkyl)amines have the formula: 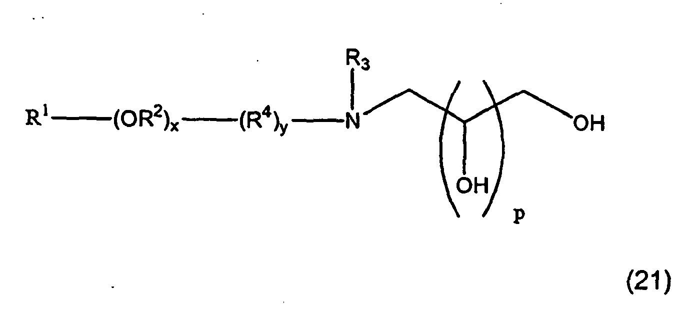 or 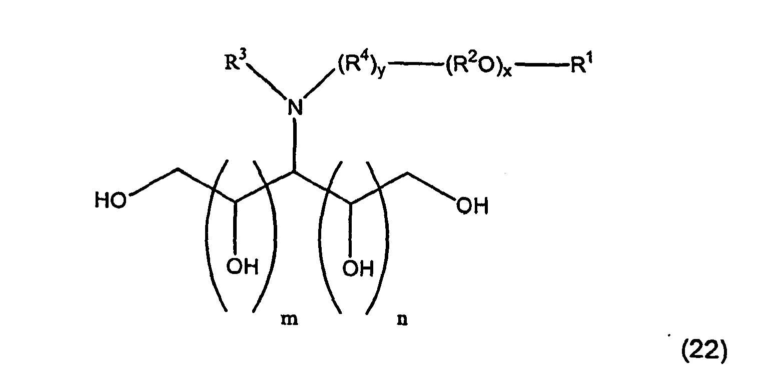 wherein R¹ and R³ are independently hydrogen, hydrocarbyl or substituted hydrocarbyl having from 1 to about 30 carbon atoms, R² in each of the x (R²O) groups is independently C₂-C₄ alkylene; R⁴ is hydrocarbylene or substituted hydrocarbylene having from 1 to about 30 carbon atoms, m and n are independently integers from 0 to about 7, the sum of m and n is not greater than about 7, p is an integer from 1 to about 8, x is an average number from 0 to about 30, and y is 0 or 1. In this context, preferred R¹, R³, and R⁴ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) group. Preferably, R¹ is a linear or branched alkyl or linear or branched alkenyl group having from about 8 to about 30 carbon atoms; R² in each of the x (R²O) groups is independently C₂-C₄ alkylene; R³ is hydrogen, a linear or branched alkyl or linear or branched alkenyl group having from 1 to about 30 carbon atoms; R⁴ is a linear or branched alkylene having from 1 to about 30 carbon atoms, m and n are independently integers from 0 to about 7, the sum of m and n is from about 3 to 7, p is an integer from 1 to about 8, x is an average number from 0 to about 30, and y is 0 or 1. More preferably, R¹ is a linear or branched alkyl group having from about 8 to about 22 carbon atoms; R² in each of the x (R²O) groups is independently ethylene or propylene; R³ is hydrogen, or a linear or branched alkyl group having from 1 to about 6 carbon atoms; R⁴ is a linear or branched alkylene having from 1 to about 6 carbon atoms, m and n are independently integers from 0 to about 7, the sum of m and n is from about 3 to 7; p is an integer from 1 to about 8, x is an average number from 0 to about 30, and y is 0 or 1. Most preferably, R¹ is a linear or branched alkyl group having from about 8 to about 18 carbon atoms; R² in each of the x (R²O) groups is independently ethylene or propylene; R³ is hydrogen or methyl; m and n are independently integers from 0 to about 7, the sum of m and n is from about 3 to 7, p is an integer from 1 to about 8, x is an average number from 0 to about 30, and y is 0.
(g) di-poly(hydroxyalkyl)amine having the formula: 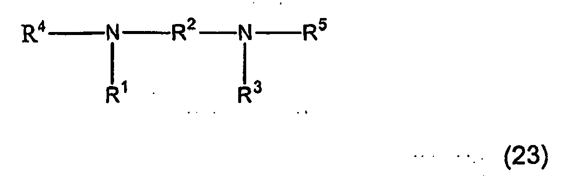 wherein R¹ and R³ are independently hydrogen or hydrocarbyl or substituted hydrocarbyl having from 1 to about 22 carbon atoms, R² is hydrocarbylene or substituted hydrocarbylene having from 2 to about 18 carbon atoms, and R⁴ and R⁵ are independently hydroxyalkyl, polyhydroxyalkyl, or poly(hydroxyalkyl)alkyl. In this context, preferred R¹, R², and R³ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, the di-poly(hydroxyalkyl)amine has the formula: 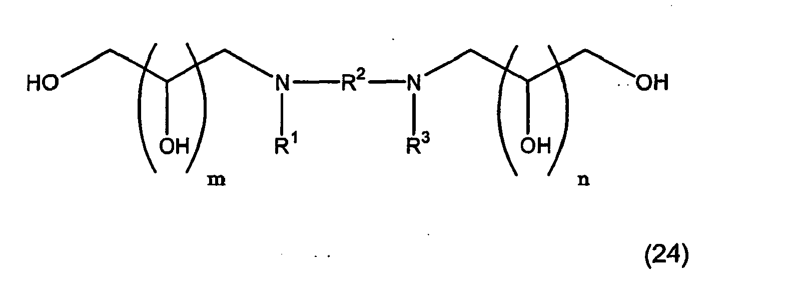 wherein R¹ and R³ are independently hydrogen or hydrocarbyl or substituted hydrocarbyl having from 1 to about 22 carbon atoms, R² is hydrocarbylene or substituted hydrocarbylene having from 2 to about 18 carbon atoms, and m and n are independently integers from 1 to about 8. In this context, preferred R¹, R², and R³ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ and R³ are independently hydrogen or a linear or branched alkyl group having from 1 to about 18 carbon atoms, R² is a linear or branched alkylene or linear or branched alkenylene group having from 2 to about 18 carbon atoms, and m and n are independently integers from 1 to about 8. More preferably, R¹ and R³ are independently hydrogen or a linear or branched alkyl group having from 6 to about 12 carbon atoms, R² is a linear or branched alkylene group having from 2 to about 6 carbon atoms, and m and n are independently integers from about 4 to about 8; or R¹ and R³ are independently hydrogen or a linear or branched alkyl group having from 1 to about 4 carbon atoms, R² is a linear or branched alkylene group having from 2 to about 16 carbon atoms, and m and n are independently integers from about 4 to about 8. Most preferably, R¹ and R³ are independently hydrogen or a linear or branched alkyl group having from 6 to about 12 carbon atoms, R² is ethylene or propylene, and m and n are independently integers from about 4 to about 8; or R¹ and R³ are independently hydrogen or a linear or branched alkyl group having from 1 to about 4 carbon atoms, R² is a linear or branched alkylene group having from 2 to about 12 carbon atoms, and m and n are independently integers from about 4 to about 8.
(h) quaternary poly(hydroxyalkyl)amine salts having the formula: 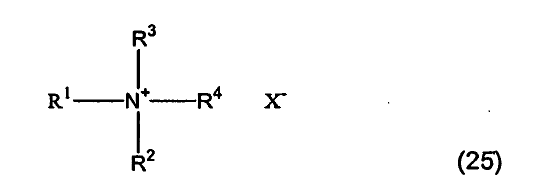 wherein R¹ is hydrocarbyl or substituted hydrocarbyl having from about 4 to about 30 carbon atoms, R² and R³ are independently hydrogen or hydrocarbyl or substituted hydrocarbyl having from 1 to about 30 carbon atoms, R⁴ is hydroxyalkyl, polyhydroxyalkyl, or poly(hydroxyalkyl)alkyl, and X- is an agriculturally acceptable anion. In this context, preferred R¹, R², and R³ hydrocarbyl groups are linear or branched alkyl, linear or branched alkenyl, linear or branched alkynyl, aryl, or aralkyl groups. Preferably, the quaternary poly(hydroxyalkyl) amine salts have the formula: 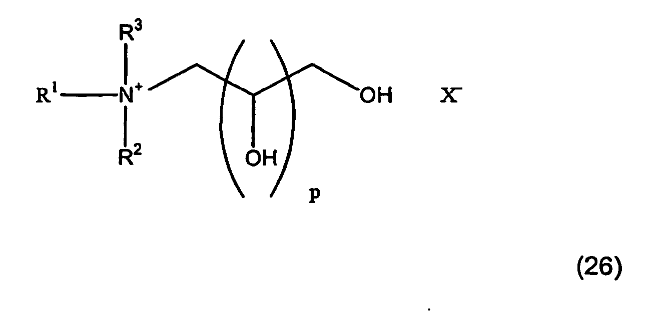 or 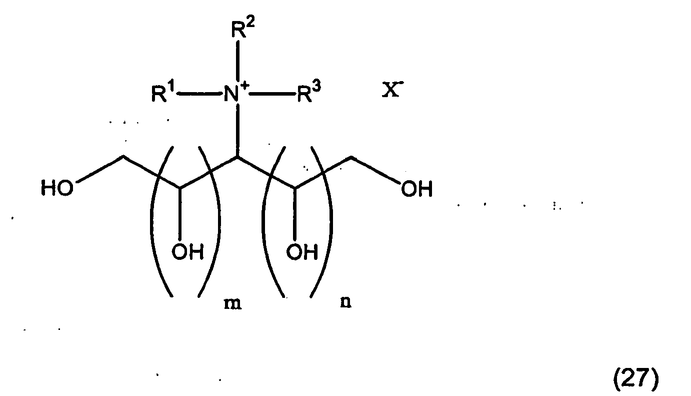 wherein R¹ is -Xₘ-(R⁴O)_{y}R⁵, hydrocarbyl or substituted hydrocarbyl having from about 4 to about 30 carbon atoms, R² and R³ are independently hydrogen or hydrocarbyl or substituted hydrocarbyl having from 1 to about 30 carbon atoms, m and n are independently integers from 0 to about 7, the sum of m and n is not greater than about 7, p is an integer from 1 to about 8, X- is an agriculturally acceptable anion, R⁴ in each of the y(R⁴O) groups is independently C₂-C₄ alkylene; R⁵ is hydrogen or a linear or branched alkyl group having 1 to about 4 carbon atoms; X is hydrocarbylene or substituted hydrocarbylene having from 2 to about 18 carbon atoms; m is 0 or 1; and y is an average number from 0 to about 30. In this context, preferred R¹, R², and R³ hydrocarbyl groups are linear or branched alkyl, linear or branched alkenyl, linear or branched alkynyl, aryl, or aralkyl groups. Preferably, R¹ is a linear or branched alkyl or linear or branched alkenyl group having from about 8 to about 30 carbon atoms, R² and R³ are independently hydrogen or a linear or branched alkyl or linear or branched alkenyl group having from 1 to about 30 carbon atoms, m and n are independently integers from 0 to about 7, the sum of m and n is from about 3 to 7, and p is an integer from about 4 to about 8; or R¹, R² and R³ are independently linear or branched alkyl or linear or branched alkenyl groups having from about 4 to about 30 carbon atoms, m and n are independently integers from 0 to about 7, the sum of m and n is not greater than about 7, and p is an integer from about 4 to about 8. More preferably, R¹ is a linear or branched alkyl or linear or branched alkenyl group having from about 8 to about 22 carbon atoms, R² and R³ are independently hydrogen or a linear or branched alkyl or linear or branched alkenyl group having from 1 to about 6 carbon atoms, m and n are independently integers from 0 to about 7, the sum of m and n is from about 3 to 7, and p is an integer from about 4 to about 8; or R¹, R² and R³ are independently linear or branched alkyl or linear or branched alkenyl groups having from about 4 to about 8 carbon atoms, m and n are independently integers from 0 to about 7, the sum of m and n is from about 3 to 7, and p is an integer from about 4 to about 8. Even more preferably, R¹ is a linear or branched alkyl group having from about 8 to about 18 carbon atoms, R² and R³ are independently hydrogen or methyl, m and n are independently integers from 0 to about 4, the sum of m and n is about 4, and p is an integer of about 4. Most preferably, R¹ is a linear or branched alkyl group having from about 8 to about 18 carbon atoms, R² and R³ are methyl, m and n are independently integers from 0 to about 4, the sum of m and n is about 4, and p is an integer of about 4.
(i) triamines having the formula: 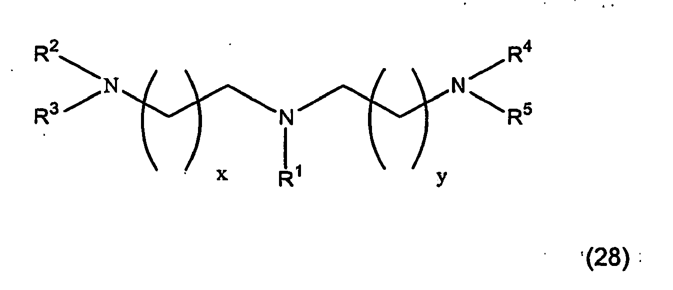 wherein R¹ is hydrocarbyl or substituted hydrocarbyl having from 1 to about 30 carbon atoms; R², R³, R⁴ and R⁵ are independently hydrogen, hydrocarbyl or substituted hydrocarbyl having from 1 to about 30 carbon atoms, or -(R⁸)ₛ(R⁷O)ₙR⁶; R⁶ is hydrogen or a linear or branched alkyl group having from 1 to about 4 carbon atoms, R⁷ in each of the n (R⁷O) groups is independently C₂-C₄ alkylene; R⁸ is hydrocarbylene or substituted hydrocarbylene having from 1 to about 6 carbon atoms, n is an average number from 1 to about 10, s is 0 or 1, and x and y are independently an integer from 1 to about 4. In this context, preferred R¹, R², R³, R⁴, R⁵, and R⁸ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ is a linear or branched alkyl or linear or branched alkenyl groups having from about 8 to about 30 carbon atoms, R², R³, R⁴ and R⁵ are independently hydrogen, a linear or branched alkyl or linear or branched alkenyl group having from 1 to about 30 carbon atoms, or -(R⁷O)ₙR⁶, R⁶ is hydrogen, methyl or ethyl; R⁷ in each of the n (R⁷O) groups is independently C₂-C₄ alkylene, n is an average number from 1 to about 10, and x and y are independently an integer from 1 to about 4. More preferably, R¹ is a linear or branched alkyl group having from about 8 to about 18 carbon atoms, R², R³, R⁴ and R⁵ are independently hydrogen, a linear or branched alkyl group having from 1 to about 6 carbon atoms, or -(R⁷O)ₙR⁶, R⁶ is hydrogen or methyl, R⁷ in each of the n (R⁷O) groups is independently ethylene or propylene, n is an average number from 1 to about 5, and x and y are independently an integer from 1 to about 4. Most preferably, R¹ is a linear or branched alkyl group having from about 8 to about 18 carbon atoms, R², R³, R⁴ and R⁵ are independently hydrogen, or -(R⁷O)ₙR⁶, R⁶ is hydrogen, R⁷ in each of the n (R⁷O) groups is independently ethylene or propylene, n is an average number from 1 to about 5, and x and y are independently an integer from 1 to about 4. Commercially available triamines include Acros and Clariant Genamin 3119.
(j) diamines having the formula: 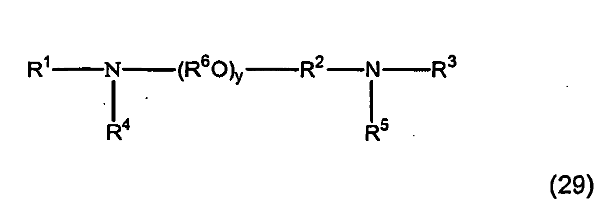 wherein R¹, R³, R⁴ and R⁵ are independently hydrogen, hydrocarbyl or substituted hydrocarbyl having from 1 to about 30 carbon atoms, or -(R⁶O)ₓR⁷, R² is hydrocarbylene or substituted hydrocarbylene having from 2 to about 30 carbon atoms, C(=NR¹¹)NR¹²R¹³-, -C(=O)NR¹²R¹³-, -C(=S)NR¹²R¹³-, -C(=NR¹²)-, -C(S)-, or -C(O)-, R⁶ in each of the x (R⁶O) and y (R⁶O) groups is independently C₂-C₄ alkylene, R⁷ is hydrogen, or a linear or branched alkyl group having from 1 to about 30 carbon atoms, R¹¹, R¹² and R¹³ are hydrogen, hydrocarbyl or substituted hydrocarbyl having from 1 to about 30 carbon atoms, x is an average number from 1 to about 50, and y is an average number from 0 to about 60. In this context, preferred R¹, R², R³, R⁴, and R⁵ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹, R³, R⁴ and R⁵ are independently hydrogen or a linear or branched alkyl or linear or branched alkenyl group having from 1 to about 22 carbon atoms or -(R⁶O)ₓR⁷, R² is a linear or branched alkylene or linear or branched alkenylene group having from 1 to about 6 carbon atoms, R⁶ in each of the x(R⁶O) and y (R⁶O) groups is independently C₂-C₄ alkylene, R⁷ is hydrogen, or a linear or branched alkyl group having from 1 to about 4 carbon atoms, x is an average number from 1 to about 30, and y is an average number from 0 to about 60. More preferably, R¹, R³, R⁴ and R⁵ are independently hydrogen or a linear or branched alkyl group having from about 1 to about 18 carbon atoms or -(R⁶O)ₓR⁷, R² is a linear or branched alkylene group having from about 1 to about 6 carbon atoms, R⁶ in each of the x (R⁶ O) and y (R⁶O) groups is independently ethylene or propylene, R⁷ is hydrogen, or a linear or branched alkyl group having from 1 to about 4 carbon atoms, x is an average number from 1 to about 15, and y is an average number from 0 to about 60. Most preferably, R¹ and R³ are independently linear or branched alkyl groups having from about 8 to about 18 carbon atoms and R⁴ and R⁵ are independently hydrogen, R² is a linear or branched alkylene group having from about 1 to about 6 carbon atoms, R⁶ in each of the x (R⁶O) and y (R⁶O) groups is independently ethylene or propylene, R⁷ is hydrogen, or a linear or branched alkyl group having from 1 to about 4 carbon atoms, x is an average number from 1 to about 10, and y is an average number from 0 to about 50.
(k) mono- or di-quatemary ammonium salts having the formula: 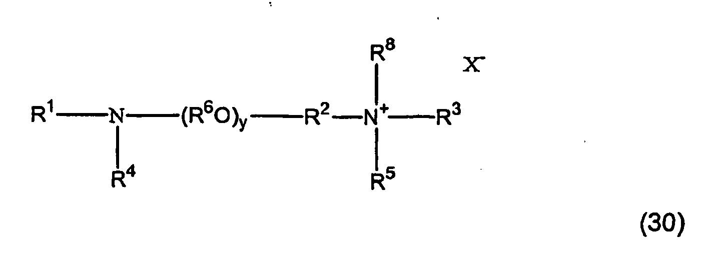 or 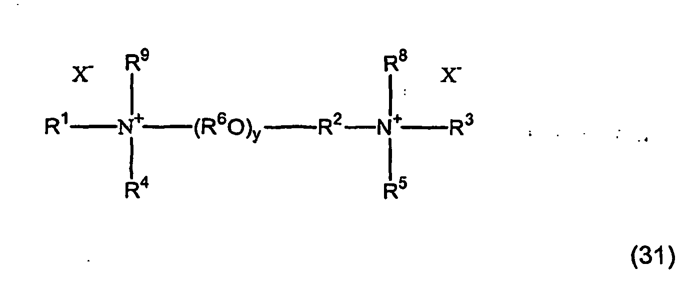 wherein R¹, R³, R⁴, R⁵, R⁸ and R⁹ are independently hydrogen, polyhydroxyalkyl, hydrocarbyl or substituted hydrocarbyl having from 1 to about 30 carbon atoms, or -(R⁶O)ₓR⁷, R² is hydrocarbylene or substituted hydrocarbylene having from 2 to about 30 carbon atoms, R⁶ in each of the x (R⁶O) and y (R⁶O) groups is independently C₂-C₄ alkylene, R⁷ is hydrogen, or a linear or branched alkyl group having from 1 to about 4 carbon atoms, x is an average number from 1 to about 30, y is an average number from about 3 to about 60, and X⁻ is an agriculturally acceptable anion. In this context, preferred R¹, R², R³, R⁴, R⁵, R⁸ and R⁹ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹, R³, R⁴, R⁵, R⁸ and R⁹ are independently hydrogen or a linear or branched alkyl or alkenyl group having from about 1 to about 22 carbon atoms or -(R⁶O)ₓR⁷, R² is a linear or branched alkylene or alkenylene group having from about 1 to about 6 carbon atoms, R⁶ in each of the x(R⁶O) and y (R⁶O) groups is independently C₂-C₄ alkylene, R⁷ is hydrogen, or a linear or branched alkyl group having from 1 to about 4 carbon atoms, x is an average number from 1 to about 30, and y is an average number from 1 to about 60. More preferably, R¹, R³, R⁴, R⁵, R⁸ and R⁹ are independently hydrogen or a linear or branched alkyl group having from about 1 to about 18 carbon atoms or -(R⁶O)ₓR⁷, R² is a linear or branched alkylene group having from about 1 to about 6 carbon atoms, R⁶ in each of the x (R⁶O) and y (R⁶O) groups is independently ethylene or propylene, R⁷ is hydrogen, or a linear or branched alkyl group having from 1 to about 4 carbon atoms, x is an average number from 1 to about 10, and y is an average number from 1 to about 60. Most preferably, R¹ and R³ are independently linear or branched alkyl groups having from about 8 to about 18 carbon atoms and R⁴, R⁵, R⁸ and R⁹ are independently hydrogen or methyl, R² is a linear or branched alkylene group having from about 1 to about 6 carbon atoms, R⁶ in each of the x (R⁶O) and y (R⁶O) groups is independently ethylene or propylene, R⁷ is hydrogen, or a linear or branched alkyl group having from 1 to about 4 carbon atoms, x is an average number from 1 to about 10, and y is an average number from 10 to about 50.
(l) a secondary or tertiary amine having the formula: 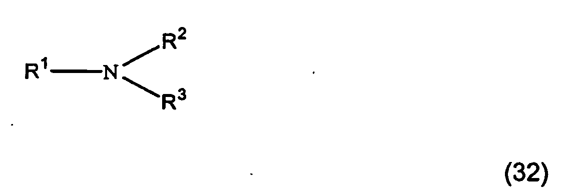 wherein R¹ and R² are hydrocarbyl having from 1 to about 30 carbon atoms, and R³ is hydrogen or hydrocarbyl having from 1 to about 30 carbon atoms. In this context, preferred R¹, R², and R³ hydrocarbyl groups are linear or branched alkyl, linear or branched alkenyl, linear or branched alkynyl, aryl, or aralkyl groups. Preferably, R¹ is a linear or branched alkyl or linear or branched alkenyl group having from about 8 to about 30 carbon atoms, and R² and R³ are independently hydrogen or a linear or branched alkyl or linear or branched alkenyl group having from 1 to about 6 carbon atoms. More preferably, R¹ is a linear or branched alkyl group having from about 12 to about 22 carbon atoms, and R² and R³ are independently hydrogen, methyl or ethyl. In one embodiment of the amine of formula (23), R¹ is a linear or branched alkyl group having from about 12 to about 22 carbon atoms, and R² and R³ are independently linear or branched hydroxyalkyl groups having from 1 to about 6 carbon atoms.
   In one embodiment, the surfactant has the formula (23) wherein R¹ is hydrocarbyl or substituted hydrocarbyl having from about 8 to about 30 carbon atoms, R² is a hydroxyalkyl, polyhydroxyalkyl or poly(hydroxyalkyl)alkyl group, and R³ is hydrogen, hydroxyalkyl, polyhydroxyalkyl or poly(hydroxyalkyl)alkyl. In this context, preferred R¹ hydrocarbyl groups are linear or branched alkyl, linear or branched alkenyl, linear or branched alkynyl, aryl, or aralkyl groups. In one embodiment, R¹ is a linear or branched alkyl, linear or branched alkenyl, linear or branched alkynyl, aryl, or aralkyl group having from about 8 to about 30 carbon atoms, R² is a linear or branched hydroxyalkyl group having from 1 to about 6 carbon atoms, and R³ is hydrogen or a linear or branched hydroxyalkyl group having from 1 to about 6 carbon atoms. Preferably, R¹ is a linear or branched alkyl, linear or branched alkenyl, linear or branched alkynyl, aryl, or aralkyl group having from about 8 to about 22 carbon atoms, R² is a linear or branched hydroxyalkyl group having from 1 to about 4 carbon atoms, and R³ is hydrogen or a linear or branched hydroxyalkyl group having from 1 to about 4 carbon atoms. More preferably, R¹ is a linear or branched alkyl, linear or branched alkenyl, linear or branched alkynyl, aryl, or aralkyl group having from about 8 to about 18 carbon atoms, R² is hydroxymethyl or hydroxyethyl, and R³ is hydrogen, hydroxymethyl or hydroxyethyl.
(m) monoalkoxylated amines having the formula: 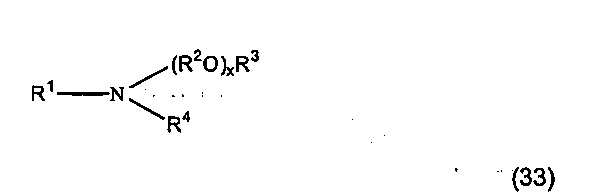 wherein R¹ and R⁴ are independently hydrocarbyl or substituted hydrocarbyl groups having from 1 to about 30 carbon atoms or -R⁵SR⁶, R² in each of the x (R²O) groups is independently C₂-C₄ alkylene, R³ is hydrogen, or a linear or branched alkyl group having from 1 to about 4 carbon atoms, R⁵ is a linear or branched alkyl group having from about 6 to about 30 carbon atoms, R⁶ is a hydrocarbyl or substituted hydrocarbyl group having from 4 to about 15 carbon atoms and x is an average number from 1 to about 60. In this context, preferred R¹, R⁴, and R⁶ hydrocarbyl groups are linear or branched alkyl, linear or branched alkenyl, linear or branched alkynyl, aryl, or aralkyl groups. In one embodiment, R¹ includes from about 7 to about 30 carbon atoms, preferably from about 8 to about 22 carbon atoms, and the remaining groups are as described above. Preferably, R¹ and R⁴ are independently a linear or branched alkyl or linear or branched alkenyl group having from 1 to about 25 carbon atoms, R² in each of the x (R²O) groups is independently C₂-C₄ alkylene, R³ is hydrogen, methyl or ethyl, and x is an average number from 1 to about 40. More preferably, R¹ and R⁴ are independently a linear or branched alkyl group having from 1 to about 22 carbon atoms, R² in each of the x (R²O) groups is independently ethylene or propylene, R³ is hydrogen or methyl, and x is an average number from 1 to about 30. Even more preferably, R¹ is a linear or branched alkyl group having from about 8 to about 22 carbon atoms and R⁴ is a linear or branched alkyl group having from 1 to about 22 carbon atoms, R² in each of the x (R²O) groups is independently ethylene or propylene, R³ is hydrogen or methyl, and x is an average number from about 1 to about 10. Most preferably, R¹ is a linear or branched alkyl group having from about 16 to about 22 carbon atoms and R⁴ is methyl, R² in each of the x (R²O) groups is ethylene, R³ is hydrogen, and x is an average number from about 1 to about 5, or R¹ is a linear or branched alkyl group having from about 8 to about 15 carbon atoms and R⁴ is methyl, R² in each of the x (R²O) groups is ethylene, R³ is hydrogen, and x is an average number from about 5 to about 10.
(n) dialkoxylated quaternary ammonium salts having the formula: 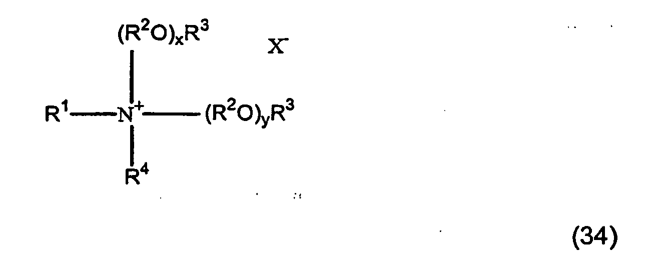 wherein R¹ is hydrocarbyl or substituted hydrocarbyl having from 1 to about 30 carbon atoms, R² in each of the x (R²O) and y (R²O) groups is independently C₂-C₄ alkylene, R³ is hydrogen, or a linear or branched alkyl group having from 1 to about 4 carbon atoms, R⁴ is hydrogen or hydrocarbyl or substituted hydrocarbyl having from 1 to about 30 carbon atoms, x and y are independently an average number from 1 to about 40, and X- is an agriculturally acceptable anion. In this context, preferred R¹ and R⁴ hydrocarbyl groups are linear or branched alkyl, linear or branched alkenyl, linear or branched alkynyl, aryl, or aralkyl groups. Preferably, R¹ and R⁴ are independently a linear or branched alkyl or linear or branched alkenyl group having from 1 to about 25 carbon atoms, R² in each of the x (R²O) and y (R²O) groups is independently C₂-C₄ alkylene, R³ is hydrogen, methyl or ethyl, and the sum of x and y is an average number from about 2 to about 30. More preferably, R¹ and R⁴ are independently a linear or branched alkyl group having from 1 to about 22 carbon atoms, R² in each of the x (R²O) and y (R²O) groups is independently ethylene or propylene, R³ is hydrogen or methyl, and the sum of x any y is an average number from about 2 to about 20. Even more preferably, R¹ is a linear or branched alkyl group having from about 8 to about 22 carbon atoms and R⁴ is a linear or branched alkyl group having from 1 to about 22 carbon atoms, R² in each of the x (R²O) and y (R²O) groups is independently ethylene or propylene, R³ is hydrogen or methyl, and x is an average number from about 2 to about 20. Most preferably, R¹ is a linear or branched alkyl group having from about 8 to about 22 carbon atoms and R⁴ is a linear or branched alkyl group having from 1 to about 6 carbon atoms, R² in each of the x (R²O) and y (R²O) groups is independently ethylene or propylene, R³ is hydrogen or methyl, and x is an average number from about 2 to about 15, or R¹ and R⁴ are independently a linear or branched alkyl group having from about 8 to about 22 carbon atoms, R² in each of the x (R²O) and y (R²O) groups is independently ethylene or propylene, R³ is hydrogen or methyl, and x is an average number from about 5 to about 15. Preferred dialkoxylated quaternary ammonium surfactants include Ethoquad™ C12 (a PEG 2 coco methyl ammonium chloride from Akzo Nobel), PEG 5 coco methyl ammonium chloride, PEG 5 tallow methyl ammonium chloride, PEG 5 ditallow ammonium bromide, and PEG 10 ditallow ammonium bromide.
(o) monoalkoxylated quaternary ammonium salts having the formula: 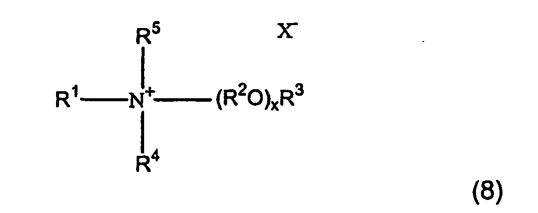 wherein R¹ and R⁵ are independently hydrogen or hydrocarbyl or substituted hydrocarbyl having from 1 to about 30 carbon atoms, R⁴ is hydrocarbyl or substituted hydrocarbyl having from 1 to about 30 carbon atoms, R² in each of the x (R²O) groups is independently C₂-C₄ alkylene, R³ is hydrogen, or a linear or branched alkyl group having from 1 to about 30 carbon atoms, x is an average number from 1 to about 60, and X- is an agriculturally acceptable anion. In this context, preferred R¹, R⁴, and R⁵ hydrocarbyl groups are linear or branched alkyl, linear or branched alkenyl, linear or branched alkynyl, aryl, or aralkyl groups. Preferably, R¹, R⁴ and R⁵ are independently a linear or branched alkyl or linear or branched alkenyl group having from 1 to about 25 carbon atoms, R² in each of the x (R²O) groups is independently C₂-C₄ alkylene, R³ is hydrogen, methyl or ethyl, and x is an average number from 1 to about 40. More preferably, R¹, R⁴ and R⁵ are independently a linear or branched alkyl group having from 1 to about 22 carbon atoms, R² in each of the x (R²O) groups is independently ethylene or propylene, R³ is hydrogen or methyl, and x is an average number from 1 to about 30. Even more preferably, R' is a linear or branched alkyl group having from about 8 to about 22 carbon atoms, R² in each of the x (R²O) groups is independently ethylene or propylene, R³ is hydrogen or methyl, R⁴ and R⁵ are independently a linear or branched alkyl group having from 1 to about 22 carbon atoms, and x is an average number from 1 to about 30. Even more preferably, R' is a linear or branched alkyl group having from about 8 to about 22 carbon atoms, R² in each of the x (R²O) groups is independently ethylene or propylene, R³ is hydrogen or methyl, R⁴ and R⁵ are independently a linear or branched alkyl group having from 1 to about 6 carbon atoms, and x is an average number from about 5 to about 25. Most preferably, R¹ is a linear or branched alkyl group having from about 16 to about 22 carbon atoms, R² in each of the x (R²O) groups is independently ethylene or propylene, R³ is hydrogen or methyl, R⁴ and R⁵ are independently a linear or branched alkyl group having from 1 to about 3 carbon atoms, and x is an average number from about 5 to about 25. Preferred monoalkoxylated quaternary ammonium surfactants include PEG 7 C₁₈ dimethyl ammonium chloride and PEG 22 C₁₈ dimethyl ammonium chloride.
(p) quaternary ammonium salts having the formula: 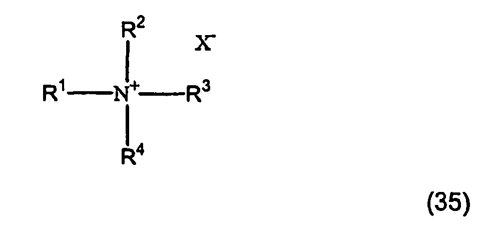 wherein R¹, R³ and R⁴ are independently hydrogen or hydrocarbyl or substituted hydrocarbyl having from 1 to about 30 carbon atoms, R² is hydrocarbyl or substituted hydrocarbyl having from 1 to about 30 carbon atoms, and X- is an agriculturally acceptable anion. In this context, preferred R¹, R², R³, and R⁴ hydrocarbyl groups are linear or branched alkyl, linear or branched alkenyl, linear or branched alkynyl, aryl, or aralkyl groups. Preferably, R¹ is a linear or branched alkyl or linear or branched alkenyl group having from about 8 to about 30 carbon atoms, and R², R³ and R⁴ are independently a linear or branched alkyl or linear or branched alkenyl group having from 1 to about 30 carbon atoms. More preferably, R¹ is a linear or branched alkyl or linear or branched alkenyl group having from about 8 to about 22 carbon atoms, and R², R³ and R⁴ are independently a linear or branched alkyl or linear or branched alkenyl group having from 1 to about 6 carbon atoms. Even more preferably, R¹ is a linear or branched alkyl group having from about 8 to about 16 carbon atoms, and R², R³ and R⁴ are independently a linear or branched alkyl group having from 1 to about 6 carbon atoms. Most preferably, R¹ is a linear or branched alkyl group having from about 8 to about 14 carbon atoms, and R², R³ and R⁴ are methyl. Preferred commercially available quaternary ammonium surfactants include Arquad™ C-50 (a dodecyl trimethyl ammonium chloride from Akzo Nobel) and Arquad™ T-50 (a tallow trimethyl ammonium chloride from Akzo Nobel).
(q) etheramines having the formula: 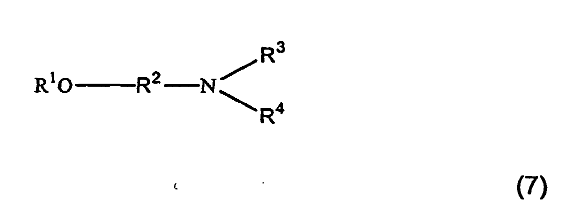 wherein R¹ is hydrocarbyl or substituted hydrocarbyl having from 1 to about 30 carbon atoms; R² is hydrocarbylene or substituted hydrocarbylene having from 2 to about 30 carbon atoms; R³ and R⁴ are independently hydrogen, hydrocarbyl or substituted hydrocarbyl having from 1 to about 30 carbon atoms, or -(R⁵O)ₓR⁶, R⁵ in each of the x(R⁵-O) groups is independently C₂-C₄ alkylene, R⁶ is hydrogen, or a linear or branched alkyl group having from 1 to about 4 carbon atoms, and x is an average number from 1 to about 50. In this context, preferred R¹, R², R³, and R⁴ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ is a linear or branched alkyl, linear or branched alkenyl, linear or branched alkynyl, aryl, or aralkyl group having from 8 to about 25 carbon atoms, R² is a linear or branched alkylene or alkenylene group having from 2 to about 30 carbon atoms, R³ and R⁴ are independently hydrogen, a linear or branched alkyl, linear or branched alkenyl, linear or branched alkynyl, aryl, or aralkyl group having from 1 to about 30 carbon atoms, or -(R⁵O)ₓR⁶, R⁵ in each of the x (R⁵O) groups is independently C₂-C₄ alkylene, R⁶ is hydrogen, methyl or ethyl, and x is an average number from 1 to about 30. More preferably, R¹ is a linear or branched alkyl or alkenyl group having from 8 to about 22 carbon atoms, R² is a linear or branched alkylene or alkenylene group having from 2 to about 6 carbon atoms, R³ and R⁴ are independently hydrogen, a linear or branched alkyl or alkenyl group having from 1 to about 6 carbon atoms, or -(R⁵O)ₓR⁶, R⁵ in each of the x (R⁵O) groups is independently ethylene or propylene, R⁶ is hydrogen or methyl, and x is an average number from 1 to about 15. Most preferably, R¹ is a linear or branched alkyl or alkenyl group having from 8 to about 18 carbon atoms, R² is ethylene or propylene, R³ and R⁴ are independently hydrogen, methyl, or -(R⁵O)ₓR⁶, R⁵ in each of the x (R⁵O) groups is independently ethylene or propylene, R⁶ is hydrogen, and x is an average number from 1 to about 5.
(r) diamines having the formula: 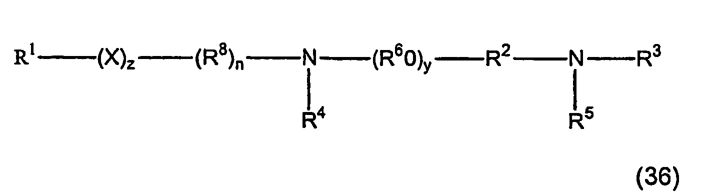 wherein R¹, R³, R⁴ and R⁵ are independently hydrogen, hydrocarbyl or substituted hydrocarbyl having from 1 to about 30 carbon atoms, or -(R⁶O)ₓR⁷; R² and R⁸ are independently hydrocarbylene or substituted hydrocarbylene having from 2 to about 30 carbon atoms, R⁶ in each of the x (R⁶O) and y (R⁶O) groups is independently C₂-C₄ alkylene, R⁷ is hydrogen, or a linear or branched alkyl group having from 1 to about 30 carbon atoms, x is an average number from 1 to about 30, X is -O-, -N(R⁶)-, -C(O)-, -C(O)O-, -OC(O)-, -N(R⁹)C(O)-, -C(O)N(R⁹)-, -S-, -SO-, or -SO₂-, y is 0 or an average number from 1 to about 30, n and z are independently 0 or 1, and R⁹ is hydrogen or hydrocarbyl or substituted hydrocarbyl. In this context, preferred R¹, R², R³, R⁴, R⁵ and R⁹ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ and R⁴ are independently a linear or branched alkyl or linear or branched alkenyl group having from about 1 to about 22 carbon atoms, R² and R⁸ are independently linear or branched alkylene groups having from about 2 to about 25 carbon atoms, R³ and R⁵ are each independently hydrogen or a linear or branched alkyl group having from 1 to about 6 carbon atoms and n, y and z are 0; or R¹, R², R³ and R⁴ are independently hydrogen or a linear or branched alkyl or alkenyl group having from about 1 to about 6 carbon atoms, R² is a linear or branched alkylene or alkenylene group having from about 8 to about 25 carbon atoms, and n, y and z are 0; or R¹, R², R³ and R⁴ are independently hydrogen or a linear or branched alkyl or alkenyl group having from about 1 to about 6 carbon atoms, R² is a linear or branched alkylene or alkenylene group having from about 1 to about 6 carbon atoms, R⁶ in each of the y (R⁶O) groups is independently C₂-C₄ alkylene, y is an average number from 1 to about 20 and n and z are 0; or R¹ and R³ are independently a linear or branched alkyl or linear or branched alkenyl group having from about 8 to about 22 carbon atoms, R² is a linear or branched alkylene group having from about 2 to about 25 carbon atoms; and R⁴ and R⁵ are each independently hydrogen, a linear or branched alkyl or alkenyl group having from 1 to about 6 carbon atoms, or -(R⁶O)ₓR⁷, R⁶ in each of the x (R⁶O) groups is independently C₂-C₄ alkylene, R⁷ is hydrogen, or a linear or branched alkyl group having from 1 to about 4 carbon atoms, x is an average number from 1 to about 30, and n, y and z are 0; or R¹ is a linear or branched alkyl or linear or branched alkenyl group having from about 1 to about 22 carbon atoms, R² is a linear or branched alkylene group having from about 2 to about 25 carbon atoms, R³, R⁴ and R⁵ are each independently hydrogen or a linear or branched alkyl group having from 1 to about 6 carbon atoms, X is -C(O)- or -SO₂-, n and y are 0 and z is 1. More preferably, R¹ and R⁴ are independently a linear or branched alkyl or linear or branched alkenyl group having from about 4 to about 18 carbon atoms, R² is a linear or branched alkylene group having from about 2 to about 6 carbon atoms, R³ and R⁵ are each independently hydrogen or a linear or branched alkyl group having from 1 to about 6 carbon atoms, and n, y and z are 0; or R¹, R², R³ and R⁴ are independently hydrogen or a linear or branched alkyl group having from about 1 to about 6 carbon atoms, R² is a linear or branched alkylene group having from about 8 to about 25 carbon atoms, and y is 0; or R¹, R², R³ and R⁴ are independently hydrogen or a linear or branched alkyl group having from about 1 to about 6 carbon atoms, R² is a linear or branched alkylene group having from about 1 to about 6 carbon atoms, R⁶ in each of the y (R⁶O) groups is independently ethylene or propylene, y is an average number from 1 to about 10 and n and z is 0; or R¹ and R³ are independently a linear or branched alkyl group having from about 8 to about 22 carbon atoms, R² is a linear or branched alkylene group having from about 2 to about 6 carbon atoms, and R⁴ and R⁵ are each independently hydrogen, a linear or branched alkyl group having from 1 to about 6 carbon atoms, or -(R⁶O)ₓR⁷, R⁶ in each of the x (R⁶O) groups is independently ethylene or propylene, R⁷ is hydrogen or methyl, x is an average number from 1 to about 15, and n, y and z are 0; or R¹ is a linear or branched alkyl group having from about 1 to about 22 carbon atoms, R² is a linear or branched alkylene group having from about 2 to about 6 carbon atoms, R³, R⁴ and R⁵ are each independently hydrogen, X is -C(O)- or -SO₂-, n and y are 0 and z is 1. Preferred diamines include Gemini 14-2-14, Gemini 14-3-14, Gemini 10-2-10, Gemini 10-3-10, Gemini 10-4-10, and Gemini 16-2-16 (C₁₀, C₁₄ or C₁₆ ethylene, propylene or butylene N-methyl diamines from Monsanto), Ethoduomeens™, and Jeffamine™ EDR-148.
(s) amine oxides having the formula: 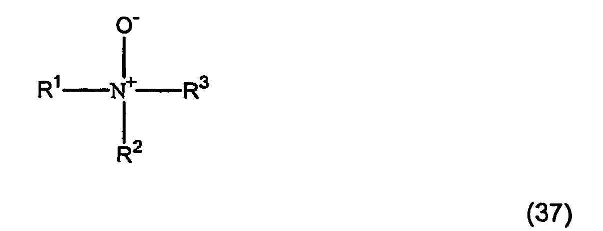 wherein R¹, R² and R³ are independently hydrogen, hydrocarbyl or substituted hydrocarbyl having from 1 to about 30 carbon atoms, -(R⁴O)ₓR⁵, or -R⁶(OR⁴)ₓOR⁵; R⁴ in each of the x (R⁴O) groups is independently C₂-C₄ alkylene, R⁵ is hydrogen, or a hydrocarbyl or substituted hydrocarbyl having from 1 to about 30 carbon atoms, R⁶ is a hydrocarbylene or substituted hydrocarbylene having from 1 to about 6 carbon atoms, x is an average number from 1 to about 50, and the total number of carbon atoms in R¹, R² and R³ is at least 8. In this context, preferred R¹, R², R³, R⁵ and R⁶ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably,R¹ and R² are independently hydrogen, a linear or branched alkyl or linear or branched alkenyl group having from 1 to about 30 carbon atoms, or -(R⁴O)ₓR⁵; R³ is a linear or branched alkyl or linear or branched alkenyl group having from about 8 to about 30 carbon atoms, R⁴ in each of the x (R⁴O) groups is independently C₂-C₄ alkylene; R⁵ is hydrogen or a linear or branched alkyl or linear or branched alkenyl group having from 1 to about 30 carbon atoms, and x is an average number from 1 to about 30. More preferably, R¹ and R² are independently hydrogen, or a linear or branched alkyl group having from 1 to about 6 carbon atoms, and R³ is a linear or branched alkyl group having from about 8 to about 22 carbon atoms; or R¹ and R² are independently -(R⁴O)ₓR⁵, R³ is a linear or branched alkyl group having from about 8 to about 22 carbon atoms, R⁴ in each of the x (R⁴O) groups is ethylene or propylene, R⁵ is hydrogen or a linear or branched alkyl or linear or branched alkenyl group having from 1 to about 30 carbon atoms, and x is an average number from 1 to about 10. Most preferably, R¹ and R² are independently methyl, and R³ is a linear or branched alkyl group having from about 8 to about 18 carbon atoms; or R¹ and R² are independently -(R⁴O)ₓR⁵, R³ is a linear or branched alkyl group having from about 8 to about 18 carbon atoms, R⁴ in each of the x (R⁴O) groups is ethylene or propylene, R⁵ is hydrogen or an alkyl group having from about 8 to about 18 carbon atoms, and x is an average number from 1 to about 5. Commercially available amine oxide surfactants include Chemoxide L70.
(t) alkoxylated amine oxides having the formula: 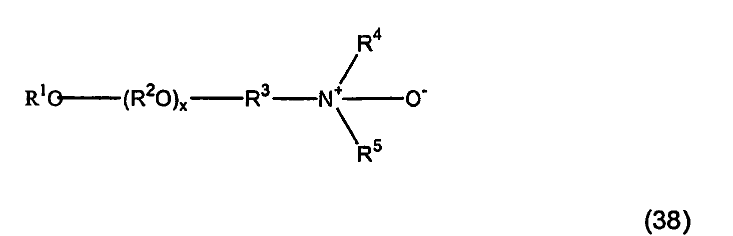 wherein R¹ is hydrogen or hydrocarbyl or substituted hydrocarbyl having from 1 to about 30 carbon atoms; R² in each of the x (R²O) and y (R²O) groups is independently C₂-C₄ alkylene; R³ is a hydrocarbylene or substituted hydrocarbylene having from 2 to about 6 carbon atoms; R⁴ and R⁵ are each independently hydrogen, hydrocarbyl or substituted hydrocarbyl having from 1 to about 30 carbon atoms, -(R⁶)ₙ-(R²O)_{y}R⁷; R⁶ is hydrocarbylene or substituted hydrocarbylene containing from 1 to about 6 carbon atoms, R⁷ is hydrogen or a linear or branched alkyl group having 1 to about 4 carbon atoms, n is 0 or 1, and x and y are independently an average number from 1 to about 60. In this context, preferred R¹, R⁴, R⁵ and R⁶ hydrocarbyl (hydrocarbylene) groups include linear or branched alkyl (alkylene), linear or branched alkenyl (alkenylene), linear or branched alkynyl (alkynylene), aryl (arylene), or aralkyl (aralkylene) groups. Preferably, R¹ is a linear or branched alkyl or linear or branched alkenyl group having from about 8 to about 25 carbon atoms, R² in each of the x (R²O) groups is independently C₂-C₄ alkylene, R³ is a linear or branched alkylene or alkenylene group having from 2 to about 6 carbon atoms, R⁴ and R⁵ are each independently hydrogen or a linear or branched alkyl group having from 1 to about 6 carbon atoms, and x is an average number from 1 to about 30. More preferably, R¹ is a linear or branched alkyl group having from about 12 to about 22 carbon atoms, R² in each of the x (R²O) groups is independently ethylene or propylene, R³ is a linear or branched alkylene or alkenylene group having from 2 to about 6 carbon atoms, R⁴ and R⁵ are each independently hydrogen, methyl, or tris(hydroxymethyl)methyl, and x is an average number from about 2 to about 30. Even more preferably, R¹ is a linear or branched alkyl group having from about 12 to about 18 carbon atoms, R² in each of the x (R²O) groups is independently ethylene or propylene, R³ is an ethylene, propylene or 2-hydroxypropylene group, R⁴ and R⁵ are each independently hydrogen or methyl, and x is an average number from about 4 to about 20. Most preferably, R¹ is a linear or branched alkyl group having from about 12 to about 18 carbon atoms, R² in each of the x (R²O) groups is independently ethylene or propylene, R³ is an ethylene, propylene, or 2-hydroxypropylene group, R⁴ and R⁵ are methyl, and x is an average number from about 4 to about 20.
(u) dialkoxylated amines having the formula: 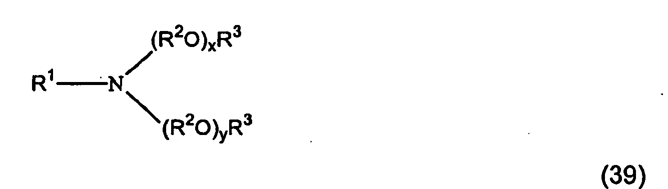 wherein R¹ is hydrogen or hydrocarbyl or substituted hydrocarbyl having from 1 to about 30 carbon atoms, -R⁴SR⁵, or -(R²O)_{z}R³, R² in each of the x (R²O), y (R²O) and z (R²O) groups is independently C₂-C₄ alkylene, R³ is hydrogen, or a linear or branched alkyl group having from 1 to about 22 carbon atoms, R⁴ is a linear or branched alkyl group having from about 6 to about 30 carbon atoms, R⁵ is a linear or branched alkyl group having from about 4 to about 15 carbon atoms, and x, y and z are independently an average number from 1 to about 40. In this context, preferred R¹ hydrocarbyl groups are hydrogen, linear or branched alkyl, linear or branched alkenyl, linear or branched alkynyl, aryl, or aralkyl groups. Preferably, R¹ is hydrogen, a linear or branched alkynyl, aryl, or aralkyl group having from about 1 to about 30 carbon atoms, R² in each of the x (R²O), y (R²O) and z (R²O) groups is independently C₂-C₄ alkylene, R³ is hydrogen, methyl or ethyl, and x and y are independently an average number from 1 to about 20. More preferably, R¹ is hydrogen or a linear or branched alkynyl, aryl, or aralkyl group having from about 8 to about 25 carbon atoms, R² in each of the x (R²O), y (R²O) and z (R²O) groups is independently ethylene or propylene, R³ is hydrogen or methyl, and x and y are independently an average number from 1 to about 30. Even more preferably, R¹ is hydrogen or a linear or branched alkynyl, aryl, or aralkyl group having from about 8 to about 22 carbon atoms, R² in each of the x (R²O), y (R²O) and z (R²O) groups is independently ethylene or propylene, R³ is hydrogen or methyl, and x and y are independently an average number from 1 to about 5. Preferred commercially available dialkoxylated amines include Trymeen™ 6617 (from Cognis) and Ethomeen™ C/12, C/15, C/20, C/25, T/12, T/15, T/20 and T/25 (from Akzo Nobel).
(v) aminated alkoxylated alcohols having the following chemical structure: 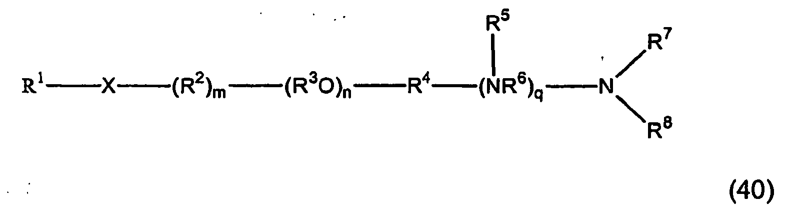 wherein R¹, R⁷, R⁸, and R⁹ are each independently hydrogen, hydrocarbyl or substituted hydrocarbyl having from 1 to about 30 carbon atoms, or -(R¹¹)ₛ(R³⁰)ᵥR¹⁰; X is -O-, -OC(O)-, -C(O)O-, -N(R¹²)C(O)-, -C(O)N(R¹²)-, -S-, -SO-, -SO₂- or -N(R⁹)-; R³ in each of the n (R³O) groups and the v (R³O) groups is independently C₂-C₄ alkylene; R¹⁰ is hydrogen, or a linear or branched alkyl group having from 1 to about 30 carbon atoms; n is an average number from 1 to about 60; v is an average number from 1 to about 50; R² and R¹¹ are each independently hydrocarbylene or substituted hydrocarbylene having from 1 to about 6 carbon atoms; R⁴ is hydrocarbylene or substituted hydrocarbylene having from 2 to about 6 carbon atoms; R¹² is hydrogen or hydrocarbyl or substituted hydrocarbyl having from 1 to about 30 carbon atoms; m and s are each independently 0 or 1; R⁶ is hydrocarbylene or substituted hydrocarbylene having from 2 to about 30 carbon atoms, -C(=NR¹²)-, -C(S)-, or -C(O)-; q is an integer from 0 to 5; and R⁵ is hydrogen or hydrocarbyl or substituted hydrocarbyl having from 1 to about 30 carbon atoms. In this context, preferred R¹, R², R⁴, R⁵, R⁶, R⁷, R⁸, R⁸, R¹¹ and R¹² hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups; and
(w) fatty imidazolines to be used herein are represented by the formula: 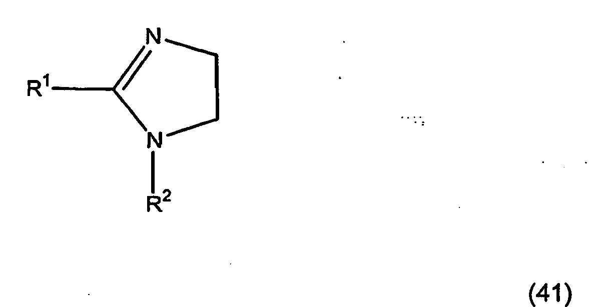
wherein R¹and R² are independently H or a substituted or unsubstituted C₁-C₂₂ fatty acid.

In one embodiment, any of the amine or quaternary ammonium surfactants as described in sections (a)-(v) above are included in liquid glyphosate concentrates other than IPA glyphosate, such as glyphosate concentrates containing potassium, di-ammonium, ammonium, sodium, monoethanolamine, n-propylamine, methylamine, ethylamine, hexamethylenediamine, dimethylamine, or trimethylsulfonium glyphosate and mixtures thereof, which contain at least about 10 wt.% glyphosate a.e., more preferably at least about 15%, 20%, 25%, 30%, 35%, 40% or more wt.% a.e., or at least about 120 g a.e. glyphosate per liter, more preferably at least 130, 140, 150, 160, 170, 180, 190, 200, 210, 220, 230, 240, 250, 260, 270, 280, 290, 300, 310, 320, 330, 340, 350, 360, 370, 380, 390, or 400 g a.e./l or more.

In another embodiment, any of the cationic surfactants as described in (a)-(v) above are preferably formulated in concentrates that are free of alkyl polyglycosides, or that only contain alkyl polyglycosides having a light color of less than 10, preferably less than 9, 8, 7, 6, or 5 as measured using a Gardner colorimeter. When dye is added to a formulated glyphosate product having a Gardner color greater than about 10, the concentrate remains dark brown in color. Concentrates having a Gardner color value of 10 are difficult to dye blue or green as is often desired to distinguish the glyphosate product from other herbicidal products.

A subclass of such cationic surfactants described above includes a monoalkoxylated amine having the formula: 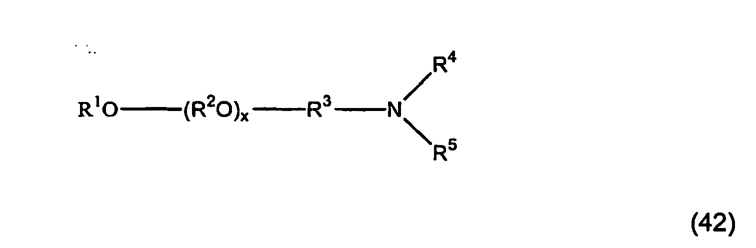 wherein R¹ is hydrogen or hydrocarbyl or substituted hydrocarbyl having from 1 to about 30 carbon atoms; R² in each of the x (R²O) and y (R²O) groups is independently C₂-C₄ alkylene; R³ is hydrocarbylene or substituted hydrocarbylene having from 2 to about 30 carbon atoms; R⁴ and R⁵ are each independently hydrogen, hydrocarbyl or substituted hydrocarbyl having from 1 to about 30 carbon atoms, -(R⁶)ₙ-(R²O)_{y}R⁷, or R⁴ and R⁵, together with the nitrogen atom to which they are attached, form a cyclic or heterocyclic ring; R⁶ is hydrocarbylene or substituted hydrocarbylene having from 1 to about 30 carbon atoms; R⁷ is hydrogen or a linear or branched alkyl group having 1 to about 4 carbon atoms, n is 0 or 1, x and y are independently an average number from 1 to about 60. In this context, preferred R¹, R³, R⁴, R⁵, and R⁶ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹ is a linear or branched alkyl or linear or branched alkenyl group having from about 8 to about 25 carbon atoms, R² in each of the x (R²O) groups is independently C₂-C₄ alkylene, R³ is a linear or branched alkylene group having from 2 to about 20 carbon atoms, R⁴ and R⁵ are each independently hydrogen or a linear or branched alkyl group having from 1 to about 6 carbon atoms, and x is an average number from 1 to about 30. More preferably, R¹ is a linear or branched alkyl group having from about 12 to about 22 carbon atoms, R² in each of the x (R²O) groups is independently ethylene or propylene, R³ is a linear or branched alkylene group having from 2 to about 6 carbon atoms, R⁴ and R⁵ are each independently hydrogen, methyl, or tris(hydroxymethyl)methyl, and x is an average number from about 2 to about 30. Even more preferably, R¹ is a linear or branched alkyl group having from about 12 to about 18 carbon atoms, R² in each of the x (R²O) groups is independently ethylene or propylene, R³ is ethylene or propylene, R⁴ and R⁵ are each independently hydrogen, methyl or tris(hydroxymethyl)methyl, and x is an average number from about 4 to about 20. Most preferably, R¹ is a linear or branched alkyl group having from about 12 to about 18 carbon atoms, R² in each of the x (R²O) groups is independently ethylene or propylene, R³ is ethylene, R⁴ and R⁵ are methyl, and x is an average number from about 4 to about 20. Preferred monoalkoxylated amines include PEG 13 or 18 C₁₄₋₁₅ ether propylamines and PEG 7, 10, 15 or 20 C₁₆₋₁₈ ether propylamines (from Tomah) and PEG 13 or 18 C₁₄₋₁₅ ether dimethyl propylamines and PEG 10, 13,15, 20 or 25 C₁₄₋₁₈ ether dimethyl propylamines (from Tomah) and Surfonic™ AGM-550 from Huntsman.

Quaternary ammonium, sulfonium and sulfoxonium salts are also effective cationic surfactants in forming potassium glyphosate concentrates and have a chemical structure: 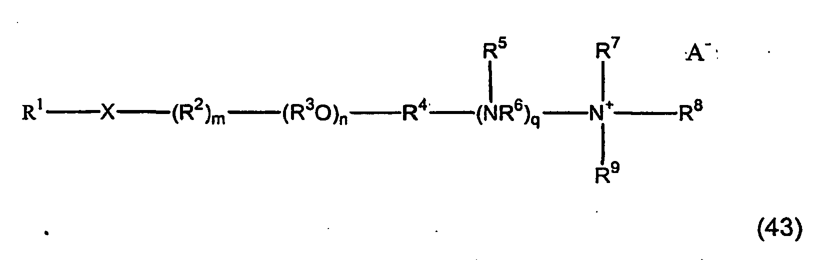 or 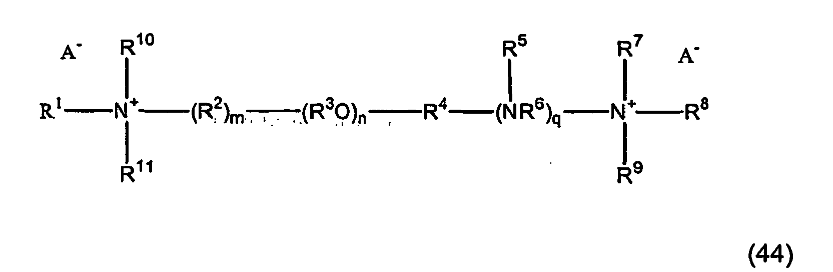 or 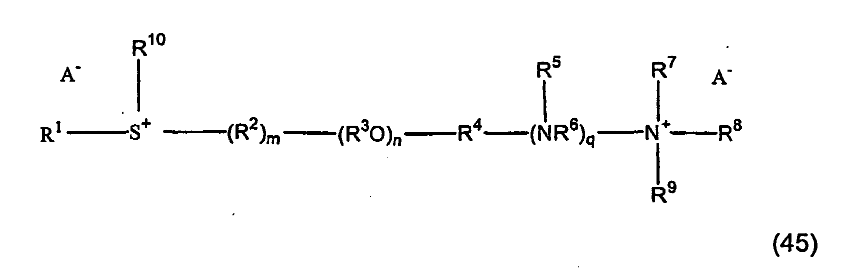 or 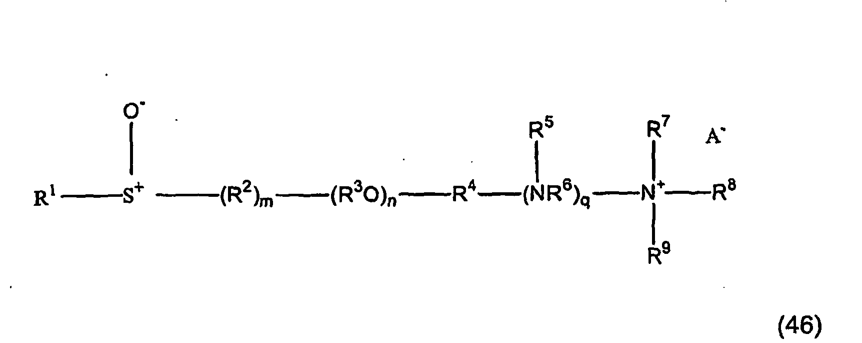 wherein R¹, R⁷, R⁸, R⁹, R¹⁰ and R¹¹ are independently hydrogen, hydrocarbyl or substituted hydrocarbyl having from 1 to about 30 carbon atoms, or -(R¹³)ₛ(R³⁰)ᵥR¹²; X is -O-, -OC(O)-, -N(R¹⁴)C(O)-, -C(O)N(R¹⁴)-, -C(O)O-, or -S-; R³ in each of the n (R³O) groups and v (R³O) groups is independently C₂-C₄ alkylene; R¹² is hydrogen, or a linear or branched alkyl group having from 1 to about 30 carbon atoms; n is an average number from 1 to about 60; v is an average number from 1 to about 50; R² and R¹³ are each independently hydrocarbylene or substituted hydrocarbylene having from 1 to about 6 carbon atoms; m and s are each independently 0 or 1; R⁴ is hydrocarbylene or substituted hydrocarbylene having from 2 to about 6 carbon atoms; R⁶ is hydrocarbylene or substituted hydrocarbylene having from 2 to about 30 carbon atoms, -C(=NR¹²)-, -C(S)-, or -C(O)-; R¹⁴ is hydrogen or hydrocarbyl or substituted hydrocarbyl having from 1 to about 30 carbon atoms, q is an integer from 0 to 5; R⁶ is hydrogen or hydrocarbyl or substituted hydrocarbyl having from 1 to about 30 carbon atoms; and each A⁻ is an agriculturally acceptable anion. In this context, preferred R¹, R², R⁴, R⁵, R⁶, R⁷, R⁸, R⁹, R¹⁰, R¹¹, R¹³, and R¹⁴ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups.

Another cationic surfactant effective in the formulations of the invention is a diamine or diammonium salt having the formula: 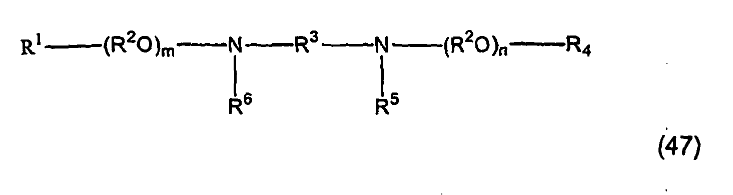 or 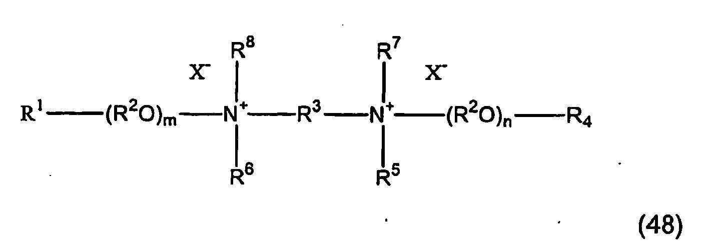 wherein R¹, R⁴, R⁵, R⁶, R⁷ and R⁸ are independently hydrogen or hydrocarbyl or substituted hydrocarbyl having from 1 to about 30 carbon atoms, R² in each of the m (R²O) and n (R²O) groups and R⁹ are independently C₂-C₄ alkylene, R³ is hydrocarbylene or substituted hydrocarbylene having from about 2 to about 6 carbon atoms or -(R²O)ₚR₉-, m and n are individually an average number from 0 to about 50, and p is an average number from 0 to about 60. In this context, preferred R¹, R³, R⁴, R⁵, R⁶, R⁷ and R⁸ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. In one embodiment of formula (40), R³ is hydrocarbylene having from about 2 to about 6 carbon atoms, and the remaining groups are as defined above.

Some preferred cationic surfactants include alkylamine ethoxylates (including etheramines and diamines) such as tallowamine ethoxylate, cocoamine ethoxylate, etheramine ethoxylate, N-tallow ethylenediamine ethoxylate and amidoamine ethoxylates; alkylamine quaternary amines such as alkoxylated quaternary amines (e.g., ethoxylated quaternary amines or propoxylated quaternary amines); alkylamine acetates such as tallowamine acetate or octylamine acetate; and amine oxides such as ethoxylated amine oxides (e.g., N,N-bis(2-hydroxyethyl) cocoamine N-oxide), nonethoxylated amine oxides (e.g., cethyldimethylamine N-oxide) and amidoamine oxides.

Preferred nonionic surfactants suitable for use in formulating the herbicidal compositions and concentrates of the invention include:
(a) alkoxylated alcohols having the formula:

   R¹O-(R²O)ₓR³ (49)

   wherein R¹ is hydrocarbyl or substituted hydrocarbyl having from 1 to about 30 carbon atoms, R² in each of the x (R²O) groups is independently C₂-C₄ alkylene, R³ is hydrogen, or a linear or branched alkyl group having from 1 to about 4 carbon atoms, and x is an average number from 1 to about 60. In this context, preferred R¹ hydrocarbyl groups are linear or branched alkyl, linear or branched alkenyl, linear or branched alkynyl, aryl, or aralkyl groups. Preferably, R¹ is a linear or branched alkyl or linear or branched alkenyl group having from about 8 to about 30 carbon atoms, R² in each of the x (R²O) groups is independently C₂-C₄ alkylene, R³ is hydrogen, methyl or ethyl, and x is an average number from about 5 to about 50. More preferably, R¹ is a linear or branched alkyl group having from about 8 to about 25 carbon atoms, R² in each of the x (R²O) groups is independently ethylene or propylene, R³ is hydrogen or methyl, and x is an average number from about 8 to about 40. Even more preferably, R¹ is a linear or branched alkyl group having from about 12 to about 22 carbon atoms, R² in each of the x (R²O) groups is independently ethylene or propylene, R³ is hydrogen or methyl, and x is an average number from about 8 to about 30. Preferred commercially available alkoxylated alcohols include Procol™ LA-15 (from Protameen), Brij™ 35, Brij™ 76, Brij™ 78, Brij™ 97 and Brij™ 98 (from Sigma Chemical Co.), Neodol™ 25-12 (from Shell), Hetoxol™ CA-10, Hetoxol™ CA-20, Hetoxol™ CS-9, Hetoxol™ CS-15, Hetoxol™ CS-20, Hetoxol™ CS-25, Hetoxol™ CS-30, and Plurafac™ A38 (from BASF), ST-8303 (from Cognis), and Arosurf™ 66 E20 (from Goldschmidt).
(b) dialkoxylated alcohols having the formula:

   R¹(OR²)ₓO-R³-O-(R²O)_{y}R¹ (50)

   wherein R¹ is independently hydrogen, or a linear or branched alkyl group having from 1 to about 4 carbon atoms, R² in each of the x (R²O) and the y (R²O) groups is independently C₂-C₄ alkylene, R³ is hydrocarbylene or substituted hydrocarbylene having from 2 to about 30 carbon atoms, and x and y are independently an average number from 1 to about 60. In this context, preferred R³ hydrocarbylene groups are linear or branched alkylene, linear or branched alkenylene, linear or branched alkynylene, arylene, or aralkylene groups. Preferably, R¹ is hydrogen, methyl or ethyl, R² in each of the x (R²O) and the y (R²O) groups is independently C₂-C₄ alkylene, R³ is a linear or branched alkylene or linear or branched alkenylene group having from about 8 to about 25 carbon atoms, and x and y are independently an average number from about 1 to about 20. More preferably, R¹ is hydrogen or methyl, R² in each of the x (R²O) and the y (R²O) groups is independently ethylene or propylene, R³ is a linear or branched alkylene or linear or branched alkenylene group having from about 8 to about 18 carbon atoms, and x and y are independently an average number from 1 to about 10. Even more preferably, R¹ is hydrogen, R² in each of the x (R²O) and the y (R²O) groups is independently ethylene or propylene, R³ is a linear or branched alkylene group having from about 8 to about 18 carbon atoms, and x and y are independently an average number from 1 to about 5.
(c) alkoxylated dialkylphenols having the formula: 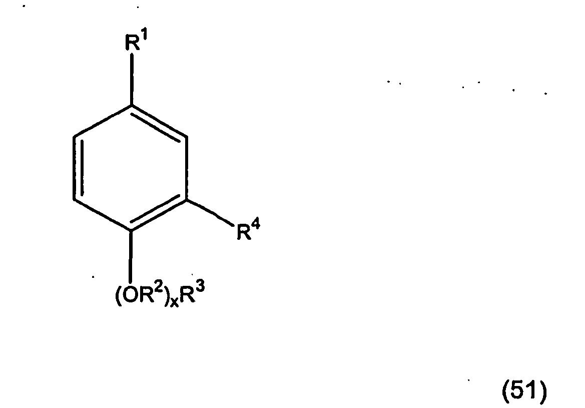 wherein R¹ and R⁴ are independently hydrogen, or a linear or branched alkyl group having from 1 to about 30 carbon atoms and at least one of R¹ and R⁴ is an alkyl group, R² in each of the x (R²O) groups is independently C₂-C₄ alkylene, R³ is hydrogen, or a linear or branched alkyl group having from 1 to about 4 carbon atoms, and x is an average number from 1 to about 60. Preferably, R¹ and R⁴ are independently linear or branched alkyl groups having from 8 to about 30 carbon atoms, R² in each of the x (R²O) groups is independently C₂-C₄ alkylene, R³ is hydrogen, methyl or ethyl, and x is an average number from about 5 to about 50. More preferably, R¹ and R⁴ are independently linear or branched alkyl groups having from about 8 to about 22 carbon atoms, R² in each of the x (R²O) groups is independently ethylene or propylene, R³ is hydrogen or methyl, and x is an average number from about 8 to about 40. Even more preferably, R¹ and R⁴ are independently linear or branched alkyl groups having from about 8 to about 16 carbon atoms, R² in each of the x (R²O) groups is independently ethylene or propylene, R³ is hydrogen or methyl, and x is an average number from about 10 to about 30. Preferred commercially available alkoxylated dialkylphenols include ethoxylated dinonyl phenols such as Surfonic™ DNP 100, Surfonic™ DNP 140, and Surfonic™ DNP 240 (from Huntsman).
(d) alkoxylated alkylphenols having the formula: 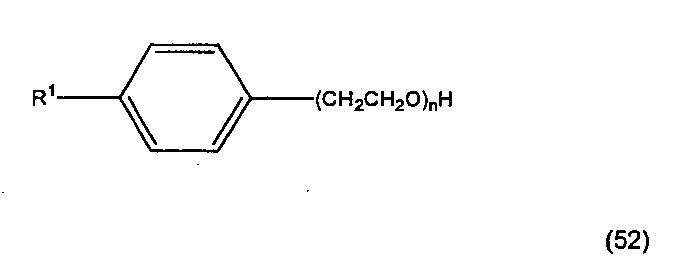 wherein R¹ is a substituted or unsubstituted C₁-C₂₂ group, and n is from 1 to about 20.
(e) alkoxylated mercaptans having the formula:

   R¹S(R²)ₙH (53)

   wherein R¹ is a substituted or unsubstituted C₁-C₂₂ group; R² is methoxy, ethoxy or propoxy; and n is from 1 to about 20.
(f) alkyl pyrrolidones having the formula: 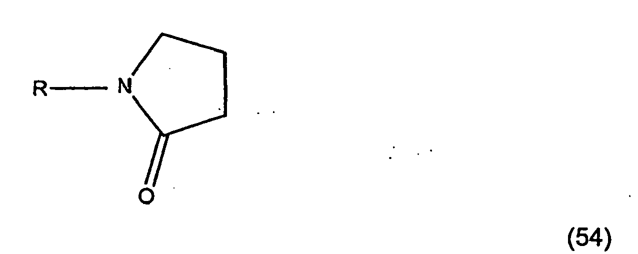 wherein R is a substituted or unsubstituted C₁-C₂₂ group.
(g) alkoxylated alkanolamides having the formula: 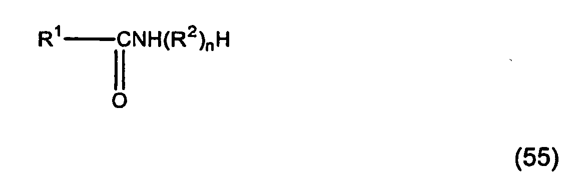 wherein R¹ is a substituted or unsubstituted C₁-C₂₂ group; R² is methoxy, ethoxy or propoxy; and n is from 1 to about 20; and
(h) alkoxylated glycols having the formula:

   R¹-(R²)ₙ-R³-OH (56)
wherein R¹ is H, -OH, or a substituted or unsubstituted C₁-C₂₂ group; R² is methoxy, ethoxy or propoxy; R³ is H, -OH, or a substituted or unsubstituted C₁-C₂₂ group; and n is from 1 to about 20.

Other suitable nonionic surfactants include alkylpolyglucosides; glycerol esters such as glyceryl monolaurate, and ethyoxylated glyceryl monococoate; ethoxylated castor oil; ethoxylated reduced sugar esters such as polyoxyethylene sorbitol monolaurate; esters of other polyhydric alcohols such as sorbitan monolaurate and sucrose monostearate; ethoxylated amides such as polyoxyethylene cocoamide; ethoxylated esters such as monolaurate of polyethylene glycol 1000 and dilaurate of polyethylene glycol 6000; ethoxylated alkyl or arylphenols such as nonylphenol ethoxylate, octylphenol ethoxylates, dodecylphenol ethoxylates, dinonylphenol ethoxylates and tristyrylphenol ethoxylates; alcohol ethoxylates such as fatty alcohol ethoxylates (e.g., oleyl alcohol ethoxylate), tridecylalcohol ethoxylates and other alcohol ethoxylates such as Neodols and oxoalcohol ethoxylates; and ethylene oxide/propylene oxide copolymers such as Pluronic type, Tetronic type, or Tergitol XH type.

Additional nonionic surfactants for inclusion in surfactant compositions that may be used in the invention are polyoxyethylene (5-30) C₈₋₂₂ alkylethers and polyoxyethylene (5-30) C₈₋₁₂ alkylphenylethers, wherein "(5-30)" means that the average number of ethylene oxide units in the polyoxyethylene chains of these surfactants is from about 5 to about 30. Examples of such nonionic surfactants include polyoxyethylene nonylphenols, octanols, decanols and trimethylnonanols. Particular nonionic surfactants that have proved useful include NEODOL™ 91-6 of Shell (a polyoxyethylene (6) C₉₋₁₁ linear primary alcohol), NEODOL™ 1-7 of Shell ( a polyoxyethylene (7) C₁₁ linear primary alcohol), TERGITOL™ 15-S-9 of Union Carbide (a polyoxyethylene (9) C₁₂₋₁₅ secondary alcohol) and SURFONIC™ NP95 of Huntsman (a polyoxyethylene (9.5) nonylphenol). Suitable polyalkoxylated silicone surfactants include those described in U.S. Patent No., 6,051,533, the disclosures of which are incorporated herein by reference.

In a preferred embodiment of the invention, the herbicidal compositions include at least one nonionic surfactant and at least one cationic surfactant. Any of the cationic and nonionic surfactants described herein can be used in combination in the herbicidal compositions of the invention. Preferred cationic surfactants include an alkylamine, an alkyl diamine, an alkyl polyamine, a mono- or di-quaternary ammonium salt, a monoalkoxylated amine, a dialkoxylated amine such as ethoxylated tallow amines, a monoalkoxylated quaternary ammonium salt, a dialkoxylated quaternary ammonium salt, an etheramine, an amine oxide, an alkoxylated amine oxide, and a fatty imidazoline. Preferred nonionic surfactants include an alkoxylated alcohol, a dialkoxylated alcohol, an alkoxylated dialkylphenol, an alkylpolyglycoside, an alkoxylated alkylphenol, an alkoxylated glycol, an alkoxylated mercaptan, a glyceryl or polyglyceryl ester of a natural fatty acid, an alkoxylated glycol ester, an alkoxylated fatty acid, an alkoxylated alkanolamide, a polyalkoxylated silicone, and an N-alkyl pyrrolidone. Examples of such surfactants include polyoxyethylene (5-30) C₈₋₂₂ amines or polyoxyethylene (5-30) polyoxypropylene (2-10) C₈₋₂₂ amines in combination with alkylpolyglucosides, alkoxylated or dialkoxylated alcohols such as polyoxyethylene (5-30) C₈₋₂₂ alkylethers, or methoxy, ethoxy or propoxy substituted glycol esters with a degree of substitution between 1 and about 20. Suitable cationic and nonionic surfactants for use in the compositions of the invention include those described in U.S. Patent No. 6,245,713. When the surfactant component of the compositions of the present invention includes both cationic and nonionic surfactants, the weight ratio of nonionic surfactant(s) to cationic surfactant(s) is from about 1:10 to about 10:1, preferably from about 1:5 to about 5:1, and more preferably from about 1:3 to about 3:1.

The herbicidal compositions of the invention may also include a compound capable of reducing eye irritancy. Such compounds are generally effective in combination with the alkylamine surfactants described herein, and have the formula:

R₁O(R₂O)ₙX₁ (57)

wherein R₁ is a hydrocarbyl group having from about 8 to about 22 carbon atoms, each of the n (R₂O) groups is independently C₂-C₄ alkylene, n is a number from 0 to about 60, and X₁ is a carboxylate, sulfate or phosphate. These compounds are described in U.S. Patent No. 6,063,733.

Suitable amphoteric surfactants include betaines such as simple betaines (e.g., cocodimethylbetaine), sulfobetaines, amidobetaines, and cocoamidosulfobetaines; imidazolinium compounds such as disodium lauroamphodiacetate, sodium cocoamphoacetate, sodium cocoamphopropionate, disodium cocoaminodipropionate, and sodium cocoamphohydoxypropyl sulfonate; and other amphoteric surfactants such as N-alkyl, N,-bis(2-hydroxyethyl)glycine and alkylaminedipropionates.

Other surfactants for use in herbicidal compositions and concentrates of the invention include compounds of the formula: 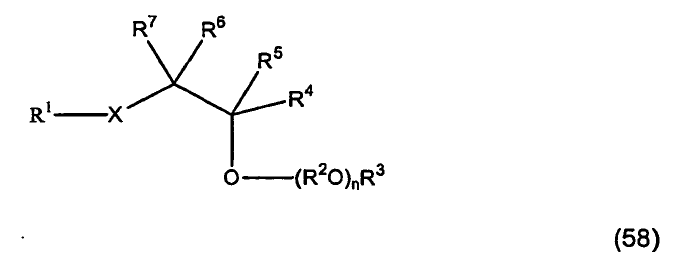 or 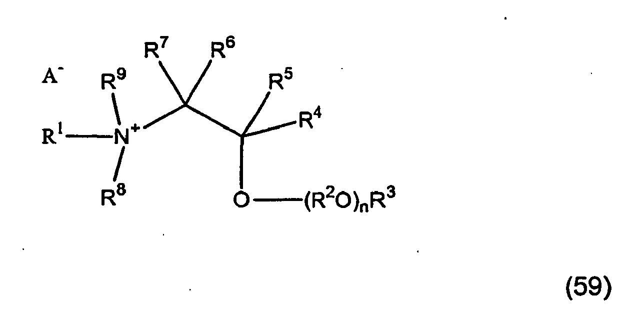 or 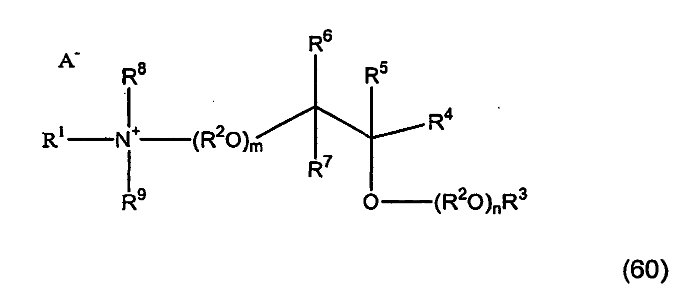 or 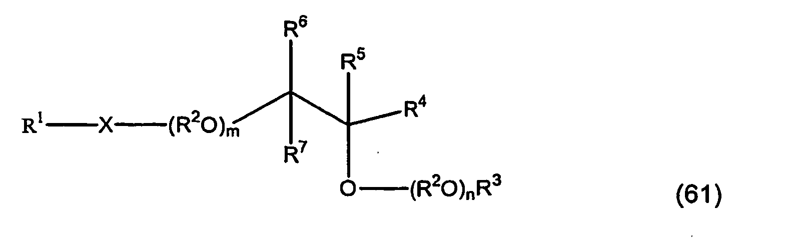 or 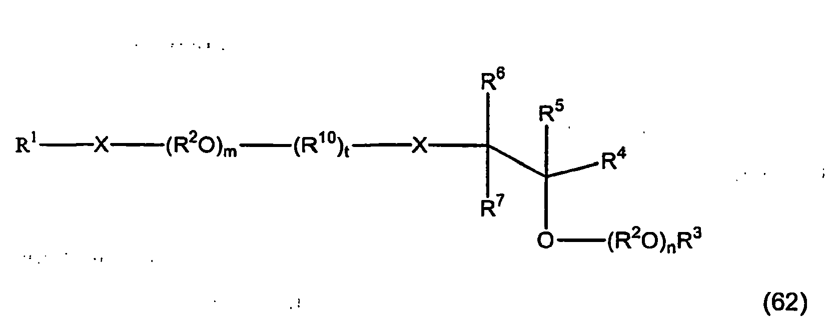 or 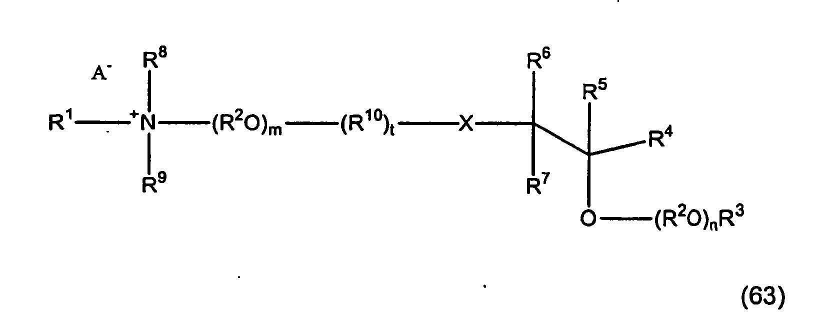 or 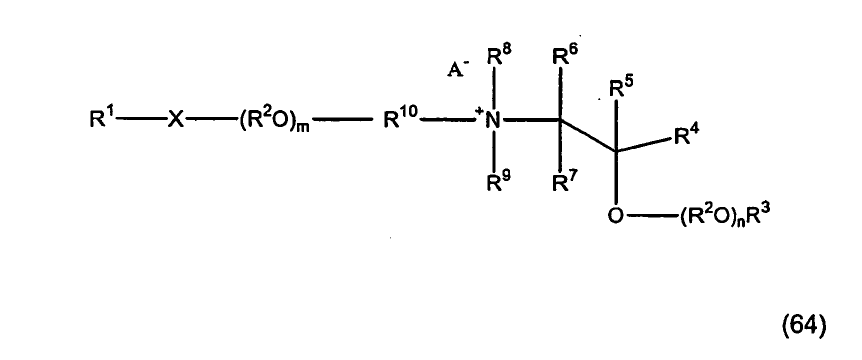 or 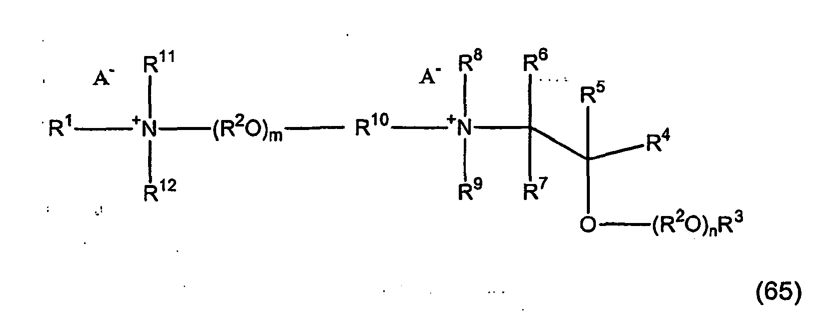 or 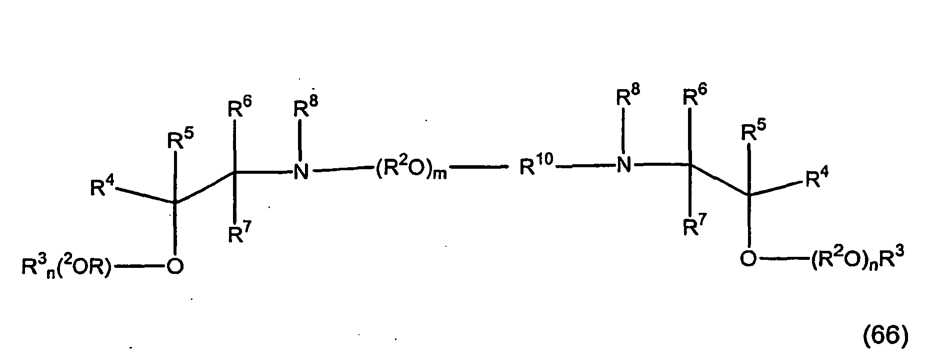 wherein R¹, R⁹, and R¹² are independently hydrocarbyl or substituted hydrocarbyl having from 1 to about 30 carbon atoms, or -(R²O)ₚR¹³; R² in each of the m (R²O), n (R²O), p (R²O) and q (R²O) groups is independently C₂-C₄ alkylene; R³, R⁸, R¹¹, R¹³ and R¹⁵ are independently hydrogen, or a hydrocarbyl or substituted hydrocarbyl having from 1 to about 30 carbon atoms; R⁴ is -(CH₂)_{y}OR¹³ or -(CH₂)_{y}O(R²O)_{q}R³; R⁵, R⁶ and R⁷ are independently hydrogen, hydrocarbyl or substituted hydrocarbyl having from 1 to about 30 carbon atoms, or R⁴; R¹⁰ is hydrocarbylene or substituted hydrocarbylene having from 2 to about 30 carbon atoms; R¹⁴ is hydrogen, hydrocarbyl or substituted hydrocarbyl having from 1 to about 30 carbon atoms, or -(CH₂)_{z}O(R²O)ₚR³; m, n, p and q are independently an average number from 1 to about 50; X is independently -O-, -N(R¹⁴)-, -C(O)-, -C(O)O-, -OC(O)-, -N(R¹⁵)C(O)-, -C(O)N(R¹⁵)-. -S-, -SO-, or -SO₂-; t is 0 or 1; A- is an agriculturally acceptable anion; and y and z are independently an integer from 0 to about 30. In this context, preferred R¹, R³, and R⁵-R¹⁵ hydrocarbyl (hydrocarbylene) groups are linear or branched alkyl (alkylene), linear or branched alkenyl (alkenylene), linear or branched alkynyl (alkynylene), aryl (arylene), or aralkyl (aralkylene) groups. Preferably, R¹, R⁹, and R¹² are independently linear or branched alkyl or alkenyl groups having from 1 to about 22 carbon atoms, or -(R²O)ₚR¹³; R² in each of the m (R²O), n (R²O), p (R²O) and q (R²O) groups is independently C₂-C₄ alkylene; R³ is hydrogen, methyl or ethyl; R⁴ is -(CH₂)_{y}OR¹³ or -(CH₂)_{y}O(R²O)_{q}R³; R⁵, R⁶ and R⁷ are independently hydrogen, linear or branched alkyl or alkenyl groups having from 1 to about 22 carbon atoms, or R⁴; R⁸, R¹¹, R¹³ and R¹⁵ are independently hydrogen, or linear or branched alkyl or alkenyl groups having from 1 to about 22 carbon atoms; R¹⁰ is a linear or branched alkylene or alkenylene group having from 2 to about 18 carbon atoms; R¹⁴ is a linear or branched alkyl or alkenyl group having from 1 to about 22 carbon atoms, or -(CH₂)_{z}O(R²O)ₚR³; m, n, p and q are independently an average number from 1 to about 30; X is independently -O-, -N(R¹⁴)-, -C(O)-, -C(O)O-, -OC(O)-, -N(R¹⁵)C(O)-, -C(O)N(R¹⁵)-, -S-, -SO-, or -SO₂-, t is 0 or 1; A- is an agriculturally acceptable anion; and y and z are independently an integer from 0 to about 30. More preferably, R¹ is a linear or branched alkyl or alkenyl groups having from about 8 to about 18 carbon atoms, or -(R²O)ₚR¹³; R⁹ and R¹² are independently linear or branched alkyl or alkenyl groups having from 1 to about 22 carbon atoms, or -(R²O)ₚR¹³; R² in each of the m (R²O), n (R²O), p (R²O) and q (R²O) groups is independently ethylene or propylene; R³ is hydrogen or methyl; R⁴ is -(CH₂)_{y}OR¹³ or -(CH₂)_{y}O(R²O)_{q}R³; R⁸, R¹¹, R¹⁵ are independently hydrogen, or linear or branched alkyl or alkenyl groups having from 1 to about 22 carbon atoms; R⁵, R⁶ and R⁷ are independently hydrogen, linear or branched alkyl or alkenyl groups having from 1 to about 22 carbon atoms, or R⁴; R¹⁰ is a linear or branched alkylene or alkenylene group having from 2 to about 6 carbon atoms; R¹³ is hydrogen, or linear or branched alkyl or alkenyl groups having from about 6 to about 22 carbon atoms; R¹⁴ is a linear or branched alkyl or alkenyl group having from 1 to about 22 carbon atoms, or -(CH₂)_{z}O(R²O)ₚR³; m, n, p and q are independently an average number from 1 to about 20; X is independently -O-, -N(R¹⁴)-, -C(O)-, -C(O)O-, -OC(O)-, -N(R¹⁵)C(O)-, -C(O)N(R¹⁵)-, -S-, -SO-, or -SO₂-, t is 0 or 1; A- is an agriculturally acceptable anion; and y and z are independently an integer from 0 to about 10. Most preferably, R¹ is a linear or branched alkyl or alkenyl groups having from about 12 to about 18 carbon atoms, or -(R²O)ₚR¹³; R⁹ and R¹² are independently linear or branched alkyl or alkenyl groups having from 1 to about 6 carbon atoms, or -(R²O)ₚR¹³; R² in each of the m (R²O), n (R²O), p (R²O) and q (R²O) groups is independently ethylene or propylene; R³ is hydrogen; R⁴ is -(CH₂)_{y}OR¹³ or -(CH₂)_{y}O(R²O)_{q}R³; R⁸, R¹¹, R¹⁵ are independently hydrogen, or linear or branched alkyl or alkenyl groups having from 1 to about 6 carbon atoms; R⁵, R⁶ and R⁷ are independently hydrogen, linear or branched alkyl or alkenyl groups having from 1 to about 22 carbon atoms, or R⁴; R¹⁰ is a linear or branched alkylene or alkenylene group having from 2 to about 6 carbon atoms; R¹³ is hydrogen, or linear or branched alkyl or alkenyl groups having from about 6 to about 22 carbon atoms; R¹⁴ is a linear or branched alkyl or alkenyl group having from 1 to about 22 carbon atoms, or -(CH₂)_{z}O(R²O)ₚR³; m, n, p and q are independently an average number from 1 to about 5; X is independently -O- or -N(R¹⁴)-, t is 0 or 1; A- is an agriculturally acceptable anion; and y and z are independently an integer from 1 to about 3.

Preferred anionic surfactants effective in forming formulations of the invention include saturated carboxylic acids such as butyric, caproic, caprylic, capric, lauric, palmitic, myristic or stearic acid, and unsaturated carboxylic acids such as palmitoleic, oleic, linoleic or linolenic acid. Preferred carboxylic acids include palmitic, oleic or stearic acid. Other preferred anionic surfactants include alkyl sulfates such as sodium lauryl sulfate, and phosphate esters or diesters having the formulae: 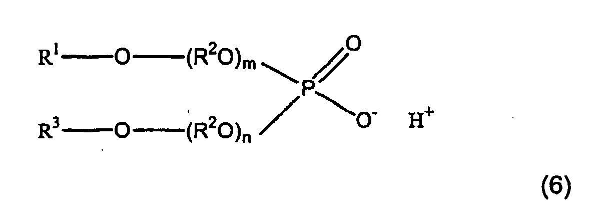 wherein R¹ and R³ are independently a linear or branched alkyl, linear or branched alkenyl, linear or branched alkynyl, aryl, or aralkyl group having from about 4 to about 30 carbon atoms; R² in each of the m (R² O) and the n (R²O) groups is independently C₂-C₄ alkylene; and m and n are independently from 1 to about 30; or 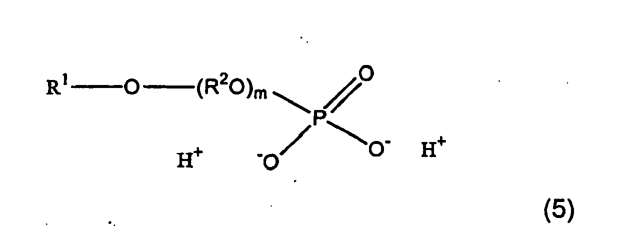 wherein R¹ is a linear or branched alkyl, linear or branched alkenyl, linear or branched alkynyl, aryl, or aralkyl group having from about 8 to about 30 carbon atoms; R² in each of the m (R² O) groups is independently C₂-C₄ alkylene; and m is from 1 to about 30. Representative phosphate esters include oleth-10 phosphate, oleth-20 phosphate and oleth-25 phosphate.

Preferred phosphate ester surfactants include mono- and dialcohol phosphates, mono- and di- (polyoxyalkylene alcohol) phosphates and the mono- and dialcohol phosphates, (polyoxyalkylene alkylphenol) phosphates, and are represented by the formula: 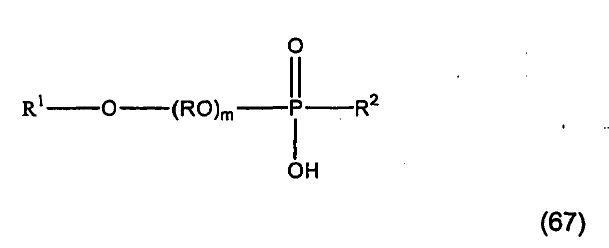 wherein R¹ is C₈-C₂₀ alkyl or C₈-C₂₀ alkylphenyl; R is an alkylene having from 2 to about 4 carbon atoms, usually ethylene or propylene, m is zero or a number up to about 60, preferably less than 10 and more preferably about 4, and R² is hydroxyl or R¹-O-(RO)ₘ radical wherein R¹ and R are as just indicated and m is 0 to about 30. If R² is hydroxyl, then the compound is monoester. If R² is a R¹-O-(RO)ₘ-radical, then the compound is a diester. Mixtures of phosphate esters or diesters of formula (52), (53), and/or (54) and a cationic surfactant, particularly the alkylamine surfactants of formula (61), (62), (63) or (64) are preferred for use in the compositions of the invention. Mixtures of monoesters and diesters are also useful, together with the polyoxyalkylene alkylamines. Where mixtures of monoesters and diesters are present, the weight percentage of the monoester, or monoesters, exceeds that of the diester or diesters.

Other suitable anionic surfactants include fatty soaps such as ammonium tallowate and sodium stearate; alkyl sulfates such as sodium C₈₋₁₀ alcohol sulfate, and sodium oleyl sulfate; sulfated oils such as sulfated castor oil; ether sulfates such as sodium lauryl ether sulfate, ammonium lauryl ether sulfate, and ammonium nonylphenol ether sulfate; sulfonates such as petroleum sulfonates, alkylbenzene sulfonates (e.g., sodium (linear) dodecylbenzene sulfonate or sodium (branched) dodecylbenzene sulfonate), alkylnapthalene sulfonates (e.g., sodium dibutylnapthalene sulfonate), alkyl sulfonates (e.g., alpha olefin sulfonates), sulfosuccinates such as dialkylsulfosuccinates (e.g., sodium dioctylsulfosuccinate) and monoalkylsulfosuccinates and succinamides (e.g., disodium laurylsulfosuccinate and disodium N-alkylsulfosuccinamate); sulfonated amides such as sodium N-methyl N-coco taurate; isethionates such as sodium cocoyl isethionate; sarcosinates such as N-lauroyl sarcosine; and phosphates such as alkylether ethoxylate phosphates and alkylarylether ethoxyated phosphates.

Exemplary surfactants that may be used in accordance with the present invention include the following species: 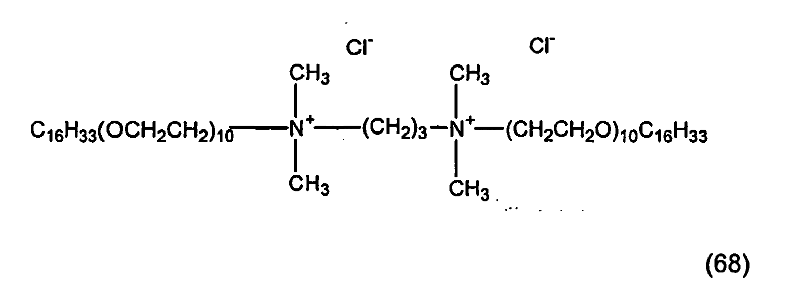 and

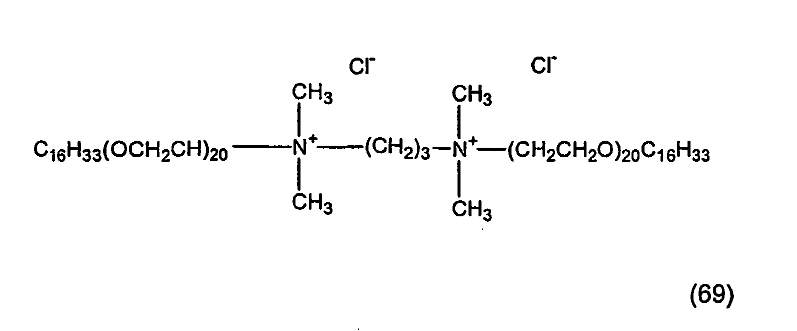

Other surfactants for use in herbicidal compositions and concentrates of the invention include N-acyl sarcosinates, which are described in U.S. Patent No. 5,985,798, which is incorporated herein by reference. Such surfactants are represented by the formula: 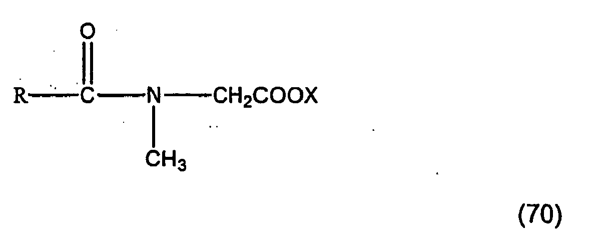 wherein R is C₈ to C₂₂ N-acyl, preferably a fatty acid of chain length C₁₀ to C₁₈, and X is salt forming cation including alkali metal, ammonia or alkanolamine. More preferably R is lauroyl, cocoyl, palmitoyl, myristoyl or oleoyl, and X is sodium, potassium, ammonium, an isopropylamine, or an amino alcohol. Preferred sarcosinates include sodium lauroyl sarcosinate, sodium cocoyl sarcosinate and sodium myristoyl sarcosinate, which are commercially available under the trademark HAMPOSYL from Hampshire Chemical Corp.

Alkylpolyglycosides are also suitable for use in the compositions and concentrates of the invention, and are described, for example, in U.S. Patent No. 6,117,820. As used herein the term "alkylglycoside" includes mono- and polyalkylglycosides. Glycosides are represented by the formula: 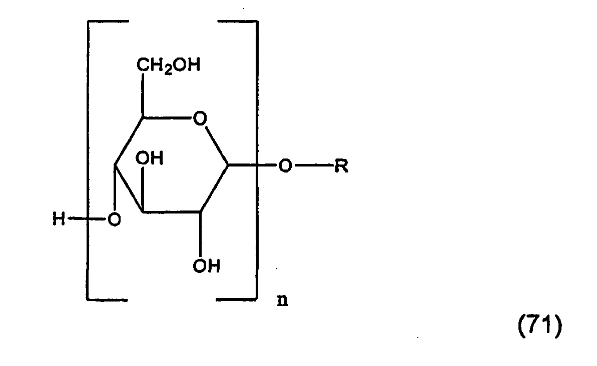 wherein n is the degree of polymerization, or number of glycose groups, and R is a branched or straight chain alkyl group preferably having from 4 to 18 carbon atoms, or a mixture of alkyl groups having an average value within the given range. The number of glycose groups per alkyl group may vary and alkyl mono- or di-, or polyglucose or saccharide derivatives are possible. Commercial alkylpolyglycosides usually contain a mixture of derivatives with n expressed as an average. Preferably n is between 1 and about 5, and more preferably between 1 and about 3. Typical of alkylglycosides is the product commercially available under the trade names AL2042 (imperial Chemical Industries PLC) wherein n is an average of 1.7 and R is a mixture of octyl (45%) and decyl (55%), the product commercially available under the trade name AGRIMUL PG2069 (Henkel Corp) wherein n is an average of 1.6 and R is a mixture of nonyl (20%), decyl (40%) and undecyl (40%), and the product commercially available under the trade name BEROL AG6202 (Akzo Nobel) which is 2-ethyl-1-hexylglycoside.

The more preferred surfactant for use in the particulate solid concentrates are of the "superspreading" type. The superspreading surfactants include, but are not limited to organosilicones and fluoro-organic surfactant. The organosilicone surfactants comprise a polysiloxane. More specifically, the organosilicone surfactants comprise a polysiloxane wherein at least one of the siloxane groups possesses a moiety comprising one or more polyalkyleneoxy or polyalkyleneoxyalkyl groups.

The polysiloxane surfactants are represented by the following formula: 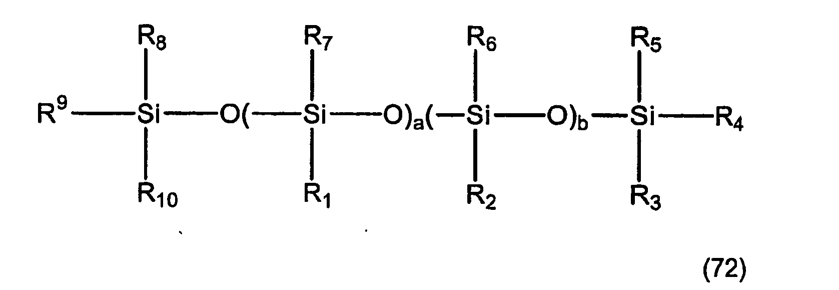 wherein R¹ is -CₙH₂ₙO(CH₂CH₂O)ₘ(CH₂CH(CH₃)O)_{q}X, n is 0 to 6, a is 0 to about 100, b is 0 to about 10, m is 0 to about 30, q is 0 to about 30, X is hydrogen or a C₁₋₂₀ hydrocarbyl or C₂₋₆ acyl group, and R₂, R₃, R₄, R₅, R₆, R₇, R₈, R₉, R₁₀ groups are independently substituted or unsubstituted C₁₋₂₀ hydrocarbyl or nitrogen containing groups.

Generally, in preferred embodiments, n is 0 to 6, a is 1 to about 30,b is 0 to about 10, m is 0 to about 30, q is 0 to about 3, X is hydrogen or a C₁₋₆ hydrocarbyl or C₂₋₆ acyl group, and R₂, R₃, R₄, R₅, R₆, R₇, R₈, R₉, R₁₀ groups are independently substituted or unsubstituted C₁₋₄ hydrocarbyl or nitrogen containing groups.

In one preferred embodiment, the polysiloxane is a polyoxyethylene heptamethyl trisiloxane wherein R₁ is -CₙH₂ₙO(CH₂CH₂O)ₘ(CH₂CH(CH₃)O)_{q}X, n is 3 or 4, a is 1, b is 0, m is 1 to about 30, q is 0, X is hydrogen or a methyl, ethyl or acetyl group, and R₂, R₃, R₄, R₅, R₆, R₇, R₈, R₉, R₁₀ groups are independently substituted or unsubstituted C₁₄ hydrocarbyl or nitrogen containing groups.

In a preferred embodiment of the invention in the formula for the polysiloxane surfactant(s), a is 1 to 5, b is 0 to 10, n is 3 or 4, m is 1 to about 30, q is 0, X is hydrogen or a methyl, ethyl or acetyl group, and R₂, R₃, R₄, R₅, R₆, R₇, R₈, R₉, and R₁₀ are methyl groups.

In another preferred embodiment of the invention in the formula for said polysiloxane surfactant(s), a is 1 to 5, b is 0 to 10, n is 3 or 4, m is 4 to 12, q is 0, X is hydrogen or a methyl or acetyl group, R₂, R₃, R₄, R₅, R₆, R₇, R₈, R₉, and R₁₀ are methyl groups.

In a more preferred embodiment of the invention in the formula for said polysiloxane surfactant(s), a is 1, b is 0, n is 3 or 4, m is 1 to about 30, b is 0, X is hydrogen or a methyl, ethyl or acetyl group, and R₂, R₃, R₄, R₅, R₆, R₇, R₈, R₉, and R₁₀ are methyl groups.

In a further preferred embodiment of the invention in the formula for said polysiloxane surfactant(s), a is 1, b is 0, n is 3, m is 8, b is 0, X is methyl and R₂, R₃, R₄, R₅, R₆, R₇, R₈, R₉, and R₁₀ are methyl groups.

Trisiloxanes of the above formula are generally described in product literature of Crompton Corporation and in U.S. Patent No. 3,505,377. Several of such trisiloxanes are ethoxylated organosilicone wetting agents available from Crompton Corporation as Silwet® silicone glycol copolymers. Both liquid organosilicones and dry organosilicones can be used in the surfactant composition; both are included within the scope of the invention.

More preferred trisiloxanes are those sold commercially in the United States or elsewhere by Crompton Corporation as Silwet® L-77, Silwet® 408 and Silwet® 800, by Dow-Coming as Sylgard® 309, by Exacto, Inc., as Qwikwet® 100, and by Goldschmidt as Breakthru S-240ä. In the most preferred polyoxyethylene heptamethyl trisiloxanes, R² is hydrogen.

A preferred surfactant composition useful in this invention contains about 75% to about 100%, more preferably about 80% to about 100% by weight of the polyoxyalkylene trisiloxane. A blend of more than one polyoxyalkylene trisiloxane can be used, in which case the preferred total amount of all polyoxyalkylene trisiloxanes present in the surfactant composition is as above.

The polysiloxane surfactants can be combined with any of the surfactants described herein. In one embodiment, a polysiloxane of formula (59) is combined with an alkyl diphenyloxide sulfonate having the formula: 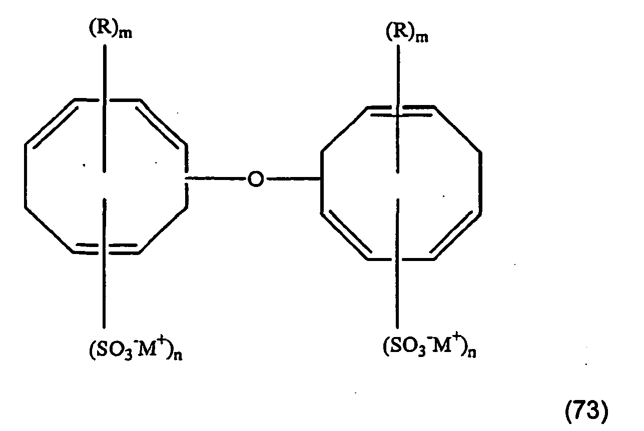 wherein each R is independently a hydrocarbyl having 1 to about 30 carbon atoms (preferably 6-10 carbon atoms), each n is independently 0 or 1, each M⁺ is an agriculturally acceptable cation, and each n is independently 0 or 1, provided that the surfactant include at least one sulfonate group. The cation can be ammonium (including alkylammonium and hydroxyalkylammonium), alkali metal, alkaline earth metal, or hydrogen. Such surfactant combinations generally include from about 5-55 wt.% polysiloxane surfactant and from about 45-95 wt.% diphenyloxide sulfonate, and are described in EP 1064844. Commercially available diphenyloxide sulfonates include sodium alkyl diphenyloxide sulfonates sold as DOWFAX™ from Dow Chemical.

Fluoro-organic wetting agents useful in this invention are organic molecules represented by the formula:

R_{f}-G (74)

wherein R_{f} is a fluoroaliphatic radical and G is a group which contains at least one hydrophilic group such as cationic, anionic, nonionic, or amphoteric groups. R_{f} is a fluorinated, monovalent, aliphatic organic radical containing at least four carbon atoms. Preferably, it is a saturated perfluoroaliphatic monovalent organic radical. However, hydrogen or chlorine atoms can be present as substituents on the skeletal chain. Although radicals containing a large number of carbon atoms can function adequately, compounds containing not more than about 20 carbon atoms are preferred because large radicals usually represent a less efficient utilization of fluorine than is possible with shorter skeletal chains. Preferably, R_{f} contains about 5 to 14 carbon atoms.

The cationic groups which are usable in the fluoro-organic wetting agents employed in this invention can include an amine or a quaternary ammonium cationic group. Such amine and quaternary ammonium cationic hydrophilic groups can have formulas such as NH₂, NHR², -N(R²)₂, -(NH₃)X, -(NH₂R²)X, -(NH(R²)₂X), or -(N(R²)₃)X, where X is an anionic counterion such as halide, hydroxide, sulfate, bisulfate, acetate or carboxylate, and each R² is independently a C₁₋₁₈ alkyl group. Preferably, X is halide, hydroxide, or bisulfate. Preferably, the cationic fluoro-organic wetting agents used in this invention contain hydrophilic groups which are quaternary ammonium cationic groups. The anionic groups which are usable in the fluoro-organic wetting agents employed in this invention include groups which by ionization can become radicals of anions. The anionic groups can have formulas such as -COOM, -SO₃M, ⁻OSO₃M, -PO₃M₂, -PO₃HM, -OPO₃M₂, or OPO₃HM, where M is H, an alkali metal ion, (NR¹₄)⁺, or (SR¹₃)⁺, where each R¹ is independently H or substituted or unsubstituted C₁- C₆ alkyl. Preferably M is Na⁺ or K⁺. The preferred anionic groups of the fluoro-organic wetting agents used in this invention have the formula -COOM or -SO₃M.

The amphoteric groups which are usable in the fluoro-organic wetting agents employed in this invention include groups which contain at least one cationic group as defined above and at least one anionic group as defined above. Other useful amphoteric groups are amine oxides.

The nonionic groups which are usable in the fluoro-organic wetting agents employed in this invention include groups which are hydrophilic but which under pH conditions of normal agronomic use are not ionized. The nonionic groups can have formulas such as -O(CH2CH2)XH wherein x is greater than zero, preferably 1-30, -SO₂NH₂, SO₂NHCH₂CH₂OH, SO₂N(CH₂CH₂OH)₂, -CONH₂, -CONHCH₂CH₂OH, or -ON(CH₂CH₂OH)₂.

Cationic fluoro-organic wetting agents useful herein include those cationic fluorochemicals described, for example, in U.S. Patent Nos. 2,764,602, 2,764,603, 3,147,064, and 4,069,158. Amphoteric fluoro-organic wetting agents useful herein include those amphoteric fluorochemicals described, for example, in U.S. Patent Nos. 2,764,602, 4,042,522, 4,069,158, 4,069,244, 4,090,967, 4,161,590 and 4,161, 602. Anionic fluoro-organic wetting agents useful herein include those anionic fluorochemicals described, for example, in U.S. Patent Nos. 2,803,656, 3,255,131, 3,450,755 and 4,090,967.

Several fluoro-organic wetting agents suitable for use in the invention are available from 3M under the Fluorad trademark. They include anionic agents Fluorad FC-120, Fluorad FC-129 and Fluorad FC-99, cationic agent Fluorad FC-750, and nonionic agents Fluorad FC-170C, Fluorad FC-171 and Fluorad FC-430.

Representative surfactants of the type mentioned above are described in U.S. Patent Nos. 5,703,015, 5,750,468 and 5,389,598.

The surfactant component of the compositions of the present invention may optionally contain a glycol or glycol ester of formula:

HO - (R⁴O)ₓ - R⁵ (75)

wherein R⁴ in each of the x (R⁴O) groups is independently a linear or branched C₂₋₆ alkylene group, x is 1 to about 4, and R⁶ is hydrogen or a C₁- C₄ hydrocarbyl group. Contemplated glycols and glycol esters include but are not limited to monoethylene glycol, diethylene glycol, propylene glycol or the methyl, ethyl, n-propyl, -butyl or t-butyl ethers thereof, dipropylene glycol or the methyl, ethyl, n-propyl, n-butyl or t-butyl ethers thereof, tripropylene glycol, or the methyl, ethyl, n-propyl, n-butyl or t-butyl ethers thereof, 1,3-butanediol, 1,4-butanediol, 2-methyl-1,3-propanediol, 2,2-dimethyl-1,3-propanediol, 2-methyl-1,3-pentanediol and 2-methyl-2,4-pentanediol.

Other nonionic surfactants may likewise be found useful, including without restriction polyoxyethylene polyoxypropylene block copolymers and alkyl polyglucosides. Cationic, anionic or amphoteric surfactants may also be included if desired.

In one embodiment of the invention, the herbicidal compositions include at least one nonionic surfactant and at least one cationic surfactant such as those described herein. Such surfactant combinations are described in U.S. Patent No. 5,998,332, which is incorporated herein by reference.

Additional cationic surfactants suitable for use in the herbicidal compositions of the invention are those described in U.S. Patent Nos. 5,563,111, 5,622,911, 5,849,663, 5,863,909, 5,985,794, 6,030,923 and 6,093,679.

The surfactant compositions typically are intended for mixing with a water soluble herbicide composition. It is preferred that there be substantially no water present in the surfactant composition.

A surfactant composition of the invention comprises any combination of the surfactants as described above. The surfactant composition is particularly preferred for use in formulating compositions or concentrates containing potassium, di-ammonium, ammonium, sodium, monoethanolamine, n-propylamine, methylamine, ethylamine, hexamethylenediamine, dimethylamine and/or trimethylsulfonium glyphosate.

The density of any glyphosate-containing formulation of the invention is preferably at least 1.050 grams/liter, more preferably at least about 1.055, 1.060, 1.065, 1.070, 1.075, 1.080, 1.085, 1.090, 1.095, 1.100, 1.105, 1.110, 1.115, 1.120, 1.125, 1.130, 1.135, 1.140, 1.145, 1.150, 1.155, 1.160, 1.165, 1.170, 1.175, 1.180, 1.185, 1.190, 1.195, 1.200, 1.205, 1.210, 1.215, 1.220, 1.225, 1.230, 1.235, 1.240, 1.245, 1.250, 1.255, 1.260, 1.265, 1.270, 1.275, 1.280, 1.285, 1.290, 1.295, 1.300, 1.305, 1.310, 1.315, 1.320, 1.325, 1.330, 1.335, 1.340, 1.345, 1.350, 1.355, 1.360, 1.365, 1.370, 1.375, 1.380, 1.385, 1.390, 1.395, 1.400, 1.405, 1.410, 1.415, 1.420, 1.425, 1.430, 1.435, 1.440, 1.445, or 1.450 grams/liter.

Other additives, adjuvants, or ingredients may be introduced into the formulations of the present invention to improve certain properties of the resulting formulations. Although the formulations of the present invention generally show good overall stability and viscosity properties without the addition of any further additives, the addition of a solubilizer (also commonly referred to as a cloud point enhancer or stabilizer) can significantly improve the properties of the formulations of the present invention. Suitable solubilizers for use with the novel formulations of the present invention include, for example, cocoamine (Armeen C), dimethylcocoamine (Arquad DMCD), cocoammonium chloride (Arquad C), PEG 2 cocoamine (Ethomeen C12), and PEG 5 cocoamine (Ethomeen C15), all of which are manufactured by Akzo Nobel (California).

Additionally, it has been found that the addition of a C₄ to C₁₆ alkyl or aryl amine compound, or the corresponding quaternary ammonium compound, greatly enhances the compatibility of certain glyphosate salts (e.g., potassium or isopropylamine) with surfactants that otherwise exhibit low or marginal compatibility at a given glyphosate loading. Suitable stabilizers include primary, secondary or tertiary C₄ to C₁₆ alkyl or aryl amine compounds, or the corresponding quaternary ammonium compounds. Such stabilizers greatly enhance the compatibility of certain glyphosate salts (e.g., potassium or isopropylamine) with surfactants that otherwise exhibit low or marginal compatibility at a given glyphosate loading. Suitable alkyl or aryl amine compounds may also contain 0 to about 5 C₂-C₄ alkylene oxide groups, preferably ethylene oxide groups. Preferred alkylamine compounds include C₆ to C₁₂ alkylamines having 0 to 2 ethylene oxide groups. Similarly, etheramine compounds having 4 to 12 carbons and 0 to about 5 ethylene oxide groups, as well as the corresponding quaternary ammonium compounds, also enhance the compatibility of such formulations. In one embodiment, the compounds which enhance the compatibility of such surfactants include amines or quaternary ammonium salts having the formula: 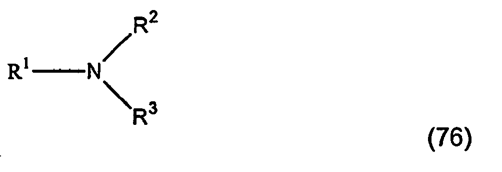 or 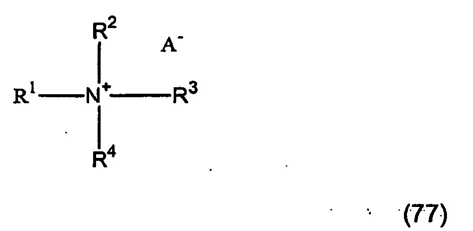 or 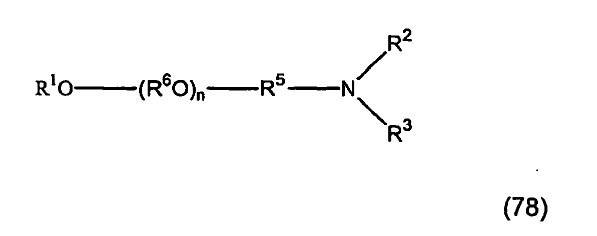 or 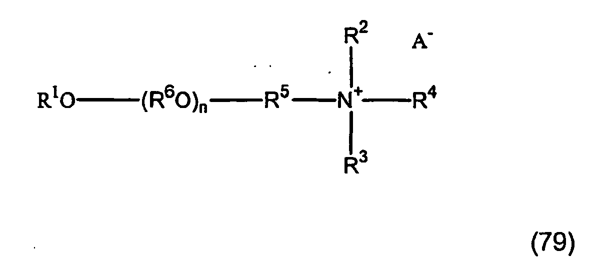 wherein R¹ is linear or branched alkyl or aryl having from about 4 to about 16 carbon atoms, R² is hydrogen, methyl, ethyl, or -(CH₂CH₂O)ₓH, R³ is hydrogen, methyl, ethyl, or -(CH₂CH₂O)_{y}H wherein the sum of x and y is not more than about 5; R⁴ is hydrogen or methyl; R⁶ in each of the n (R⁶O) groups is independently C₂-C₄ alkylene; R⁵ is hydrocarbylene or substituted hydrocarbylene having from 2 to about 6 carbon atoms; and A- is an agriculturally acceptable anion.

The present invention also includes a method for killing or controlling weeds or unwanted vegetation comprising the steps of diluting a liquid concentrate in a convenient amount of water to form a tank mix and applying a herbicidally effective amount of the tank mix to the foliage of the weeds or unwanted vegetation. Similarly included in the invention is the method of killing or controlling weeds or unwanted vegetation comprising the steps of diluting a solid particulate concentrate in a convenient amount of water to form a tank mix and applying a herbicidally effective amount of the tank mix to the foliage of the weeds or unwanted vegetation.

In a herbicidal method of using a composition of the invention, the composition is diluted in a suitable volume of water to provide an application solution which is then applied to foliage of a plant or plants at an application rate sufficient to give a desired herbicidal effect. This application rate is usually expressed as amount of glyphosate per unit area treated, e.g., grams acid equivalent per hectare (g a.e./ha). What constitutes a "desired herbicidal effect" is, typically and illustratively, at least 85% control of a plant species as measured by growth reduction or mortality after a period of time during which the glyphosate exerts its full herbicidal or phytotoxic effects in treated plants. Depending on plant species and growing conditions, that period of time can be as short as a week, but normally a period of at least two weeks is needed for glyphosate to exert its full effect.

The selection of application rates that are herbicidally effective for a composition of the invention is within the skill of the ordinary agricultural scientist. Those of skill in the art will likewise recognize that individual plant conditions, weather and growing conditions, as well as the specific active ingredients and their weight ratio in the composition, will influence the degree of herbicidal effectiveness achieved in practicing this invention. With respect to the use of glyphosate compositions, much information is known about appropriate application rates. Over two decades of glyphosate use and published studies relating to such use have provided abundant information from which a weed control practitioner can select glyphosate application rates that are herbicidally effective on particular species at particular growth stages in particular environmental conditions.

Herbicidal compositions of glyphosate salts are used to control a very wide variety of plants worldwide, and it is believed the potassium salt will prove no different from other salts of glyphosate in this regard.

Particularly important annual dicotyledonous plant species for control of which a composition of the invention can be used are exemplified without limitation by velvetleaf (*Abutilon theophrasti*), pigweed (*Amaranthus spp*.), buttonweed (*Borreria spp*.), oilseed rape, canola, indian mustard, etc. (*Brassica spp*.), commelina (*Commelina spp*.), filaree (*Erodium spp*.), sunflower (*Helianthus spp*.), morningglory (*Ipomoea spp*.), kochia (*Kochia scoparia*), mallow (*Malva spp*.), wild buckwheat, smartweed, etc. (*Polygonum spp*.), purslane (*Portulaca spp*.), russian thistle (*Salsola spp*.), sida (*Sida spp*.), wild mustard (*Sinapis arvensis*) and cocklebur (*Xanthium spp*.).

Particularly important annual monocotyledonous plant species for control of which a composition of the invention can be used are exemplified without limitation by wild oat (*Avena fatua*), carpetgrass (*Axonopus spp*.), downy brome (*Bromus tectorum*), crabgrass (*Digitaria spp*.), bamyardgrass (*Echinochloa crus-galli*), goosegrass (*Eleusine indica*), annual ryegrass (*Lolium multiflorum*), rice (*Oryza sativa*), ottochloa (*Ottochloa nodosa*), bahiagrass (*Paspalum notatum*), canarygrass (*Phalaris spp*.), foxtail (*Setaria spp*.), wheat (*Triticum aestivum*) and com (*Zea mays*).

Particularly important perennial dicotyledonous plant species for control of which a composition of the invention can be used are exemplified without limitation by mugwort (*Artemisia spp*.), milkweed (*Asclepias spp*.), canada thistle (*Cirsium arvense*), field bindweed (*Convolvulus arvensis*) and kudzu (*Pueraria spp*.).

Particularly important perennial monocotyledonous plant species for control of which a composition of the invention can be used are exemplified without limitation by brachiaria (*Brachiaria spp*.), bermudagrass (*Cynodon dactylon*), yellow nutsedge (*Cyperus esculentus*), purple nutsedge (*C. rotundus*), quackgrass (*Elymus repens*), lalang (*Imperata cylindrica*), perennial ryegrass (*Lolium perenne*), guineagrass (*Panicum maximum*), dallisgrass (*Paspalum dilatatum*), reed (*Phragmites spp*.), johnsongrass (*Sorghum halepense*) and cattail (*Typha spp*.).

Other particularly important perennial plant species for control of which a composition of the invention can be used are exemplified without limitation by horsetail (*Equisetum spp*.), bracken (*Pteridium aquilinum*), blackberry (*Rubus spp*.) and gorse (*Ulex europaeus*).

If desired, the user can mix one or more adjuvants with a composition of the invention and the water of dilution when preparing the application composition. Such adjuvants can include additional surfactant and/or an inorganic salt such as ammonium sulfate with the aim of further enhancing herbicidal efficacy. However, under most conditions a herbicidal method of use of the present invention gives acceptable efficacy in the absence of such adjuvants.

In a particular contemplated method of use of a composition of the invention, the composition, following dilution in water, is applied to foliage of crop plants genetically transformed or selected to tolerate glyphosate, and simultaneously to foliage of weeds or undesired plants growing in close proximity to such crop plants. This method of use results in control of the weeds or undesired plants while leaving the crop plants substantially unharmed. Crop plants genetically transformed or selected to tolerate glyphosate include those whose seeds are sold by Monsanto Company or under license from Monsanto Company bearing the Roundup Ready® trademark. These include, without restriction, varieties of cotton, soybean, canola, sugar beet, wheat and com.

Plant treatment compositions can be prepared simply by diluting a concentrate composition of the invention in water. Application of plant treatment compositions to foliage is preferably accomplished by spraying, using any conventional means for spraying liquids, such as spray nozzles, atomizers or the like. Compositions of the invention can be used in precision farming techniques, in which apparatus is employed to vary the amount of pesticide applied to different parts of a field, depending on variables such as the particular plant species present, soil composition, etc. In one embodiment of such techniques, a global positioning system operated with the spraying apparatus can be used to apply the desired amount of the composition to different parts of a field.

The composition at the time of application to plants is preferably dilute enough to be readily sprayed using standard agricultural spray equipment. Preferred application rates for the present invention vary depending upon a number of factors, including the type and concentration of active ingredient and the plant species involved. Useful rates for applying an aqueous composition to a field of foliage can range from about 25 to about 1,000 liters per hectare (I/ha) by spray application. The preferred application rates for aqueous solutions are in the range from about 50 to about 300 I/ha.

Many exogenous chemicals (including glyphosate herbicide) must be taken up by living tissues of the plant and translocated within the plant in order to produce the desired biological (e.g., herbicidal) effect. Thus, it is important that a herbicidal composition not be applied in such a manner as to excessively injure and interrupt the normal functioning of the local tissue of the plant so quickly that translocation is reduced. However, some limited degree of local injury can be insignificant, or even beneficial, in its impact on the biological effectiveness of certain exogenous chemicals.

A large number of compositions of the invention are illustrated in the Examples that follow. Many concentrate compositions of glyphosate have provided sufficient herbicidal effectiveness in greenhouse tests to warrant field testing on a wide variety of weed species under a variety of application conditions.

### DEFINITIONS

The terms "hydrocarbon" and "hydrocarbyl" as used herein describe organic compounds or radicals consisting exclusively of the elements carbon and hydrogen. These moieties include alkyl, alkenyl, alkynyl, and aryl moieties. These moieties also include alkyl, alkenyl, alkynyl, and aryl moieties substituted with other aliphatic or cyclic hydrocarbon groups, such as alkaryl, alkenaryl and alkynaryl. Unless otherwise indicated, these moieties preferably comprise 1 to 30 carbon atoms.

The term "hydrocarbylene" as used herein describes radicals joined at two ends thereof to other radicals in an organic compound, and which consist exclusively of the elements carbon and hydrogen. These moieties include alkylene, alkenylene, alkynylene, and arylene moieties. These moieties also include alkyl, alkenyl, alkynyl, and aryl moieties substituted with other aliphatic or cyclic hydrocarbon groups, such as alkaryl, alkenaryl and alkynaryl. Unless otherwise indicated, these moieties preferably comprise 1 to 30 carbon atoms.

The "substituted hydrocarbyl" moieties described herein are hydrocarbyl moieties which are substituted with at least one atom other than carbon, including moieties in which a carbon chain atom is substituted with a hetero atom such as nitrogen, oxygen, silicon, phosphorous, boron, sulfur, or a halogen atom. These substituents include halogen, heterocyclo, alkoxy, alkenoxy, alkynoxy, aryloxy, hydroxy, protected hydroxy, ketal, acyl, acyloxy, nitro, amino, amido, cyano, thiol, acetal, sulfoxide, ester, thioester, ether, thioether, hydroxyalkyl, urea, guanidine, amidine, phosphate, amine oxide, and quaternary ammonium salt.

The "substituted hydrocarbylene" moieties described herein are hydrocarbylene moieties which are substituted with at least one atom other than carbon, including moieties in which a carbon chain atom is substituted with a hetero atom such as nitrogen, oxygen, silicon, phosphorous, boron, sulfur, or a halogen atom. These substituents include halogen, heterocyclo, alkoxy, alkenoxy, alkynoxy, aryloxy, hydroxy, protected hydroxy, ketal, acyl, acyloxy, nitro, amino, amido, cyano, thiol, acetal, sulfoxide, ester, thioester, ether, thioether, hydroxyalkyl, urea, guanidine, amidine, phosphate, amine oxide, and quaternary ammonium salt.

Unless otherwise indicated, the alkyl groups described herein are preferably lower alkyl containing from one to 18 carbon atoms in the principal chain and up to 30 carbon atoms. They may be straight or branched chain or cyclic and include methyl, ethyl, propyl, isopropyl, n-butyl, isobutyl, hexyl, 2-ethylhexyl, and the like.

Unless otherwise indicated, the alkenyl groups described herein are preferably lower alkenyl containing from two to 18 carbon atoms in the principal chain and up to 30 carbon atoms. They may be straight or branched chain or cyclic and include ethenyl, propenyl, isopropenyl, butenyl, isobutenyl, hexenyl, and the like.

Unless otherwise indicated, the alkynyl groups described herein are preferably lower alkynyl containing from two to 18 carbon atoms in the principal chain and up to 30 carbon atoms. They may be straight or branched chain and include ethynyl, propynyl, butynyl, isobutynyl, hexynyl, and the like.

The terms "aryl" as used herein alone or as part of another group denote optionally substituted homocyclic aromatic groups, preferably monocyclic or bicyclic groups containing from 6 to 12 carbons in the ring portion, such as phenyl, biphenyl, naphthyl, substituted phenyl, substituted biphenyl or substituted naphthyl. Phenyl and substituted phenyl are the more preferred aryl.

The term "aralkyl" as used herein denotes a group containing both alkyl and aryl structures such as benzyl.

As used herein, the alkyl, alkenyl, alkynyl, aryl and aralkyl groups can be substituted with at least one atom other than carbon, including moieties in which a carbon chain atom is substituted with a hetero atom such as nitrogen, oxygen, silicon, phosphorous, boron, sulfur, or a halogen atom. These substituents include hydroxy, nitro, amino, amido, nitro, cyano, sulfoxide, thiol, thioester, thioether, ester and ether, or any other substituent which can increase the compatibility of the surfactant and/or its efficacy enhancement in the potassium glyphosate formulation without adversely affecting the storage stability of the formulation.

The terms "halogen" or "halo" as used herein alone or as part of another group refer to chlorine, bromine, fluorine, and iodine. Fluorine substituents are often preferred in surfactant compounds.

Unless otherwise indicated, the term "hydroxyalkyl" includes alkyl groups substituted with at least one hydroxy group, and includes bis(hydroxyalkyl)alkyl, tris(hydroxyalkyl)alkyl and poly(hydroxyalkyl)alkyl groups. Preferred hydroxyalkyl groups include hydroxymethyl (-CH₂OH), and hydroxyethyl (-C₂H₄OH), bis(hydroxymethyl)methyl (-CH(CH₂OH)₂), and tris(hydroxymethyl)methyl (-C(CH₂OH)₃).

The term "cyclic" as used herein alone or as part of another group denotes a group having at least one closed ring, and includes alicyclic, aromatic (arene) and heterocyclic groups.

The terms "heterocyclo" or "heterocyclic" as used herein alone or as part of another group denote optionally substituted, fully saturated or unsaturated, monocyclic or bicyclic, aromatic or nonaromatic groups having at least one heteroatom in at least one ring, and preferably 5 or 6 atoms in each ring. The heterocyclo group preferably has 1 or 2 oxygen atoms, 1 or 2 sulfur atoms, and/or 1 to 4 nitrogen atoms in the ring, and may be bonded to the remainder of the molecule through a carbon or heteroatom. Exemplary heterocyclo include heteroaromatics such as furyl, thienyl, pyridyl, oxazolyl, pyrrolyl, indolyl, quinolinyl, or isoquinolinyl and the like, and non-aromatic heterocyclics such as tetrahydrofuryl, tetrahydrothienyl, piperidinyl, pyrrolidino, etc. Exemplary substituents include one or more of the following groups: hydrocarbyl, substituted hydrocarbyl, keto, hydroxy, protected hydroxy, acyl, acyloxy, alkoxy, alkenoxy, alkynoxy, aryloxy, halogen, amido, amino, nitro, cyano, thiol, thioester, thioether, ketal, acetal, ester and ether.

The term "heteroaromatic" as used herein alone or as part of another group denote optionally substituted aromatic groups having at least one heteroatom in at least one ring, and preferably 5 or 6 atoms in each ring. The heteroaromatic group preferably has 1 or 2 oxygen atoms, 1 or 2 sulfur atoms, and/or 1 to 4 nitrogen atoms in the ring, and may be bonded to the remainder of the molecule through a carbon or heteroatom. Exemplary heteroaromatics include furyl, thienyl, pyridyl, oxazolyl, pyrrolyl, indolyl, quinolinyl, or isoquinolinyl and the like. Exemplary substituents include one or more of the following groups: hydrocarbyl, substituted hydrocarbyl, keto, hydroxy, protected hydroxy, acyl, acyloxy, alkoxy, alkenoxy, alkynoxy, aryloxy, halogen, amido, amino, nitro, cyano, thiol, thioether, thioester, ketal, acetal, ester and ether.

The term "acyl," as used herein alone or as part of another group, denotes the moiety formed by removal of the hydroxyl group from the group -COOH of an organic carboxylic acid, e.g., RC(O)-, wherein R is R¹, R¹O-, R¹R²N-, or R¹S-, R¹ is hydrocarbyl, heterosubstituted hydrocarbyl, or heterocyclo and R² is hydrogen, hydrocarbyl or substituted hydrocarbyl.

The term "acyloxy," as used herein alone or as part of another group, denotes an acyl group as described above bonded through an oxygen linkage (-O-), e.g., RC(O)O- wherein R is as defined in connection with the term "acyl."

When a maximum or minimum "average number" is recited herein with reference to a structural feature such as oxyethylene units or glucoside units, it will be understood by those skilled in the art that the integer number of such units in individual molecules in a surfactant preparation typically varies over a range that can include integer numbers greater than the maximum or smaller than the minimum "average number." The presence in a composition of individual surfactant molecules having an integer number of such units outside the stated range in "average number" does not remove the composition from the scope of the present invention, so long as the "average number" is within the stated range and other requirements are met.

By "storage-stable," in the context of a liquid concentrate of the invention, is meant not exhibiting phase separation on exposure to temperatures up to about 50 °C for 14-28 days, and preferably not forming crystals of glyphosate or salt thereof on exposure to a temperature of about 0 °C for a period of up to about 7 days (i.e., the composition must have a crystallization point of 0 °C or lower). For aqueous solution concentrates, high temperature storage stability is often indicated by a cloud point of about 50 °C or more. Cloud point of a composition is normally determined by heating the composition until the solution becomes cloudy, and then allowing the composition to cool, with agitation, while its temperature is continuously monitored. A temperature reading taken when the solution clears is a measure of cloud point. A cloud point of 50 °C or more is normally considered acceptable for most commercial purposes for a glyphosate aqueous solution concentrate. Ideally the cloud point should be 60 °C or more, and the composition should withstand temperatures as low as about -10 °C for up to about 7 days without crystal growth, even in the presence of seed crystals of the glyphosate salt.

As used herein, the term "surfactant" is intended to include a wide range of adjuvants that can be added to herbicidal glyphosate compositions to enhance the herbicidal efficacy thereof, as compared to the activity of the glyphosate salt in the absence of such adjuvant, stability, formulability or other beneficial solution property, irrespective of whether such adjuvant meets a more traditional definition of "surfactant."

### EXAMPLES

The Examples will permit better understanding of the invention and perception of its advantages and certain variations of execution.

Spray compositions of the Examples contained an exogenous chemical, such as glyphosate potassium salt, in addition to the excipient ingredients listed. The amount of exogenous chemical was selected to provide the desired rate in grams per hectare (g/ha) when applied in a spray volume of 93 l/ha. Several exogenous chemical rates were applied for each composition. Thus, except where otherwise indicated, when spray compositions were tested, the concentration of exogenous chemical varied in direct proportion to exogenous chemical rate, but the concentration of excipient ingredients was held constant across different exogenous chemical rates.

Concentrate compositions were tested by dilution, dissolution or dispersion in water to form spray compositions. In these spray compositions prepared from concentrates, the concentration of excipient ingredients varied with that of exogenous chemical.

In the following Examples illustrative of the invention, greenhouse and field tests were conducted to evaluate the relative herbicidal effectiveness of glyphosate compositions. The Examples, unless otherwise indicated, represent greenhouse tests. Compositions included for comparative purposes may be identified as follows:

| Composition | Formulation |
|---|---|
| Roundup® Ultra | Roundup® Ultra (Dry) |
| Composition 570I | 570 g/l of glyphosate IPA salt in aqueous solution with no added surfactant |
| Composition 390K | 391 g a.e./l of glyphosate potassium salt in aqueous solution with monoethoxylated amine surfactant |
| Composition 360I | 360 g a.e./ of glyphosate IPA salt in aqueous solution together with a surfactant system as described in U.S. Patent No. 5,652,197 |
| Composition 480I | 480 g a.e./l of glyphosate IPA salt in aqueous solution, together with 120 g/l of ethoxylated etheramine surfactant |
| Composition 450IS | 450 g a.e./ of glyphosate IPA salt in aqueous solution together with an etheramine surfactant as described in U.S. Patent No. 5,750,468 |
| Composition 487K | 487 g a.e./l of glyphosate potassium salt in aqueous solution, together with 65 g/l of ceteth(2PO)(9EO) alcohol alkoxylate, 97 g/l ethoxylated (10EO) tallowamine and 85 g/l n-octylamine |
| Composition 41I | 41 % by weight of glyphosate IPA salt in aqueous solution, together with phosphate ester and tallow amine surfactants. This formulation is sold by Monsanto Company under the Roundup® Ultra trademark |
| Ultramax Dry | Roundup® UltraMax (Dry) |
| Composition AMM-GLY1S | Ammonium glyphosate salt (solid) with ethoxylated tallow amine su rfactant |
| Composition 540K | 540 g a.e. /I of glyphosate potassium salt in aqueous solution with etheramine surfactant |
| Composition 360I | 360 g a.e./l of glyphosate IPA salt in solution, together with 111 g/l ethoxylated quaternary surfactant based tallowamine with 25EO, 74 g/l polyoxyethylene 10 EO cetyl ether and 12 g/l myristyl dimethyl amineoxide |
| Composition 725K | 725 g/l of glyphosate potassium salt in aqueous solution with no added surfactant |
| Composition 540KS | 540 g a.e./l of glyphosate potassium salt in solution, together with 135 g/l of ethoxylated etheramine surfactant (M121) |
| Composition 450I | 450 g a.e./l of glyphosate IPA salt in aqueous solution, together with 168 g/l of phosphate ester and phosphate diester surfactants as described in U.S. Patent No. 5,703,015 |
| Composition AMM-GLY2S | 91 % ammonium glyphosate salt (solid) |
| Composition IPA Dry | Glyphosate IPA (Dry) |
| Roundup® UltraMax | 50% by weight (445 g a.e./l) of glyphosate IPA salt in aqueous solution, together with surfactant, which is sold by Monsanto Company under the Roundup® UltraMax trademark |
| Composition 470K | 472 g a.e./l of glyphosate potassium salt in aqueous solution, together with 117 g/l cocoamine 5 EO, 52 g/l iso-stearyl alcohol 10 EO and 13 g/l cocoamine |
| Composition TD IQ | Touchdown IQ^{®}, which is an aqueous concentrate containing 28 wt.% a.e of the glyphosate diammonium salt, and 8 wt.% alkylpolyglucoside surfactant |
| Composition AMM-GLY3S | Dry formulation containing 72% Ammonium glyphosate and 21 % ethoxylated tallow amine (20EO). |
| Composition IPA-GLY | IPA glyphosate aqueous solution containing C₁₆₋₁₈ alcohol ethoxylate (20 EO), ethoxylated tallow amine (15 EO), cocoamidopropyldimethylamide, and tetrabutyl ammonium hydroxide |
| Composition 650A | Dry formulation with 65 wt% ammonium glyphosate and a 14 wt% surfactant loading containing ethoxylated (15EO)tallowdimethyl ammonium chloride and C₁₆₋₁₈ alcohol ethoxylate (20EO). |
| Composition 460I | 46% glyphosate IPA in aqueous solution with no added surfactant. |
| Composition 479K | 47.9% of glyphosate potassium salt in aqueous solution with no added surfactant |
| Composition 540KS | 40% potassium glyphosate with 6% tallow amine ethoxylate (10.5EO), 5% ethoxylated cocoamine (2EO) and 0.6% citric acid. |

Various excipients were used in compositions of the examples. They may be identified as follows:

| Ref. | Trade Name | Manufacturer | Chemical Description |
|---|---|---|---|
| S1 | M-T1415E13-2 | Tomah | C₁₄₋₁₅ alkyl-(EO)13-dimethylpropylamine |
| S2 | MEAA5 | Monsanto | C18NMe(EO)5.9H |
| S3 | MEAA11 | Monsanto | C18NMe(EO)11H |
| S4 | MEAA7.5 | Monsanto | C18NMe(EO)7.5H |
| S5 | Ethomeen C12 | Akzo | Ethoxylated cocoamine 2EO |
| S6 | T45E18PA | Tomah | C₁₄₋₁₅ EO 10 propyl amine |
| S7 | T45E18DA | Tomah | C₁₄₋₁₅ EO 10 propyl diamine |
| S8 | MEAA9.5 | Monsanto | C18NMe(EO)9.5H |
| S9 | MEAA11 | Monsanto | C18NMe(EO)11.1H |
| S10 | 1816E20PA | Tomah | ethoxylated (20 EO) cetyl/stearyl etheramine |
| S11 | 1816E10PA | Tomah | ethoxylated (10 EO) cetyl/stearyl etheramine |
| S12 | Witcamine 405 | Witco | PEG 5 tallow amine |
| S13 | 1816E15PA | Tomah | ethoxylated (15 EO) cetyl/stearyl etheramine |
| S14 | Arquad 12-37W | Akzo | dodecyl trimethyl ammonium chloride |
| S15 | | | A mixture of cationic tallowamines and phosphate esters as described in U.S. Patent No. 5,703,015 |
| S16 | 1816E10DA | Tomah | ethoxylated (10 EO) cetyl/stearyl ether dipropylamine |
| S17 | T45P3E10PA | Tomah | C₁₄₋₁₅ O(PO)3(EO) 10 propylamine |
| S18 | Armeen DMCD | Akzo | N,N-dimethylcocoamine |
| S19 | Ethomeen C15 | Akzo | Ethoxylated cocoamine 5EO |
| S20 | Ethomeen C25 | Akzo | Ethoxylated cocoamine (25)EO |
| S21 | C-6122 | Witco | Coco 2EO quat and branched PEG 7 C₁₂-₁₅ alcohol blend |
| S22 | Witconol IS 100 | Witco | PEG 10EO iso C₁₈ alcohol |
| S23 | Witcamine 305 | Witco | PEG 5EO cocoamine |
| S24 | Armeen C | Akzo | coco (C₁₂ -C₁₈ unsaturated) primary amine |
| S25 | Phos A-100 | Lambent | ethoxylated silicone phosphate ester |
| S26 | Phos A-150 | Lambent | ethoxylated silicone phosphate ester |
| S27 | Phos A-200 | Lambent | ethoxylated silicone phosphate ester |
| S28 | Amine PD | Lambent | branched silicone amine |
| S29 | Quat 400 M | Lambent | silicone quat |
| S30 | M-T25E9-2 | Tomah | C₁₂₋₁₅ PEG 9 (EO) dimethyl etheramine |
| S31 | Neodol 1-9 | Shell | PEG 9 C₁₁ alcohol |
| S32 | APG 2067 | Cognis | linear alkylpolyglucoside |
| S33 | Tryfac 5560-A TDA-6 | Cognis | PEG 6 isotridecyl phosphate ester |
| S34 | AV 01/37-2 | Clariant | monoethoxylated tallowamine (7EO) |
| S35 | AV 01/37-3 | Clariant | monoethoxylated tallowamine (15EO) |
| S36 | E-14-2 | Tomah | bis-(2-hydroxyethyl) isodecyloxypropyl amine |
| S37 | E-17-2 | Tomah | bis-(2-hydroxyethyl) isotridecyloxypropyl amine |
| S38 | E-19-2 | Tomah | bis-(2-hydroxyethyl) linear alkyloxypropyl amine |
| S39 | E-14-5 | Tomah | poly (5) oxyethylene isodecyloxypropyl amine |
| S40 | M-1618-E15-2 | Tomah | C₁₆₋₁₈ O(EO) 15 dimethypropyl amine |
| S41 | 5595-120A | Witco | C₁₂OPO₃ (EO)5 |
| S42 | Arosurf 66 E10 | Goldschmidt | PEG-10 Isostearyl ether |
| S43 | NA | Witco/ Crompton | Cocoquat 2 EO |
| S43 | Varonic K205 | Goldschmidt | polyoxyethylene(5)cocoamine, |
| S44 | Silwet L-77 | Witco/ Crompton | heptamethyltrisiloxane 7EO methyl ether |
| S45 | M-45P3E10-2 | Tomah | C₁₄₋₁₅ O(PO)3(EO) 10 dimethylpropylamine |
| S46 | T1415E18DA | Tomah | PEG 18 C₁₄₋₁₅ ether dipropyldiamine |
| S47 | APG 2069 | Cognis | alkylpolyglucoside |
| S48 | AG 6202 | Akzo Nobel | alkylpolyglucoside |
| S49 | AV 01/37-3 | Clariant | tallowamine ethoxylate 15 EO |
| S50 | Hetoxol CS20 | Global 7 | C₁₆₋₁₈ alcohol ethoxylate 20 EO |
| S51 | MEAA 13 | Monsanto | monoethoxylated alkylamine: C₁₈H₃₇NMe(13 EO)H |
| S52 | 1816P5E15PA | Tomah | C₁₆₋₁₈ propyl etheramine (5 PO)(15 EO) |
| S53 | HDTMH | Sigma | Hexadecyl trimethylammonium hydroxide |
| S54 | HDTMBr | Aldrich | Hexadecyl trimethylammonium bromide |
| S55 | 1816P5E15DA | Tomah | C₁₆₋₁₈ etherdiamine (5 PO)(15 EO) |
| S56 | M-T25E9-2 | Tomah | C₁₂₋₁₅ (9 EO) dimethyl etheramine |
| S57 | M-91P3E10-2 | Tomah | C₉₋₁₁ dimethyl etheramine (3 PO)(10 EO) |
| S58 | 91P3E10DA | Tomah | C9-11 (3 PO)(10 EO) ether diamine |
| S59 | BTAH | Aldrich | Benzyltrimethylammonium hydroxide |
| S60 | BTACI | Aldrich | Benzyltrimethylammonium chloride |
| S61 | Neodol 23-5 | Shell | C12-15 ethoxylated (5 EO) alcohol |
| S62 | Mackine 101 | Mcintyre | Cocoaminodipropyl dimethylamine |
| S63 | Hetoxol CAW | Global 7 | C₁₆ alcohol alkoxylate (5 PO)(20 EO) |
| S64 | C91P3E10PA | Tomah | C₉₋₁₁ alkoxylated propylamine (3 PO)(10 EO) |
| S65 | Surfonic™ AGM-550 | Huntsman | C₁₂₋₁₄ alkoxylated (1 PO) propylamine (5EO) ethoxylate |
| S66 | M-1816E15-2 | Tomah | C16-18 PEG 15 (EO) dimethyl etheramine |
| S67 | PF 8000 | Witco | ethoxylated phosphate ester |
| S68 | TBAH | Sigma | Tetrabutylammonium hydroxide |
| S69 | AV 01/63-3 | Clariant | tallowamine ethoxylate (15EO) |
| S70 | Ethomeen T25 | Akzo | Ethoxylated (15) tallow alkyl amine |
| S71 | NA | Witco | C₁₆₋₁₈ alcohol ethoxylate (20EO) |
| S72 | Surfonic L68-20X | Huntsman | C₁₆₋₁₈ alcohol ethoxylate (20EO) |
| S73 | Hetoxol CAWS | Global 7 | C₁₆ alcohol alkoxylate (POS)(EO20) |
| S74 | Agnique DF 6889 | Cognis | Antifoam silicone mixture |
| S75 | FloMo 1407 | Witco/ Crompton | Ethoxylated tallow amine 20EO |
| S76 | Surfonic T-15 | Huntsman | PEG 15 tallow amine |
| S77 | Witcamine Tam 150 | Witco | PEG 15 tallow amine |
| S78 | AV 01/63-2 | Clariant | monoethoxylated tallowamine 15EO |
| S79 | AGM 550 | Huntsman | PEG 5 etheramine |
| S80 | AV 01/96-2 | Clariant | monoethoxylated cocoamine (7EO) |
| S81 | AV 01/275-2 | Clariant | monoethoxylated stearylamine (11 EO) |
| S82 | 5595-125B | Witco | C₁₂₋₁₄ alcohol ethoxylate (1.5PO)(8EO) |
| S83 | Witcamine TAM 105 | Witco | tallow amine ethoxylate (10.5EO) |
| S84 | Ethoquad T25 | Akzo Nobel | tallow ethoxylate (15EO) quaternary ammonium chloride |
| S85 | Brij 56 | Sigma | stearyl alcohol ethoxylate (10EO) |
| S86 | Emulgin L | Cognis | cetereth propoxylate(2PO) ethoxylate (9EO) |
| S87 | NA | Sigma | tetrahydrofurfuryl alcohol |
| S88 | Ammonyx SC 1485 | Albemarle | myristyl dimethyl amine oxide |
| S89 | Isopar L | Exxon | paraffinic oil |
| S90 | AV 01/271-2 | | monoethoxylated tallow amine (11 EO) |
| S91 | | | cocodimethyl ammonium chloride |

The following procedure was used for testing compositions of the Examples to determine herbicidal effectiveness, except where otherwise indicated.

Seeds of the plant species indicated were planted in 85 mm square pots in a soil mix which was previously steam sterilized and prefertilized with a 14-14-14 NPK slow release fertilizer at a rate of 3.6 kg/m3. The pots were placed in a greenhouse with sub-irrigation. About one week after emergence, seedlings were thinned as needed, including removal of any unhealthy or abnormal plants, to create a uniform series of test pots.

The plants were maintained for the duration of the test in the greenhouse where they received a minimum of 14 hours of light per day. If natural light was insufficient to achieve the daily requirement, artificial light with an intensity of approximately 475 microeinsteins was used to make up the difference. Exposure temperatures were not precisely controlled but averaged about 27 °C during the day and about 18 °C during the night. Plants were sub-irrigated throughout the test to ensure adequate soil moisture levels.

Pots were assigned to different treatments In a randomized experimental design with 6 replications. A set of pots was left untreated as a reference against which effects of the treatments could later be evaluated.

Application of glyphosate compositions was made by spraying with a track sprayer fitted with a 9501 E nozzle calibrated to deliver a spray volume of 93 liters per hectare (l/ha) at a pressure of 166 kilopascals (kPa). After treatment, pots were returned to the greenhouse until ready for evaluation.

Treatments were made using dilute aqueous compositions. These could be prepared as spray compositions directly from their Ingredients, or by dilution with water of preformulated concentrate compositions.

For evaluation of herbicidal effectiveness, all plants in the test were examined by a single practiced technician, who recorded percent control, a visual measurement of the effectiveness of each treatment by comparison with untreated plants. Control of 0% indicates no effect, and control of 100% indicates that all of the plants are completely dead. Control of 85% or more is in most cases considered acceptable for normal herbicide use; however in greenhouse tests such as those for the examples it is normal to apply compositions at rates which give less than 85% control, as this makes it easier to discriminate among compositions having different levels of effectiveness. The reported % control values represent the average for all replicates of each treatment.

### EXAMPLE 20

The effect of oxalic acid and aminated alkoxylated alcohols of formulae (9) in ammonium glyphosate solid formulations was evaluated. Comparative solid formulations of commercial standards were also prepared. Ammonium glyphosate concentrations for compositions 664A4D and 664C6G were 71% a.e., and 664B5T was 65% a.e. Oxalic acid and ammonium sulfate were added to ammonium glyphosate, to which solvents were then added. Melted surfactant was then added. The composition was mixed in a blender and extruded. The extrudate grains were dried at 50 °C for 10 minutes. The material was then sieved to obtain the required grain size.

**Table 20a**

| Composition | Component 1 | wt% | Component 2 | wt % | Component 3 | wt% |
|---|---|---|---|---|---|---|
| 664A4D | S64 | 10 | S61 | 2 | Oxalic Acid | 8 |
| 664B5T | S13 | 8 | S63 | 8 | Ammonium SO₄ | 10 |
| 664C6G | S62 | 10 | S61 | 2 | Oxalic Acid | 8 |

The compositions of Table 20a and comparative compositions of Composition AMM-GLY2S , Composition 5701 and Roundup UltraMax were applied to velvetleaf (Abutilon theophrasti, ABUTH) plants. The average results of each treatment, are shown in Table 20b.

**Table 20b ABUTH% Control 16 days after treatment**

| Composition | 75 g a.e./ha | 100 g a.e./ha | 200 g a.e./ha | 400 g a.e./ha |
|---|---|---|---|---|
| 664A4D | 80 | 81.7 | 96.5 | 99.5 |
| 66485T | 75 | 76.7 | 91.7 | 98.5 |
| 664C6G | 80 | 82.5 | 90.8 | 99.3 |
| Composition IPA Dry | 79.2 | 80 | 93 | 99.5 |
| Composition 470K | 40.8 | 55 | 75 | 90.8 |
| Composition AMM-GLY1 S | 34.2 | 42.5 | 80.8 | 94.5 |
| Roundup Ultra | 75 | 81.7 | 95 | 98.5 |
| Roundup UltraMax Dry | 57.5 | 67.5 | 82.5 | 95.5 |
| Composition AMM-GLY2S | 0 | 8.3 | 50.8 | 79.2 |
| Composition 5701 | 6.7 | 19.2 | 57.5 | 80 |
| Roundup UltraMax | 56.7 | 60.8 | 81.7 | 93.8 |

The three compositions each had higher efficacy than did comparative dried commercial standards.

### EXAMPLE 21

The effect of oxalic acid and an oxalic acid salt on monoethoxylated alkylamine surfactants alone or in combination with an alcohol ethoxylate surfactant in ammonium glyphosate formulations was evaluated. The molar ratio of oxalate:monoethoxylated alkylamine surfactant in each composition was at least 10:1. Glyphosate concentrations for each composition were 62 g a.e. per liter. All components were added and the composition was agitated in a shaker batch for 1 hour at 60 °C. 24 hours after cooling to RT all samples were stable, clear and slightly yellow.

**Table 21a**

| Composition | Component 1 | wt % | Component 2 | wt % | Component 3 | wt % |
|---|---|---|---|---|---|---|
| 071A5V | S51 | 1.1 | ----- | ----- | ----- | ----- |
| 071B7H | S51 | 0.8 | S50 | 0.3 | ----- | ----- |
| 071C3S | S51 | 1.1 | ----- | ----- | Oxalic Acid | 0.9 |
| 071DOL | S51 | 0.8 | S50 | 0.3 | Oxalic Acid | 0.9 |
| 071E1M | S51 | 0.6 | S50 | 0.4 | ----- | ----- |
| 071 F5W | S51 | 0.6 | S50 | 0.4 | Oxalic Acid | 0.9 |
| 071G4B | S51 | 1.1 | ----- | ----- | NH₄ Oxalate | 0.9 |
| 071H9M | S51 | 0.6 | S50 | 0.4 | NH₄ Oxalate | 0.9 |
| 07116B | S51 | 1.1 | ----- | ----- | ----- | ----- |
| 071J5D | S51 | 0.7 | S50 | 0.5 | ----- | ----- |
| 071K6J | S51 | 1.1 | ----- | ----- | Oxalic Acid | 0.9 |
| 071L1K | S51 | 0.7 | S50 | 0.5 | Oxalic Acid | 0.9 |
| 071M3X | S51 | 1.2 | ----- | ----- | ----- | ----- |
| 071N7U | S51 | 0.7 | S50 | 0.5 | ----- | ----- |
| 071O2W | S51 | 1.2 | ----- | ----- | Oxalic Acid | 0.8 |
| 071P9G | S51 | 0.7 | S50 | 0.5 | Oxalic Acid | 0.8 |
| 071Q1A | S49 | 1.1 | ----- | ----- | ----- | ----- |
| 071R5V | S49 | 0.9 | S50 | 0.2 | ----- | ----- |
| 071T6N | S49 | 0.9 | S50 | 0.2 | Oxalic Acid | 0.9 |
| 071U8M | S49 | 0.8 | S50 | 0.3 | ----- | ----- |
| 071V3Y | S49 | 0.8 | S50 | 0.3 | Oxalic Acid | 0.9 |
| 071W2X | S49 | 0.6 | S50 | 0.4 | ----- | ----- |
| 071XOD | S49 | 0.6 | S50 | 0.4 | Oxalic Acid | 0.9 |
| 071Z2C | S49 | 0.6 | S50 | 0.4 | NH₄ Oxalate | 0.9 |
| 071AA2N | S49 | 1.1 | ----- | ----- | ----- | ----- |
| 071AB7H | S49 | 0.9 | S50 | 0.3 | ----- | ----- |
| 071AD4N | S49 | 0.9 | S50 | 0.3 | Oxalic Acid | 0.9 |
| 071AE3F | S49 | 0.7 | S50 | 0.5 | ----- | ----- |
| 071AF7B | S49 | 0.7 | S50 | 0.5 | Oxalic Acid | 0.9 |
| 071AG8O | S49 | 1.2 | ----- | ----- | ----- | ----- |
| 071AH6X | S49 | 0.7 | S50 | 0.5 | ----- | ----- |
| 071AJ1Q | S49 | 0.7 | S50 | 0.5 | Oxalic Acid | 0.8 |

The compositions of Table 21 a and comparative compositions of Composition AMM-GLY2S , Composition AMM-GLY1S and Roundup UltraMax were applied to velvetleaf (Abutilon theophrasti, ABUTH) plants, and some of the Table 21 a compositions were applied to Japanese millet (Echinochloa crus-galli var. frumentae, ECHCF) plants. Results, averaged for all replicates of each treatment, are shown in Tables 21 b and 21 c.

**Table 21b ABUTH% Control 15 days after treatment**

| Composition | 75 g a.e./ha | 100 g a.e./ha | 200 g a.e./ha | 400 g a.e./ha |
|---|---|---|---|---|
| 071A5V | 35 | 37.5 | 81.7 | 93.2 |
| 071B7H | 20.8 | 47.5 | 83.3 | 95.3 |
| 071C3S | 65 | 71.7 | 93 | 98.5 |
| 071DOL | 81.7 | 85 | 93.3 | 99.2 |
| 071E1M | 70.8 | 75 | 84.2 | 95.5 |
| 071F5W | 83.3 | 88.3 | 90.7 | 99.7 |
| 071G4B | 80 | 83.3 | 91.3 | 99.5 |
| 071H9M | 80 | 85.8 | 93.5 | 99.3 |
| 07116B | 15.8 | 39.2 | 82.5 | 92.5 |
| 071J5D | 25.8 | 72.5 | 85.8 | 96.3 |
| 071K6J | 80 | 85 | 90 | 96.5 |
| 071L1K | 81.7 | 86.7 | 90 | 97.5 |
| 071M3X | 30 | 61.7 | 86.7 | 91.7 |
| 071N7U | 36.7 | 64.2 | 88.3 | 96.5 |
| 071O2W | 80 | 85 | 91.7 | 96.5 |
| 071P9G | 84.2 | 85 | 92.5 | 98.5 |
| 071Q1A | 10 | 33.3 | 75 | 87.5 |
| 071R5V | 27.5 | 30 | 78.3 | 87.5 |
| 071T6N | 79.2 | 81.7 | 89.2 | 95.8 |
| 071U8M | 48.3 | 78.3 | 80 | 90.8 |
| 071V3Y | 84.2 | 85 | 90 | 96.7 |
| 071W2X | 47.5 | 68.3 | 83.3 | 92.2 |
| 071XOD | 82.5 | 82.5 | 91.7 | 98.7 |
| 071Z2C | 85.8 | 86.7 | 94.2 | 98.7 |
| 071AA2N | 24.2 | 52.5 | 80 | 88.3 |
| 071AB7H | 50 | 65.8 | 85 | 93.7 |
| 071AD4N | 84.2 | 87.5 | 92.5 | 98.7 |
| 071AE3F | 65.8 | 74.2 | 85.8 | 93 |
| 071AF7B | 81.7 | 86.7 | 94.2. | 99.2 |
| 071AG8O | 50 | 65 | 84.2 | 87.5 |
| 071AH6X | 55 | 64.2 | 85.8 | 94.7 |
| 071AJ1Q | 84.2 | 86.7 | 92.5 | 99.2 |
| Composition AMM-GLY2S | 0 | 0 | 50.8 | 78.5 |
| Composition AMM-GLY1 S | 0 | 28.1 | 75.2 | 87.8 |
| Roundup UltraMax | 14.2 | 53.3 | 82.1 | 91.6 |

The Hetoxol CS20 surfactant, with or without oxalic additions to the monoethoxylated alkyl amine surfactant, provided synergy. All compositions containing monoethoxylated alkyl amine surfactant with oxalic acid or NH₄ oxalate were superior to those without oxalate, and to the glyphosate standards.

**Table 21c ECHCF% Control 15 days after treatment**

| Composition | 75 g a.e./ha | 100 g a.e.lha | 200 g a.e./ha | 400 g a.e./ha |
|---|---|---|---|---|
| 071I6B | 20 | 57.5 | 75 | 85.5 |
| 071J5D | 25 | 52.5 | 72.5 | 88 |
| 071K6J | 9.2 | 50 | 67.5 | 75.8 |
| 071L1K | 32.5 | 59.2 | 75 | 89.7 |
| 071M3X | 45.8 | 59.2 | 70.8 | 83.3 |
| 071N7U | 40 | 50.8 | 70 | 83.3 |
| 07102W | 28.3 | 45 | 64.2 | 75 |
| 071P9G | 48.3 | 61.7 | 76.7 | 94.7 |
| Composition AMM-GLY2S | 0 | 5 | 35 | 60.8 |
| Composition AMM-GLY1S | 25 | 47.5 | 67.5 | 85 |
| Roundup UltraMax | 30 | 49.2 | 68.3 | 86.7 |

The Hetoxol CS20 and monoethoxylated alkyl amine surfactant combination with oxalic additions preformed best with efficacy superior to the glyphosate standards. The surfactant blend outperformed either surfactant Individually.

### EXAMPLE 27

The efficacy of high load potassium glyphosate formulations containing aminated alkoxylated alcohols of formulae (9) was evaluated. Aqueous concentrate compositions 609D4V and 609E8E were formulated with IPA glyphosate salt, all others were formulated with potassium glyphosate salt. Glyphosate concentrations are reported in g a.e. per liter. Oxalic acid was first dissolved in water, KOH and melted surfactant were added and potassium glyphosate was added last. The formulation was agitated in a shaker batch for 30 minutes at 60 °C. 24 hours after cooling to RT all samples were stable and clear with the exception of 609A8F which was stable and cloudy.

Formulation 609E8E, containing oxalic acid, gave the highest efficacy, including enhancement over formulation 609D4V, an analogous formulation not containing oxalic acid.

### EXAMPLE 44

The efficacy of oxalic acid with diethoxylated etheramine surfactants was evaluated. In Table 44a, aqueous dilute glyphosate compositions were prepared with potassium glyphosate salt. Glyphosate concentrations are reported in g a.e./liter. Oxalic acid was dissolved, potassium glyphosate added and surfactant added. Formulations were then agitated in a shaker batch for 30 minutes at 60 °C. 24 hours after cooling to RT all samples were stable, clear and yellow.

**Table 44a.**

| Composition | Glyphosate g/l | Component 1 | w/v% | Component 2 | w/v% |
|---|---|---|---|---|---|
| 615A4F | 484.4 | S36 | 12.0 | | |
| 615B9K | 484.4 | S36 | 12.0 | Oxalic acid | 1.5 |
| 615C7S | 62.7 | S37 | 2.0 | | |
| 615D1B | 62.5 | S37 | 2.0 | Oxalic acid | 0.25 |
| 615E51 | 62.6 | S38 | 2.0 | | |
| 615F5A | 62.5 | S38 | 2.0 | Oxalic acid | 0.25 |
| 615G8Y | 62.7 | S39 | 2.0 | | |
| 615H5W | 62.7 | S39 | 2.0 | Oxalic acid | 0.25 |

The compositions of Table 44a, Composition 725K, Composition 5701 and Roundup UltraMax, were applied to velvetleaf (Abutilon theophrasti, ABUTH) plants. Results, averaged for all replicates of each treatment, are shown in Table 44b.

**Table 44b ABUTH %inhibition 14 days after treatment**

| Composition | 100 g a.e./ha | 200 g a.e./ha | 300 g a.e./ha | 400 g a.e./ha |
|---|---|---|---|---|
| 615A4F | 7.5 | 75.8 | 90 | 89.2 |
| 615B9K | 78.3 | 88.3 | 94.2 | 94.5 |
| 615C7S | 65 | 84.2 | 90 | 90.8 |
| 615D1B | 74.2 | 90 | 92.5 | 92.5 |
| 615E5I | 40 | 84.2 | 89.2 | 90 |
| 615F5A | 68.3 | 89.2 | 92.5 | 92.5 |
| 615G8Y | 32.5 | 75 | 88.3 | 90.8 |
| 615H5W | 65.8 | 85.8 | 91.3 | 92.5 |
| Composition 725K | 0 | 40 | 78.3 | 82.5 |
| Composition 570I | 8.3 | 70.8 | 80 | 84.2 |
| Roundup UltraMax | 39.2 | 81.7 | 90 | 92.5 |

Oxalic acid enhanced velvetleaf efficacy for the tested etheramine surfactants. Performance was similar for all of the surfactants and each exceeded the efficacy of the Roundup UltraMax standard in velvetleaf control at a 24:1 glyphosate a.e. to oxalic acid ratio.

The S36-containing formulation without oxalic acid gave the weakest performance, but was one of the strongest performers when oxalic acid was added.

### EXAMPLE 45

The efficacy effect of oxalic acid with diethoxylated etheramine surfactants was evaluated. In Table 45a aqueous concentrate compositions were prepared with potassium glyphosate salt. Glyphosate concentrations are reported in g a.e./liter. Oxalic acid was dissolved, potassium glyphosate added, and melted surfactant added. Formulations were then agitated in a shaker batch for 30 minutes at 60 °C. 24 hours after cooling to RT all samples were stable, clear and yellow except for 392H8U which was unstable, hazy and separated.

**Table 45a**

| Composition | Glyphosate g/l | Component 1 | w/v% | Component 2 | w/v% |
|---|---|---|---|---|---|
| 392A0L | 484.4 | S36 | 10.0 | ----- | ----- |
| 392B2S | 488.1 | S36 | 10.0 | Oxalic acid | 1.2 |
| 392C5T | 62.7 | S37 | 1.63 | ----- | ----- |
| 392D2K | 62.9 | S37 | 1.63 | Oxalic acid | 0.2 |
| 392E5C | 62.5 | S38 | 1.63 | ----- | ----- |
| 392F9V | 62.5 | S38 | 1.63 | Oxalic acid | 0.2 |
| 392G1D | 488.1 | S39 | 10.0 | ----- | ----- |
| 392H8U | 488.1 | S39 | 10.0 | Oxalic acid | 1.2 |

The compositions of Table 45a, Composition 725K, Composition 570I and Roundup UltraMax. were applied to velvetleaf (Abutilon theophrasti, ABUTH) plants. Results, averaged for all replicates of each treatment, are shown in Table 45b.

**Table 45b ABUTH %Inhibition 14 days after treatment**

| Composition | 100 g a.e./ha | 200 g a.e./ha | 300 g a.e./ha | 400 g a.e./ha |
|---|---|---|---|---|
| 392A0L | 52.5 | 80 | 88 | 90.8 |
| 392B2S | 56.5 | 85 | 90.8 | 92.5 |
| 392C5T | 68.3 | 83.3 | 90 | 93 |
| 392D2K | 86.3 | 91.7 | 96.3 | 98.2 |
| 392E5C | 54.2 | 80.8 | 87.5 | 90.8 |
| 392F9V | 83 | 84.2 | 88.3 | 90.8 |
| 392G1D | 50 | 80 | 85.8 | 89.2 |
| 392H8U | 86.3 | 88.3 | 92.5 | 96.3 |
| Composition 725K | 0 | 19.2 | 60.8 | 70.8 |
| Composition 5701 | 10 | 51.7 | 78.3 | 82.5 |
| Roundup UltraMax | 50 | 82.5 | 90.8 | 92.5 |

Etheramlne formulations containing oxalic acid gave higher efficacy than analogous formulations without oxalic acid and performance exceeded the Roundup UltraMax standard. The PEG 2 iso C₁₃ ether propylamine with oxalic acid provided the greatest efficacy.

### EXAMPLE 51

The efficacy of oxalic acid on EO chain length in high load potassium glyphosate formulations was evaluated. Aqueous concentrate compositions were prepared containing potassium glyphosate salt, reported in g a.e./liter, and excipient ingredients as shown in Table 51 a.

**Table 51a**

| Composition | Glyphosate g/l | Component 1 | g/l | Component 2 | g/l | Component 3 | g/l |
|---|---|---|---|---|---|---|---|
| 024A1V | 485 | S2 | 131 | S5 | 65 | ----- | ----- |
| 024B7N | 485 | S3 | 91 | S5 | 91 | ----- | ----- |
| 024C7B | 485 | S3 | 65 | S5 | 65 | S2 | 65 |
| 024D3K | 485 | S3 | 78 | S5 | 52 | S2 | 65 |
| 024E4J | 485 | S3 | 91 | S5 | 91 | Oxalic Acid | 13 |
| 015A0P | 391 | S4 | 131 | ----- | ----- | ----- | ----- |

The compositions of Table 51 a and comparative compositions of Composition 725K , Composition 570I, Roundup UltraMax and Composition 41I were applied to velvetleaf (Abutilon theophrasti, ABUTH) and Japanese millet (Echinochloa crus-galli var. frumentae, ECHCF) plants. Results, averaged for all replicates of each treatment, are shown in Tables 51 b and 51 c.

**Table 51b ABUTH % Inhibition 15 days after treatment**

| Composition | 100 g a.e./ha | 200 g a.e./ha | 300 g a.e./ha | 400 g a.e./ha |
|---|---|---|---|---|
| 024A1V | 15.8 | 76.7 | 83.3 | 84.2 |
| 024B7N | 40 | 80.8 | 86.7 | 88.3 |
| 024C7B | 0 | 0 | 1.7 | 1.7 |
| 024D3K | 29.2 | 80.8 | 82.5 | 90 |
| 024E4J | 75 | 82.5 | 91.7 | 92.5 |
| 015A0P | 55 | 80 | 86.7 | 89.2 |
| Composition 725K | 0 | 15 | 73.3 | 75.8 |
| Composition 570I | 0.8 | 20 | 71.7 | 80.8 |
| Roundup UltraMax | 45.8 | 80.8 | 87.5 | 90 |
| Composition 41I | 33.3 | 81.7 | 87.5 | 90.8 |

**TABLE 51c ECHCF % Inhibition 15 days after treatment**

| Composition | 100 g a.e./ha | 200 g a.e./ha | 300 g a.e./ha | 400 g a.e./ha |
|---|---|---|---|---|
| 024A1V | 35 | 51.7 | 65 | 72.5 |
| 024B7N | 46.7 | 53.3 | 62.5 | 69.2 |
| 024C7B | 0 | 0 | 1.7 | 1.7 |
| 024D3K | 38.3 | 55.8 | 70 | 77.5 |
| 024E4J | 50 | 55 | 75.8 | 79.2 |
| 015A0P | 48.3 | 54.2 | 59.2 | 68.3 |
| Composition 725K | 1.7 | 20 | 45 | 47.5 |
| Composition 570I | 1.7 | 40 | 50 | 53.3 |
| Roundup UltraMax | 21.7 | 54.2 | 65 | 73.3 |
| Composition 41I | 39.2 | 56.7 | 68.3 | 72.5 |

Formulation 024E4J, containing oxalic acid with Monoethoxylated alkylamine 11 EO and Ethomeen C12 provided the highest herbicidal efficacy on ABUTH and ECHCF. Other formulations gave efficacy similar to that of the glyphosate standards. Formulation 024C7B was atypical and became cloudy upon aqueous dilution, and showed no significant level of herbicidal activity.

### EXAMPLE 52

The effect of oxalic acid on the efficacy of monoethoxylated amine surfactants of varying EO chain length in high load potassium glyphosate was evaluated. Aqueous concentrate compositions were prepared containing potassium glyphosate salt, reported in g a.e. per liter, and excipient ingredients as shown in Table 52a.

**Table 52a**

| Composition | Glyphosate g/l | Component 1 | g/l | Component 2 | g/l | Component 3 | g/l |
|---|---|---|---|---|---|---|---|
| 023A6G | 485 | S8 | 105 | S4 | 92 | ----- | ----- |
| 023B6U | 486 | S8 | 118 | S4 | 92 | ----- | ----- |
| 023C0P | 487 | S9 | 92 | S4 | 92 | ----- | ----- |
| 023D4R | 489 | S9 | 92 | S4 | 92 | oxalic acid | 13.2 |
| 023E6C | 480 | S9 | 104 | S4 | 91 | ----- | ----- |
| 023F6Y | 391 | S4 | 121 | ----- | ----- | oxalic acid | 7.3 |
| 015Y7N | 391 | S4 | 121 | ----- | ----- | ----- | ----- |

The compositions of Table 52a and comparative compositions of Composition 725K, Composition 5701, Roundup UItraMax and Composition 41I were applied to velvetleaf (Abutilon theophrasti, ABUTH) and Japanese millet (Echinochloa crus-galli var. frumentae, ECHCF) plants. Results, averaged for all replicates of each treatment, are shown in Tables 52b and 52c.

**Table 52b ABUTH % Inhibition 14 days after treatment**

| Composition | 100 g a.e./ha | 200 g a.e./ha | 300 g a.e./ha | 400 g a.e./ha |
|---|---|---|---|---|
| 023A6G | 21.7 | 56.7 | 76.7 | 84.2 |
| 023B6U | 25.8 | 63.3 | 77.5 | 83.3 |
| 023C0P | 14.2 | 54.2 | 76.7 | 81.7 |
| 023D4R | 36.7 | 61.7 | 80.8 | 87.5 |
| 023E6C | 34.2 | 50.8 | 76.7 | 80.8 |
| 023F6Y | 45.8 | 71.7 | 88.3 | 88.3 |
| 015Y7N | 34.2 | 68.3 | 82.5 | 86.7 |
| Composition 725K | 1.7 | 20 | 52.5 | 60.8 |
| Composition 570I | 3.3 | 24.2 | 52.5 | 58.3 |
| Roundup UltraMax | 10 | 60 | 77.5 | 86.7 |
| Composition 41I | 20.8 | 60 | 76.7 | 86.7 |

**Table 52c ECHCF % Inhibition 14 days after treatment**

| Composition | 100 g a.e./ha | 200 g a.e./ha | 300 g a.e./ha | 400 g a.e./ha |
|---|---|---|---|---|
| 023A6G | 50 | 68.3 | 75.8 | 81.7 |
| 023B6U | 42.5 | 67.5 | 75 | 88.3 |
| 023C0P | 39.2 | 70 | 73.3 | 83.3 |
| 023D4R | 41.7 | 69.2 | 75 | 80.8 |
| 023E6C | 51.7 | 67.5 | 73.3 | 80.8 |
| 023F6Y | 46.7 | 67.5 | 69.2 | 79.2 |
| 015Y7N | 51.7 | 66.7 | 69.2 | 80 |
| Composition 725K | 2.5 | 11.7 | 27.5 | 37.5 |
| Composition 570I | 6.7 | 16.7 | 43.3 | 50 |
| Roundup UltraMax | 42.5 | 61.7 | 43.3 | 50 |
| Composition 41I | 50 | 69.2 | 77.5 | 84.2 |

Due to testing error formulations, 023F6Y and 015Y7N were overapplied by 10%. Testing indicates no efficacy difference between formulations with Monoethoxylated alkylamine surfactants with 9.5 EO and 11 EO.

### EXAMPLE 53

The efficacy effect of oxalic acid with surfactant blends in high load potassium glyphosate formulations were evaluated. Aqueous concentrate compositions were formulated with potassium glyphosate salt. Glyphosate concentrations are reported in g a.e. per liter.

**Table 53a**

| Composition | Glyphos ate g/l | Component 1 | wt % | Component 2 | wt % | Component 3 | wt % |
|---|---|---|---|---|---|---|---|
| 388A6B | 487 | S21 | 12.0 | ----- | ----- | ----- | ----- |
| 388B5N | 490 | S21 | 10.0 | Oxalic acid | 1.2 | KOH | 1.0 |
| 388C5T | 486 | S21 | 10.0 | S22 | 2.0 | ----- | ----- |
| 388D9J | 544 | S21 | 13.0 | ----- | ----- | ----- | ----- |
| 388E0A | 548 | S21 | 10.0 | Oxalic acid | 1.0 | KOH | 0.45 |
| Composition 470K | 472 | S23 | 9.0 | S22 | 4.0 | S24 | 1.0 |
| Composition 390K | 391 | S4 | 10.0 | ----- | ----- | ----- | ----- |

The compositions of Table 53a and comparative compositions of Composition 725K , Composition 5701 and Roundup UltraMax were applied to velvetleaf (Abutilon theophrasti, ABUTH) plants. Results, averaged for all replicates of each treatment, are shown in Table 53b.

**Table 53b ABUTH% Control 16 days after treatment**

| Composition | 100 g a.e./ha | 200 g a.e./ha | 300 g a.e./ha | 400 g a.e./ha |
|---|---|---|---|---|
| 388A6B | 0 | 5.8 | 54.2 | 79.2 |
| 388B5N | 2.5 | 60 | 83.3 | 90 |
| 388C5T | 0 | 13.3 | 70.8 | 81.7 |
| 388D9J | 0 | 4.2 | 56.7 | 74.2 |
| 388E0A | 0 | 32.5 | 78.3 | 85 |
| Composition 470K | 0 | 45 | 80 | 85 |
| Composition 390K | 11.7 | 76.7 | 87.5 | 89.2 |
| Composition 725K | 0 | 0 | 0.8 | 8.3 |
| Composition 5701 | 0 | 0 | 33.3 | 54.2 |
| Roundup UltraMax | 1.7 | 77.5 | 85 | 90 |

Formulations Composition 390K and Coco 2EO quat and branched PEG 7 C12 alcohol blend in combination with oxalic acid and KOH provided the highest efficacy.

### EXAMPLE 54

The effect of high load aminated alkoxylated alcohols of formulae (5) with commercial standards were evaluated. Aqueous concentrate compositions were formulated with potassium glyphosate salt. Glyphosate concentrations are reported in g a.e. per liter. Oxalic acid was dissolved, KOH and melted surfactant added followed by potassium glyphosate. Formulations were then agitated in a shaker batch for 30 minutes at 60 °C. 24 hours after cooling to RT all samples were stable and clear except for 607A8N which was stable and cloudy.

**Table 54a**

| Composition | Glyphosate g/l | Component 1 | wt% | Component 2 | wt% | Component 3 | wt % |
|---|---|---|---|---|---|---|---|
| 607A8N | 484.4 | S40 | 6.0 | S5 | 6.0 | ----- | ----- |
| 607B3E | 480.8 | S1 | 6.0 | S5 | 6.0 | ----- | ----- |
| 607C0R | 480.8 | S30 | 6.0 | S5 | 6.0 | Oxalic acid | 1.2 |
| 607D2C | 488.1 | S19 | 6.0 | S5 | 6.0 | ----- | ----- |
| 607E5G | 488.1 | S19 | 6.0 | S5 | 6.0 | Oxalic acid | 1.2 |
| 607F4K | 484.4 | S45 | 6.0 | S5 | 6.0 | ----- | ----- |
| 607G4W | 488.1 | S45 | 6.0 | S5 | 6.0 | Oxalic acid | 1.2 |
| Composition 470K | 472 | S42 | 4.0 | S43 | 9.0 | Armeen C | 1.0 |

Compositions 607C0R, 607E5g and 607G4W additionally contain 0.7 w/v% KOH.

The compositions of Table 54a and comparative compositions of Composition 725K , Composition 570I and Roundup UltraMax were applied velvetleaf (Abutilon theophrasti, ABUTH) plants. Results, averaged for all replicates of each treatment, are shown in Tables 54b.

**Table 54b ABUTH% Control 14 days after treatment**

| Composition | 100 g a.e./ha | 200 g a.e./ha | 300 g a.e./ha | 400 g a.e./ha |
|---|---|---|---|---|
| 607A8N | 76.7 | 83.3 | 96.2 | 97.5 |
| 607B3E | 55.8 | 80 | 90 | 95.5 |
| 607C0R | 76.7 | 87.5 | 97.5 | 97.8 |
| 607D2C | 30 | 79.2 | 87.5 | 94.3 |
| 607E5G | 82.5 | 85.8 | 98.8 | 97.2 |
| 607F4K | 64.2 | 80.8 | 90 | 94.2 |
| 607G4W | 85.8 | 89.2 | 94.7 | 99 |
| Composition 470K | 25.8 | 78.3 | 90 | 91.7 |
| Composition 725K | 11.7 | 31.7 | 75.8 | 77.5 |
| Roundup UltraMax | 62.5 | 83.3 | 90 | 96.5 |

The four high load formulations 607G4W, 607E5G , 607C0R and 607A8N gave higher efficacy that the Roundup UltraMax and Composition 470K standards. Oxalic acid increased the velvetleaf efficacy.

### EXAMPLE 55

The efficacy of the addition of oxalic acid to weak performing surfactants were evaluated relative to commercial standards. Aqueous concentrate compositions were formulated with potassium glyphosate salt. Glyphosate concentrations are reported in g a.e. per liter. Oxalic acid was dissolved, then potassium glyphosate and surfactant were added. Formulations were then agitated in a shaker batch for 30 minutes at 60 °C. 24 hours after cooling to RT all samples were stable, clear and yellow.

**Table 55a**

| Composition | Glyphosate g/l | Component 1 | wt% | Component 2 | wt% | Component 3 | wt % |
|---|---|---|---|---|---|---|---|
| 603A8U | 489.1 | S21 | 10.0 | Oxalic acid | 1.2 | ----- | ----- |
| 603B4Z | 492.8 | S21 | 10.0 | Oxalic acid | 1.2 | KOH | 1.2 |
| 603C8J | 496.4 | S21 | 10.0 | Oxalic acid | 1.2 | KOH | 1.2 |
| 603D2F | 489.1 | S21 | 10.0 | Oxalic acid | 1.6 | ----- | ----- |
| 603E5B | 496.4 | S21 | 10.0 | Oxalic acid | 1.6 | KOH | 1.2 |
| 603F1E | 491.8 | S5 | 10.0 | Oxalic acid | 2.5 | ----- | ----- |
| 603G7K | 536 | S5 | 7.0 | Oxalic acid | 2.0 | ----- | ----- |
| Composition 470K | 472 | S42 | 4.0 | S23 | 9.0 | S24 | 1.0 |

The compositions of Table 55a and comparative compositions of Composition 725K , Composition 5701 and Roundup UltraMax were applied to velvetleaf (Abutilon theophrasti, ABUTH) plants. Results, averaged for all replicates of each treatment, are shown in Tables 55b.

**Table 55b ABUTH% Control 14 days after treatment**

| Composition | 100 g a.e./ha | 200 g a.e./ha | 300 g a.e./ha | 400 g a.e./ha |
|---|---|---|---|---|
| 603A8U | 78.3 | 85.8 | 90 | 94 |
| 603B4Z | 75 | 83.3 | 90 | 94.8 |
| 603C8J | 80 | 87.5 | 87.5 | 98.5 |
| 603D2F | 45.8 | 82.5 | 89.2 | 93.2 |
| 603E5B | 42.5 | 84.2 | 89.2 | 90 |
| 603F1E | 70 | 84.2 | 86.7 | 90 |
| 603G7K | 80 | 80.8 | 85 | 93.3 |
| Composition 470K | 66.7 | 80 | 85 | 90 |
| Composition 725K | 0 | 43.3 | 71.7 | 78.3 |
| Composition 570I | 11.7 | 56.7 | 76.7 | 78.3 |
| Roundup UltraMax | 70 | 82.5 | 90 | 94.7 |

The efficacy of cocoquat 2EO + PEG 7 with added oxalic acid was equal to Roundup UltraMax and Composition 470K standards on velvetleaf.

### EXAMPLE 69

The efficacy effect of oxalic acid and ammonium sulfate on cationic:nonionic surfactant systems in dry ammonium glyphosate formulations was evaluated. Dry concentrate compositions were prepared containing ammonium glyphosate salt, excipient ingredients as in previous Example 20 and as shown in Table 20a were further applied to hemp sesbania (SEBEX) and prickly side (SIDSP) plants. Results, averaged for all replicates of each treatment, are shown in Tables 69a and 69b.

**Table 69a SEBEX% Inhibition**

| Composition | 600 g a.e./ha | 800 g a.e./ha | 1000 g a.e./ha | 2000 g a.e./ha |
|---|---|---|---|---|
| 664A4D | 75 | 75.8 | 76.7 | 82.5 |
| 664B5T | 73.3 | 76.6 | 78.3 | 89.7 |
| 664C6G | 70 | 72.5 | 73.3 | 85 |
| AMM-GLY2 | 0 | 0 | 5 | 5.8 |
| 4601 | 2.5 | 6.7 | 7.5 | 22.5 |
| UltraMax | 70 | 75 | 77.5 | 83.3 |
| IPA-GLY | 70.8 | 75 | 77.5 | 80 |
| 470K | 73.3 | 75.8 | 76.7 | 80 |
| AMM-GLY1S | 70 | 72.5 | 75.8 | 80 |
| 650A | 75 | 77.5 | 76.7 | 80 |
| AMM-GLY3S | 69.2 | 72.5 | 75 | 76.7 |

Formulations 664A4D, 664B5T and 664C6G each outperformed AMM-GLY2S and 4601 standards. All other standard and the test compositions performed similarly.

**Table 69b SIDSP% Inhibition**

| Composition | 100 g a.e./ha | 200 g a.e./ha | 400 g a.e./ha | 800 g a.e./ha |
|---|---|---|---|---|
| 664A4D | 33.3 | 51.7 | 65.0 | 84.2 |
| 664B5T | 46.7 | 67.5 | 72.5 | 89.2 |
| 664C6G | 40.0 | 52.5 | 70.0 | 86.7 |
| AMM-GLY2S | 5.0 | 40.0 | 45.0 | 60.0 |
| 460I | 25.0 | 51.7 | 60.8 | 71.7 |
| UltraMax | 54.2 | 68.3 | 84.2 | 95.2 |
| IPA-GLY | 56.7 | 81.7 | 90.0 | 95.5 |
| 470K | 55.0 | 71.7 | 85.8 | 93.3 |
| AMM-GLY1S | 35.8 | 63.3 | 73.3 | 85.0 |
| 650A | 49.2 | 61.7 | 75.0 | 86.7 |
| AMM-GLY3S | 49.2 | 67.5 | 82.5 | 91.7 |

Formulations 664A4D and 664C6G did not perform as well as Roundup UltraMax.

### EXAMPLE 70

The efficacy effect of ammonium oxalate on cationic:nonionic surfactant systems in ammonium glyphosate formulations was evaluated. Compositions, except for 483E7T, were liquid formulations prepared containing ammonium glyphosate salt and excipient ingredients as shown in Table 70a. The ammonium glyphosate concentration in each composition was 62 g a.e./l. Composition 483E7T was a dry formulation containing 68% a.e. of ammonium glyphosate.

**Table 70a**

| Composition | Component 1 | wt% | Component 2 | wt% | Component 3 | wt% |
|---|---|---|---|---|---|---|
| 095A3C | S69 | 0.73 | S50 | 0.49 | NH₄ oxalate | 0.77 |
| 09518J | S69 | 0.49 | S50 | 0.73 | NH₄ oxalate | 0.77 |
| 095C6H | S69 | 0.73 | S47 | 0.49 | NH₄ oxalate | 0.77 |
| 095J2L | S69 | 0.73 | S50 | 0.49 | ------ | ----- |
| 095K9O | S69 | 0.73 | S47 | 0.49 | ----- | ----- |
| 095F8S | S70 | 0.73 | S50 | 0.49 | NH₄ oxalate | 0.77 |
| 483E7T | S69 | 5.66 | S50 | 7.94 | NH₄ oxalate | 0.77 |

The compositions of Table 70a and comparative compositions of UltraMax and AMM-GLY3S were applied to Indian mustard (BRSJU), velvetleaf (ABUTH) and Bamyardgrass (ECHCF) plants. Results, averaged for all replicates of each treatment, are shown in Table 70b-d.

**Table 70b BRSJU% Inhibition 17 days after treatment**

| Composition | 100 g a.e./ha | 200 g a.e./ha | 400 g a.e./ha | 600 g a.e./ha |
|---|---|---|---|---|
| 095A3C | 28.3 | 57.5 | 81.7 | 89.2 |
| 09518J | 30 | 66.7 | 83.3 | 88.3 |
| 095C6H | 35 | 75 | 85.8 | 91.7 |
| 095J2L | 21.7 | 79.2 | 84.2 | 87.5 |
| 095K9O | 11.7 | 50 | 74.2 | 92.2 |
| 095F8S | 26.7 | 75 | 88 | 90.8 |
| 483E7T | 26.7 | 52.5 | 81.7 | 84.2 |
| 725K | 0 | 5 | 30.8 | 61.7 |
| UltraMax | 15 | 54.2 | 77.5 | 88.8 |
| AMM-GLY3S | 18.3 | 47.5 | 79.2 | 90.5 |

Compositions 095C6H and 095F8S each outperformed the standards as well as composition 483E7T.

**Table 70c ABUTH% Inhibition 14 days after treatment**

| Composition | 100 g a.e./ha | 200 g a.e./ha | 300 g a.e./ha | 400 g a.e./ha |
|---|---|---|---|---|
| 095A3C | 84.2 | 90 | 94.2 | 97.7 |
| 095I8J | 84.2 | 89.2 | 94.2 | 98.5 |
| 095C6H | 77.5 | 86.7 | 90.8 | 96.2 |
| 095J2L | 84.2 | 87.5 | 90 | 96.2 |
| 095K9O | 3.3 | 26.7 | 82.5 | 84.2 |
| 095F8S | 87.5 | 90.8 | 96 | 99 |
| 483E7T | 82.5 | 90 | 90.8 | 96.5 |
| 725K | 0 | 0 | 0 | 10 |
| UltraMax | 10 | 63.3 | 85 | 90.7 |
| AMM-GLY3S | 10 | 68.3 | 85 | 85.8 |

All compositions, except 095K9O, provided enhanced efficacy over the standard formulations. 095F8S, 095A3C and 09518J provided the best efficacy. Table 70d ECHCF% Inhibition 14 days after treatment

| Composition | 100 g a.e./ha | 200 g a.e./ha | 300 g a.e./ha | 400 g a.e./ha |
|---|---|---|---|---|
| 095A3C | 18.3 | 65 | 90.8 | 91.3 |
| 095I8J | 24.2 | 64.2 | 83.3 | 87.2 |
| 095C6H | 1.7 | 57.5 | 66.7 | 67.5 |
| 095J2L | 2.5 | 65.8 | 70.8 | 78.3 |
| 095K9O | 8.3 | 37.5 | 65.8 | 67.5 |
| 095F8S | 40 | 65 | 72.5 | 86.7 |
| 483E7T | 11.7 | 65 | 76.7 | 80.8 |
| 725K | 0 | 1.7 | 17.5 | 26.7 |
| UltraMax | 5 | 46.7 | 63.3 | 65 |
| AMM-GLY3S | 5 | 57.5 | 66.7 | 73.3 |

Compositions 095A3C, 09518J and 095F8S each provided higher efficacy that the standards and the other compositions.

### EXAMPLE 73

The efficacy effect of oxalic acid on high load potassium glyphosate formulations containing etheramine surfactants in the presence of alkypolyglucosides was evaluated. Compositions were prepared containing potassium glyphosate salt at a concentration of 540 g a.e./l.

**Table 73a**

| Composition | Component 1 | wt % | Component 2 | wt % | Component 3 | wt % |
|---|---|---|---|---|---|---|
| 687A3C | S79 | 10 | ----- | ----- | ----- | ----- |
| 687B9L | S32 | 10 | ----- | ----- | ----- | ----- |
| 687C2F | S79 | 10 | ----- | ----- | oxalic acid | 1 |
| 687D1Y | S32 | 10 | ----- | ----- | oxalic acid | 1 |
| 687E4Z | S79 | 6 | S32 | 4 | oxalic acid | 1 |
| 687F0M | S79 | 4 | S32 | 6 | oxalic acid | 1 |
| 687G4I | S79 | 6 | S32 | 5 | oxalic acid | 1 |

The compositions of Table 73a, and comparative compositions 479K UltraMax, 470K and 540KS, were applied to Indian mustard (BRSJU). Results, averaged for all replicates of each treatment for each plant species, as well as an overall average for all of the plant species, are shown in Table 73b.

**Table 73b BRSJU % Inhibition 14 days after treatment**

| Composition | 100 g a.e./ha | 200 g a.e./ha | 400 g a.e./ha | 800 g a.e./ha |
|---|---|---|---|---|
| 687A3C | 34.2 | 69.2 | 82.5 | 89 |
| 687B9L | 44.2 | 57.5 | 75 | 82.5 |
| 687C2F | 68.3 | 71.7 | 85 | 94.5 |
| 687D1Y | 70 | 70.8 | 77.5 | 87.5 |
| 687E4Z | 60 | 73.3 | 79.2 | 94.7 |
| 687F0M | 72.5 | 73.3 | 81.7 | 85.8 |
| 687G4I | 74.2 | 75 | 87.5 | 93.3 |
| 479K | 0 | 14.2 | 56.7 | 73.3 |
| UltraMax | 60 | 76.7 | 83.3 | 90 |
| 470K | 33.3 | 70.8 | 83.3 | 88.3 |
| 540KS | 45 | 72.5 | 88.8 | 91.3 |

Compositions 687C2F and 687G4I gave similar efficacy as standards 540KS. Compositions 687A3C and 687E4Z provided less efficacy, and performance was similar to standards UltraMax and 470K.

### EXAMPLE 74

The efficacy effect of oxalic acid on high load potassium glyphosate formulations containing etheramine surfactants in the presence of alkypolyglucosides were repeated. Compositions 687A3C through 687G4I each contained potassium glyphosate salt at a concentration of 540 g a.e./l. Two additional compositions, 079AQ4 and 083DR7, were evaluated. Composition 079AQ4 contained 480 g a.e./l potassium glyphosate and 2% propylene glycol. A stoichiometric amount of hydrochloric acid was added to compositions 079AQ4 and 083DR7 to convert the S80 and S81 surfactants to their corresponding HCl salt. Composition 083DR7 contained 365 g a.e./l isopropylamine glyphosate.

**Table 74a**

| Composition | Component 1 | wt % | Component 2 | wt % | Component 3 | wt % |
|---|---|---|---|---|---|---|
| 687A3C | S79 | 10 | --- | --- | --- | --- |
| 687C2F | S79 | 10 | --- | --- | oxalic acid | 1 |
| 687D1Y | S32 | 10 | --- | --- | oxalic acid | 1 |
| 687E4Z | S79 | 6 | S32 | 4 | oxalic acid | 1 |
| 687F0M | S79 | 4 | S32 | 6 | oxalic acid | 1 |
| 687G4I | S79 | 6 | S32 | 5 | oxalic acid | 1 |
| 079AQ4 | S80 | 5 | S82 | 2 | S5 | 6 |
| 083DR7 | S81 | 2.25 | S32 | 5 | NH₄ oxalate | 3 |

The compositions of Table 74a, and comparative compositions 479K, Roundup UltraMax, and 470K, were applied to prickly sida (SIDSP). Results, averaged for all replicates of each treatment for each plant species, as well as an overall aver111111age for all of the plant species, are shown in Table 74b.

**Table 74b SIDSP % Inhibition 14 days after treatment**

| Composition | 100 g a.e./ha | 200 g a.e./ha | 400 g a.e./ha | 800 g a.e./ha |
|---|---|---|---|---|
| 687A3C | 49.2 | 77.5 | 85 | 92.2 |
| 687C2F | 65 | 79.2 | 90.8 | 95 |
| 687D1Y | 46.7 | 66.7 | 78.3 | 87.5 |
| 687E4Z | 61.7 | 72.5 | 85 | 94.2 |
| 687F0M | 53.3 | 57.5 | 78.3 | 92.5 |
| 687G4I | 56.7 | 79.2 | 88 | 95.5 |
| 079AQ4 | 62.5 | 70 | 85 | 93.3 |
| 083DR7 | 65.8 | 78.3 | 92.5 | 98.5 |
| 479K | 20 | 57.5 | 65.8 | 79.2 |
| UltraMax | 55 | 76.7 | 84.2 | 94 |
| 470K | 46.7 | 78.3 | 82.5 | 94.3 |

All compositions except 687D1Y and 687F0M gave higher efficacy than standards UltraMax and 470K. Standard 479K gave the lowest efficacy.

### EXAMPLES 80-99

Field studies were conducted to evaluate the synergistic effect of diammonium oxalate and oxalic acid in glyphosate formulations comprising cationic:noinonic or cationic surfactant systems. Glyphosate formulations were applied postemergence to all weed targets, generally when they were between 8 cm and 30 cm tall, depending on the species and the environmental conditions. Treated plot size was 2 meters wide and 4.6 meters long. Treatments were applied with spray booms/spray rigs. Spray rate ranged between 93 I/ha and 112 1/ha. Tee-Jet brand tapered flat fan spray tips were used, at an appropriate spray pressure, with spacing and height from the weed canopy as recommended in the Tee-Jet technical manual. Experimental design in every study was a split plot arrangement with four replications. Each formulation was generally applied a four or five rates of application in each test. All formulations were applied on the basis of equal glyphosate acid equivalence.

Traditional weed control ratings were made at the time of maximum control with glyphosate formulations (14 to 35 days after treatment, or DAT). Ratings were based on quantitative visual estimates (0=no control, 100=completely dead, 85% threshold for commercial control). The effect of glyphosate on the species in the treated plot was compared to the health and vigor of the species growing in the untreated buffer area immediately surrounding the plot.

Compositions containing glyphosate for field testing as reported in Examples 80-99 were prepared as in the table below with concentrations reported in wt%.

| Component | Composition 483Y9R | Composition 942G6E | Composition 944R5W | Composition 948U2P |
|---|---|---|---|---|
| glyphosate | 68% ammonium glyphosate | 68% ammonium glyphosate | 68% ammonium glyphosate | 31% IPA glyphosate |
| S32 | --- | --- | --- | 5.0% |
| S50 | 7.9% | --- | --- | --- |
| S69 | 5.7% | 5.7% | --- | --- |
| S72 | --- | 7.9% | 7.9% | --- |
| S74 | 0.1% | 0.1% | 0.1% | --- |
| S76 | --- | --- | 5.7% | --- |
| S90 | --- | --- | --- | 1.8% |
| diNH₄ oxalate | 8.3% | 8.3% | 8.3% | 3.0% |
| sodium sulfite | 0.4% | 0.4% - | 0.4% | --- |
| HCl | --- | --- | --- | 0.1% |
| polyethylene glycol | --- | --- | --- | 2.0% |

| Component | Composition 770W2X | Composition 760Q3N | Composition 761W0M | Composition 769R5V |
|---|---|---|---|---|
| glyphosate | 37% potassium glyphosate | 36.5% IPA glyphosate | 36.5% IPA glyphosate | 71% ammonium glyphosate |
| S1 | --- | 10.0% | --- | --- |
| S5 | 6.5% | --- | --- | --- |
| S8 | 7.5% | --- | --- | --- |
| S30 | --- | --- | 10.0% | --- |
| S61 | --- | --- | --- | 2% |
| S64 | --- | --- | --- | 10.0% |
| S91 | --- | 1.5% | 1.5% | --- |
| oxalic acid | 0.8% | 1.2% | 1.5% | 8% |

### EXAMPLE 80

Field testing evaluation of Composition 770W2X versus a Roundup UltraMax standard on giant ragweed (AMBTR) was done at Monmouth, Illinois. Results, averaged for all replicates of each treatment, are shown in the table below.

### AMBTR% Inhibition 21 days after treatment

| Composition | 105g a.e./ha | 263 g a.e./ha | 420 g a.e./ha | 578 g a.e./ha | 736 g a.e./ha |
|---|---|---|---|---|---|
| 770W2X | 28.8 | 62.8 | 81.0 | 85.3 | 88.8 |
| UltraMax | 28.8 | 59.5 | 76.0 | 82.3 | 91.5 |

Composition 770W2X, containing IPA glyphosate, cationic surfactants and oxalic acid, provided slightly better control as compared to UltraMax, except at the highest application rate.

### EXAMPLE 81

Field testing evaluation of Composition 770W2X versus a Roundup UltraMax standard on common dandelion (TAROF) was done at Monmouth, Illinois. Results, averaged for all replicates of each treatment, are shown in the table below.

**TAROF% Inhibition 24 days after treatment**

| Composition | 325 g a.e./ha | 585 g a.e./ha | 845 g a.e./ha | 1105g a.e./ha | 1429g a.e./ha |
|---|---|---|---|---|---|
| 770W2X | 46.0 | 48.3 | 62.3 | 69.5 | 73.5 |
| UltraMax | 43.3 | 49.8 | 65.5 | 63.0 | 76.3 |

Composition 770W2X provided similar control as compared to UltraMax over the range of application rates.

### EXAMPLE 82

Field testing evaluation of Composition 770W2X versus a Roundup UltraMax standard on wild buckwheat (POLCO) was done at Monmouth, Illinois. Results, averaged for all replicates of each treatment, are shown in the table below.

### POLCO% Inhibition 23 days after treatment

| Composition | 263 g a.e./ha | 368 g a.e./ha | 526 g a.e./ha | 683 g a.e./ha |
|---|---|---|---|---|
| 770W2X | 56.5 | 79.3 | 92.3 | 96.0 |
| UltraMax | 43.3 | 74.0 | 86.8 | 91.0 |

Composition 770W2X provided greater control as compared to UltraMax over the range of application rates.

### EXAMPLE 83

Field testing evaluation of Composition 770W2X versus a Roundup UltraMax standard on perennial ryegrass (LOLPE), cutleaf evening primrose (PRITR), annual ryegrass (LOLMG) and cheeseweed (MALSI) was done at Loxley, Alabama. Results, averaged for all replicates of each treatment for each plant species, are shown in the tables below.

### LOLPE% Inhibition 19 days after treatment

| Composition | 526 g a.e./ha | 788 g a.e./ha | 1051 g a.e./ha | 1314 g a.e./ha | 1577 g a.e./ha |
|---|---|---|---|---|---|
| 770W2X | 95.8 | 100 | 98.8 | 100 | 100 |
| UltraMax | 97.3 | 98.8 | 100 | 100 | 100 |

Composition 770W2X provide similar control as compared to UltraMax over the range of application rates.

### PRITR% Inhibition 19 days after treatment

| Composition | 526 g a.e./ha | 788 g a.e./ha | 1051 g a.e./ha | 1314 g a.e./ha | 1577 g a.e./ha |
|---|---|---|---|---|---|
| 770W2X | 75.3 | 81.8 | 86.5 | 94.0 | 93.5 |
| UltraMax | 76.3 | 85.0 | 91.7 | 90.5 | 94.8 |

Composition 770W2X provided similar control as compared to UltraMax over the range of application rates.

### LOLMG% Inhibition 19 days after treatment

| Composition | 526 g a.e./ha | 788 g a.e./ha | 1051 g a.e./ha | 1314 g a.e./ha | 1577 g a.e./ha |
|---|---|---|---|---|---|
| 770W2X | 87.8 | 86.8 | 94.5 | 99.5 | 96.3 |
| UltraMax | 85.0 | 91.3 | 98.0 | 100 | 100 |

Composition 770W2X provided lower control as compared to UltraMax over the range of application rates.

### MALSI% Inhibition 19 days after treatment

| Composition | 526 g a.e./ha | 788 g a.e./ha | 1051 g a.e./ha | 1314 g a.e./ha | 1577 g a.e./ha |
|---|---|---|---|---|---|
| 770W2X | 71.3 | 76.8 | 81.3 | 85.5 | 89.3 |
| UltraMax | 69.5 | 73.3 | 82.0 | 87.0 | 86.5 |

Composition 770W2X provided similar control as compared to UltraMax over the range of application rates.

### EXAMPLE 84

Field testing evaluation of Composition 770W2X versus a Roundup UltraMax standard on perennial ryegrass (LOLPE), cutleaf evening primrose (PRITR), annual ryegrass (LOLMG) and cheeseweed (MALSI) was done at Loxley, Alabama. Results, averaged for all replicates of each treatment for each plant species, are shown in the tables below.

### LOLPE% Inhibition 18 days after treatment

| Composition | 390 g a.e./ha | 585 g a.e./ha | 780 g a.e./ha | 975 g a.e./ha | 11.70 g a.e./ha |
|---|---|---|---|---|---|
| 770W2X | 81.5 | 98.8 | 95.0 | 100 | 100 |
| UltraMax | 87.8 | 98.8 | 95.5 | 100 | 97.5 |

Composition 770W2X provided similar control, except at the lowest application rate, as compared to UltraMax over the range of application rates.

### PRITR% Inhibition 18 days after treatment

| Composition | 390 g a.e./ha | 585 g a.e./ha | 780 g a.e./ha | 975 g a.e./ha | 1170 g a.e./ha |
|---|---|---|---|---|---|
| 770W2X | 70.8 | 82.0 | 84.3 | 87.5 | 91.3 |
| UltraMax | 74.3 | 81.0 | 84.3 | 90.3 | 91.5 |

Composition 770W2X provided similar control as compared to UltraMax over the range of application rates.

### LOLMG% Inhibition 18 days after treatment

| Composition | 390 g a.e./ha | 585 g a.e./ha | 780 g a.e./ha | 975 g a.e./ha | 1170 g a.e./ha |
|---|---|---|---|---|---|
| 770W2X | 75.0 | 85.0 | 86.5 | 89.0 | 95.0 |
| UltraMax | 80.0 | 83.8 | 86.3 | 94.8 | 95.8 |

Composition 770W2X provided slightly lower control as compared to UItraMax over the range of application rates.

### MALSI% Inhibition 18 days after treatment

| Composition | 390 g a.e./ha | 585 g a.e./ha | 780 g a.e./ha | 975 g a.e./ha | 1170 g a.e./ha |
|---|---|---|---|---|---|
| 770W2X | 72.5 | 80.3 | 79.0 | 85.8 | 88.3 |
| UltraMax | 74.3 | 73.5 | 80.7 | 80.0 | 84.3 |

Composition 770W2X provided greater control as compared to UltraMax over the range of application rates.

### EXAMPLE 85

Field testing evaluation of Composition 770W2X versus a Roundup UltraMax standard on purple nutsedge (CYPRO) was done in Loxley, Alabama. Results, averaged for all replicates of each treatment, are shown in the tables below.

### CYPRO% Inhibition 22 days after treatment

| Composition | 1500 g a.e./ha | 1750 g a.e./ha | 2000 g a.e./ha | 2250 g a.e./ha | 2500 g a.e./ha |
|---|---|---|---|---|---|
| 770W2X | 80.5 | 77.5 | 83.5 | 85.0 | 93.5 |
| UltraMax | 77.0 | 80.8 | 80.8 | 85.5 | 89.3 |

Composition 770W2X provided slightly greater control, except at the lowest application rate, as compared to UltraMax over the range of application rates.

### EXAMPLE 86

Field testing evaluation of Composition 770W2X versus a Roundup UltraMax standard on velvetleaf (ABUTH), sicklepod (CASOB), hemp sesbania (SEBEX), pitted morningglory (IPOLA), amaranthus species (AMASS) and prickly sida (SIDSP) was done at Loxley, Alabama. Results, averaged for all replicates of each treatment for each plant species, are shown in the tables below.

### ABUTH% Inhibition 23 days after treatment

| Composition | 210 g a.e./ha | 420 g a.e./ha | 631 g a.e./ha | 840 g a.e./ha | 1051 g a.e./ha |
|---|---|---|---|---|---|
| 770W2X | 49.0 | 70.3 | 93.0 | 96.0 | 100 |
| UltraMax | 47.0 | 64.5 | 76.0 | 84.0 | 94.8 |

Composition 770W2X provided greater control as compared to UltraMax over the range of application rates.

### CASOB% Inhibition 23 days after treatment

| Composition | 210 g a.e./ha | 420 g a.e./ha | 631 g a.e./ha | 840 g a.e./ha | 1051 g a.e./ha |
|---|---|---|---|---|---|
| 770W2X | 46.3 | 67.5 | 87.0 | 93.0 | 95.0 |
| UltraMax | 54.5 | 63.3 | 76.3 | 78.5 | 93.5 |

Composition 770W2X provided slightly greater control, except at the lowest application rate, as compared to UltraMax over the range of application rates.

### SEBEX% Inhibition 23 days after treatment

| Composition | 210 g a.e./ha | 420 g a.e./ha | 631 g a.e./ha | 840 g a.e./ha | 1051 g a.e./ha |
|---|---|---|---|---|---|
| 770W2X | 43.8 | 64.0 | 81.8 | 79.0 | 92.8 |
| UltraMax | 45.0 | 58.8 | 72.0 | 68.5 | 97.0 |

Composition 770W2X provided greater control, except at the lowest and highest application rates, as compared to UltraMax over the range of application rates.

### IPOLA% Inhibition 23 days after treatment

| Composition | 210 g a.e./ha | 420 g a.e./ha | 631 g a.e./ha | 840 g a.e./ha | 1051 g a.e./ha |
|---|---|---|---|---|---|
| 770W2X | 47.5 | 63.3 | 70.5 | 71.8 | 81.5 |
| UltraMax | 45.0 | 59.0 | 66.5 | 67.5 | 79.8 |

Composition 770W2X provided slightly greater control as compared to UltraMax over the range of application rates.

### AMASS% Inhibition 23 days after treatment

| Composition | 210 g a.e./ha | 420 g a.e./ha | 631 g a.e./ha | 840 g a.e./ha | 1051 g a.e./ha |
|---|---|---|---|---|---|
| 770W2X | 85.0 | 96.0 | 98.0 | 97.0 | 99.0 |
| UltraMax | 90.8 | 91.3 | 98.0 | 94.5 | 98.0 |

Composition 770W2X provided slightly greater control, except at the lowest application rate, as compared to UltraMax over the range of application rates.

### SIDSP% Inhibition 23 days after treatment

| Composition | 210g a.e./ha | 420 g a.e./ha | 631 g a.e./ha | 840 g a.e./ha | 1051 g a.e./ha |
|---|---|---|---|---|---|
| 770W2X | 86.0 | 93.0 | 96.8 | 99.3 | 99.0 |
| UltraMax | 85.0 | 87.3 | 95.0 | 94.8 | 99.5 |

Composition 770W2X provided slightly greater control as compared to UltraMax over the range of application rates.

### EXAMPLE 87

Field testing evaluation of Composition 770W2X versus a Roundup UltraMax standard on shepherdspurse (CAPBP) was done at Stoneville, Mississippi. Results, averaged for all replicates of each treatment, are shown in the table below.

### CAPBP% Inhibition 21 days after treatment

| Composition | 260 g a.e./ha | 390 g a.e./ha | 520 g a.e./ha | 650 g a.e./ha | 780 g a.e./ha |
|---|---|---|---|---|---|
| 770W2X | 68.8 | 82.5 | 80.0 | 88.8 | 92.5 |
| UltraMax | 63.8 | 85.0 | 85.0 | 85.0 | 90.0 |

Composition 770W2X provided similar control as compared to UltraMax over the range of application rates.

### EXAMPLE 88

Field testing evaluation of Composition 770W2X versus a Roundup UltraMax standard on pitted morningglory (IPOLA) was done at Stoneville, Mississippi. Results, averaged for all replicates of each treatment, are shown in the table below.

### IPOLA% Inhibition 22 days after treatment

| Composition | 325 g a.e./ha | 455 g a.e./ha | 585 g a.e./ha | 715g a.e./ha | 845 g a.e./ha |
|---|---|---|---|---|---|
| 770W2X | 67.5 | 68.8 | 77.5 | 87.5 | 88.8 |
| UltraMax | 63.8 | 67.5 | 73.8 | 82.5 | 83.8 |

Composition 770W2X provided slightly enhanced control as compared to UltraMax over the range of application rates.

### EXAMPLE 89

Field testing evaluation of Compositions 483Y9R and 769R5V versus the AMM-GLY3S standard on bermudagrass (CYNDA) was done at Pergamino, Argentina. Results, averaged for all replicates of each treatment, are shown in the table below.

### CYNDA% Inhibition 14 days after treatment

| Composition | 720 g a.e./ha | 1080 g a.e./ha | 1440 g a.e./ha | 1800 g a.e./ha |
|---|---|---|---|---|
| 483Y9R | 43.8 | 52.5 | 68.5 | 76.3 |
| 769R5V | 31.3 | 55.0 | 67.5 | 80.0 |
| AMM-GLY3S | 28.8 | 45.0 | 51.3 | 63.8 |

Compositions 483Y9R and 769R5V, both containing a cationic:nonionic surfactant system and ammonium oxalate or oxalic acid, provided significantly enhanced control as compared to AMM-GLY3S over the range of application rates. Compositions 483Y9R and 769R5V performed similarly over the range of application rates.

### EXAMPLE 90

Field testing evaluation of Compositions 483Y9R and 769R5V versus the AMM-GLY3S standard on clover species (MEUSS) was done at Pergamino, Argentina. Results, averaged for all replicates of each treatment, are shown in the table below.

### MEUSS% Inhibition 17 days after treatment

| Composition | 1080 g a.e./ha | 1440 g a.e./ha | 1800 g a.e./ha |
|---|---|---|---|
| 483Y9R | 43.3 | 55.0 | 71.3 |
| 769R5V | 33.8 | 50.0 | 48.3 |
| AMM-GLY3S | 35.0 | 55.0 | 65 |

Composition 483Y9R provided enhanced control as compared to AMM-GLY3S over the range of application rates. Composition 769R5V provided less efficacy than composition 483Y9R and standard AM-GLY3S.

### EXAMPLE 91

Field testing evaluation of Compositions 483Y9R and 769R5V versus the AMM-GLY3S standard on quitensis amaranth (AMAQU) was done at Alejo Ledesma, Argentina. Results, averaged for all replicates of each treatment, are shown in the table below.

### AMAQU% Inhibition 14 days after treatment

| Composition | 748 g a.e./ha | 960 g a.e./ha | 1156 g a.e./ha | 1564 g a.e./ha |
|---|---|---|---|---|
| 483Y9R | 46.7 | 73.8 | 75.0 | 88.8 |
| 769R5V | 25.0 | 53.8 | 68.8 | 81.3 |
| AMM-GLY3S | 33.3 | 68.8 | 75.0 | 80.0 |

Composition 483Y9R provided enhanced control as compared to AMM-GLY3S over the range of application rates. Composition 769R5V provided less efficacy than composition 483Y9R and standard AM-GLY3S.

### EXAMPLE 92

Field testing evaluation of Compositions 483Y9R versus the AMM-GLY3S standard on commelina (COMSS) was done at Pergamino, Argentina. Results, averaged for all replicates of each treatment, are shown in the tables below.

### COMSS% Inhibition 17 days after treatment

| Composition | 2160 g a.e./ha | 2640 g a.e./ha | 2880 g a.e./ha |
|---|---|---|---|
| 483Y9R | 70.0 | 70.0 | 73.8 |
| AMM-GLY3S | 67.5 | 74.5 | 73.0 |

Composition 483Y9R provided similar control as compared to AMM-GLY3S over the range of application rates.

### COMSS% Inhibition 28 days after treatment

| Composition | 2160 g a.e./ha | 2640 g a.e./ha | 2880 g a.e./ha |
|---|---|---|---|
| 483Y9R | 81.3 | 85.3 | 89.8 |
| AMM-GLY3S | 80.0 | 85.0 | 86.0 |

### Composition 483Y9R provided slightly enhanced control as compared to AMM-GLY3S over the range of application rates.

### EXAMPLE 93

Field testing evaluation of Compositions 942G6E, 944R5W and 948U2P versus the 540KS standard on henbit (LAMAM) was done at Fredericksburg, Texas. Results, averaged for all replicates of each treatment, are shown in the table below.

### LAMAM% Inhibition 23 days after treatment

| Composition | 315 g a.e./ha | 473 g a.e./ha | 631 g a.e./ha | 788 g a.e./ha | 946 g a.e./ha |
|---|---|---|---|---|---|
| 942G6E | 60.8 | 74.0 | 72.5 | 69.5 | 76.3 |
| 944R5W | 66.5 | 72.5 | 71.3 | 74.5 | 74.5 |
| 948U2P | 67.5 | 63.0 | 66.8 | 74.3 | 79.8 |
| 540KS | 65.5 | 61.8 | 72.8 | 69.8 | 74.3 |

Compositions 942G6E, 944R5W and 948U2P, each containing glyphosate and a cationic:nonionic surfactant system provided slightly better control as compared to 540KS over the range of application rates.

### EXAMPLE 94

Field testing evaluation of Compositions 942G6E, 944R5W and 948U2P versus the 540KS standard on henbit (LAMAM) was repeated at Thrall, Texas. Results, averaged for all replicates of each treatment, are shown in the table below. LAMAM% Inhibition 22 days after treatment

| Composition | 315 g a.e./ha | 473 g a.e./ha | 631 g a.e./ha | 788 g a.e./ha | 946 g a.e./ha |
|---|---|---|---|---|---|
| 942G6E | 70.3 | 79.0 | 76.5 | --- | 88.3 |
| 944R5W | 76.0 | 75.8 | 72.5 | 84.3 | 87.5 |
| 948U2P | 73.0 | 77.5 | 77.5 | 85.0 | 91.5 |
| 540KS | 70.0 | 74.0 | 72.8 | 83.5 | 88.8 |

Compositions 942G6E, 944R5W and 948U2P, each containing glyphosate and a cationic:nonionic surfactant system provided slightly better control as compared to 540KS over the range of application rates.

### EXAMPLE 95

Field testing evaluation of Compositions 760Q3N and 761W0M versus a Roundup UltraMax standard on velvetleaf (ABUTH) was done at Monmouth, Illinois. Results, averaged for all replicates of each treatment, are shown in the table below.

### ABUTH% Inhibition 23 days after treatment

| Composition | 210 g a.e./ha | 368 g a.e./ha | 526 g a.e./ha | 683 g a.e./ha | 840 g a.e./ha |
|---|---|---|---|---|---|
| 760Q3N | 58.8 | 77.8 | 84.5 | 88.5 | 98.8 |
| 761W0M | 54.0 | 70.0 | 83.0 | 88.5 | 96.3 |
| UltraMax | 43.3 | 67.0 | 81.5 | 87.5 | 89.5 |

Compositions 760Q3N and 761W0M, each containing glyphosate, a cationic surfactant and oxalic acid, provided slightly better control as compared to UltraMax over the range of application rates.

### EXAMPLE 96

Field testing evaluation of Compositions 760Q3N and 761W0M versus a Roundup UltraMax standard on velvetleaf (ABUTH) was repeated at Monmouth, Illinois. Results, averaged for all replicates of each treatment, are shown in the table below.

### ABUTH% Inhibition 21 days after treatment

| Composition | 158 g a.e./ha | 263 g a:e./ha | 420 g a.e./ha | 578 g a.e./ha | 736 g a.e./ha |
|---|---|---|---|---|---|
| 760Q3N | 40.0 | 70.8 | 85.0 | 91.8 | 95.5 |
| 761W0M | 44.5 | 73.8 | 85.3 | 89.3 | 92.5 |
| UltraMax | 33.3 | 64.8 | 82.8 | 85.3 | 90.0 |

Compositions 760Q3N and 761W0M, each containing glyphosate, a cationic surfactant and oxalic acid, provided slightly better control as compared to UltraMax over the range of application rates.

### EXAMPLE 97

Field testing evaluation of Compositions 760Q3N and 761W0M versus a Roundup UltraMax standard on velvetleaf (ABUTH), hemp sesbania (SEBEX), pitted morningglory (IPOLA), prickly sida (SIDSP) and sickelpod (CASOB) was done at Loxley, Alabama. Results, averaged for all replicates of each treatment, are shown in the table below.

### ABUTH% Inhibition 21 days after treatment

| Composition | 420 g a.e./ha | 631 g a.e./ha | 840 g a.e./ha | 1051 g a.e./ha | 1261 g a.e./ha |
|---|---|---|---|---|---|
| 760Q3N | 97.3 | 98.3 | 100 | 99.5 | 100 |
| 761W0M | 98.0 | 100 | 100 | 99.5 | 100 |
| UltraMax | 94.8 | 100 | 100 | 99.8 | 98.0 |

Compositions 760Q3N and 761W0M provided similar control as compared to UltraMax over the range of application rates.

### SEBEX% Inhibition 21 days after treatment

| Composition | 420 g a.e./ha | 631 g a.e./ha | 840 g a.e./ha | 1051 g a.e./ha | 1261 g a.e./ha |
|---|---|---|---|---|---|
| 760Q3N | 63.0 | 73.8 | 80.0 | 83.0 | 86.8 |
| 761W0M | 62.5 | 77.8 | 78.0 | 82.8 | 86.3 |
| UltraMax | 62.5 | 74.5 | 83.5 | 86.8 | 91.5 |

Compositions 760Q3N and 761W0M provided slightly lower control as compared to UltraMax over the range of application rates.

### IPOLA% Inhibition 21 days after treatment

| Composition | 420 g a.e./ha | 631 g a.e./ha | 840 g a.e./ha | 1051 g a.e./ha | 1261 g a.e./ha |
|---|---|---|---|---|---|
| 760Q3N | 47.0 | 58.8 | 62.5 | 78.8 | 70.5 |
| 761W0M | 46.3 | 58.8 | 67.0 | 75.8 | 72.5 |
| UltraMax | 47.0 | 57.0 | 61.3 | 75.3 | 74.3 |

Compositions 760Q3N and 761W0M provided slightly greater control as compared to UltraMax over the range of application rates.

### SIDSP% Inhibition 21 days after treatment

| Composition | 420 g a.e./ha | 631 g a.e./ha | 840 g a.e./ha | 1051 g a.e./ha | 1261 g a.e./ha |
|---|---|---|---|---|---|
| 760Q3N | 88.8 | 95.8 | 98.0 | 99.0 | 98.0 |
| 761W0M | 90.0 | 94.8 | 99.0 | 98.0 | 94.8 |
| UltraMax | 82.8 | 93.3 | 93.0 | 98.0 | 98.0 |

Compositions 760Q3N and 761W0M provided greater control as compared to UltraMax over the range of application rates.

### CASOB% Inhibition 21 days after treatment

| Composition | 420 g a.e./ha | 631 g a.e./ha | 840 g a.e./ha | 1051 g a.e./ha | 1261 g a.e./ha |
|---|---|---|---|---|---|
| 760Q3N | 87.3 | 87.0 | 87.3 | 87.8 | 87.8 |
| 761W0M | 88.5 | 88.5 | 87.3 | 88.0 | 87.3 |
| UltraMax | 86.8 | 87.3 | 87.3 | 89.0 | 87.3 |

Compositions 760Q3N and 761W0M provided similar control as compared to UltraMax over the range of application rates.

### EXAMPLE 98

Field testing evaluation of Compositions 760Q3N and 761W0M versus a Roundup UltraMax standard on velvetleaf (ABUTH), hemp sesbania (SEBEX), pitted morningglory (IPOLA) and sickelpod (CASOB) was done at Stoneville, Mississippi. Results, averaged for all replicates of each treatment, are shown in the table below.

### ABUTH% Inhibition 21 days after treatment

| Composition | 390 g a.e./ha | 520 g a.e./ha | 650 g a.e./ha | 780 g a.e./ha | 910 g a.e./ha |
|---|---|---|---|---|---|
| 760Q3N | 81.3 | 86.3 | 87.5 | 87.5 | 93.8 |
| 761W0M | 78.8 | 81.3 | 87.5 | 86.3 | 93.8 |
| UltraMax | 65.0 | 71.3 | 72.5 | 86.3 | 88.8 |

Compositions 760Q3N and 761W0M provided significant enhanced control as compared to UltraMax over the range of application rates. Composition 760Q3N gave slightly higher efficacy than did 761W0M over the range of application rates. SEBEX% Inhibition 21 days after treatment

| Composition | 390 g a.e./ha | 520 g a.e./ha | 650 g a.e./ha | 780 g a.e./ha | 910 g a.e./ha |
|---|---|---|---|---|---|
| 760Q3N | 51.3 | 53.8 | 65.0 | 67.5 | 73.8 |
| 761W0M | 55.0 | 66.3 | 66.3 | 68.8 | 76.3 |
| UltraMax | 58.8 | 53.8 | 68.8 | 77.5 | 81.3 |

Compositions 760Q3N and 761W0M provided less control as compared to UltraMax over the range of application rates. Composition 761W0M gave slightly higher efficacy than did 760Q3N over the range of application rates.

### IPOLA% Inhibition 21 days after treatment

| Composition | 390 g a.e./ha | 520 g a.e./ha | 650 g a.e./ha | 780 g a.e./ha | 910 g a.e./ha |
|---|---|---|---|---|---|
| 760Q3N | 62.5 | 72.5 | 75.0 | 72.5 | 82.5 |
| 761W0M | 58.8 | 72.5 | 75.0 | 71.3 | 86.3 |
| UltraMax | 48.8 | 66.3 | 70.0 | 72.5 | 80.0 |

Compositions 760Q3N and 761W0M provided enhanced control as compared to UltraMax over the range of application rates. Compositions 761W0M and 760Q3N gave similar efficacies.

### CASOB% Inhibition 21 days after treatment

| Composition | 390 g a.e./ha | 520 g a.e./ha | 650 g a.e./ha | 780 g a.e./ha | 910 g a.e./ha |
|---|---|---|---|---|---|
| 760Q3N | 76.3 | 75.0 | 83.8 | 81.3 | 87.5 |
| 761W0M | 72.5 | 81.3 | 83.8 | 82.5 | 90.0 |
| UltraMax | 73.8 | 70.0 | 81.3 | 82.5 | 86.3 |

Compositions 760Q3N and 761W0M provided enhanced control as compared to UltraMax over the range of application rates. Compositions 761W0M and 760Q3N gave similar efficacies.

### EXAMPLE 99

Field testing evaluation of Compositions 769R5V versus a AMM-GLY3S standard on prostrate knotweed (POLAV) was done at Fontenzuela, Argentina. Results, averaged for all replicates of each treatment, are shown in the table below.

### POLAV% Inhibition 22 days after treatment

| Composition | 630 g a.e./ha | 945 g a.e./he | 1260 g a.e./ha |
|---|---|---|---|
| 769R5V | 25.0 | 35.0 | 48.8 |
| AMM-GLY3S | 17.5 | 25.0 | 40.0 |

Compositions 769R5V provided significant enhanced control as compared to AMM-GLY3S over the range of application rates.

The above description of the preferred embodiment is intended only to acquaint others skilled in the art with the invention, its principles, and its practical application so that others skilled In the art may adapt and apply the invention in its numerous forms, as may be best suited to the requirements of a particular use.

With reference to the use of the word(s) "comprise" or "comprises" or "comprising" in this entire specification (including the claims below), Applicants note that unless the context requires otherwise, those words are used on the basis and clear understanding that they are to be interpreted Inclusively, rather than exclusively, and that Applicants intend each of those words to be so interpreted In construing this entire specification.

## Claims

1. An aqueous herbicidal concentrate composition comprising:
glyphosate or a salt or ester thereof dissolved in an aqueous medium;
a surfactant component in solution or stable suspension, emulsion, or dispersion in said medium, comprising one or more surfactants; and
oxalic acid or a salt thereof,
wherein said surfactant and said oxalic acid or salt thereof are present in a weight ratio of between 5:1 and 40:1 and wherein the glyphosate concentration is in excess of 400 grams glyphosate a.e. per liter.

2. A composition of claim 1 wherein said oxalic acid comprises an alkali metal salt, alkanolamine salt, alkylamine salt, tetraalkylammonium salt, or aryltrialkylammonium salt of oxalic acid.

3. A composition of claim 1 wherein the glyphosate is predominantly in the form of the potassium, monoammonium, diammonium, sodium, monoethanolamine, isopropylamine, n-propylamine, ethylamine, ethylenediamine, hexamethylenediamine or trimethylsulfonium salt thereof.

4. A composition of claim 1 wherein the weight ratio of glyphosate a.e. to surfactant is between 6:1 and 1:1.

5. A composition of claim 1 wherein said surfactant and said oxalic acid or salt thereof are present in a weight ratio of between 5:1 and 20:1.

6. A composition of claim 1 wherein said composition has a cloud point of at least 50°C and a crystallization point not greater than 0°C.

7. A composition of claim 1 wherein the glyphosate concentration is in excess of 500 grams glyphosate a.e. per liter.

8. A composition of claim 7 wherein the glyphosate concentration is in excess of 540 grams glyphosate a.e. per liter.

9. A method of use of the aqueous herbicidal concentrate composition of claim 1 to control a wide variety of plants, comprising diluting the composition of claim 1 and applying a herbicidally effective amount of the diluted composition to the foliage of the plant.

10. The method of claim 9 wherein the weight ratio of glyphosate a.e, to said oxalic acid is between 1:30 and 100:1.

11. A method of use according to claim 9 or claim 10. **characterized in that** it is for controlling growth of morningglory.

12. A solid herbicidal concentrate composition comprising:
a glyphosate salt or ester;
a surfactant component comprising one or more surfactants; and
oxalic acid or a salt thereof.

13. A composition of claim 12 wherein the surfactant component comprises one or more cationic or nonionic surfactants.

14. A method of use of a composition of claim 12 or claim 13 to kill or control unwanted vegetation comprising the steps of diluting a solid composition of claim 12 or claim 13 in a convenient amount of water to form a tank mix and applying a herbicidally effective amount of the tank mix to the foliage of the unwanted vegetation.

## Patentansprüche

1. Wässrige herbizide Konzentratzusammensetzung, umfassend:
Glyphosat oder ein Salz oder einen Ester hiervon gelöst in einem wässrigen Medium;
eine Tensidkomponente in Lösung oder als stabile Suspension, Emulsion oder
Dispersion in dem Medium, umfassend ein oder mehrere Tenside; und Oxalsäure oder ein Salz hiervon,
wobei das Tensid und die Oxalsäure oder das Salz hiervon in einem Gewichtsverhältnis zwischen 5:1 und 40:1 vorliegen, und wobei die Glyphosatkonzentration größer als 400 g Glyphosat a.e. pro Liter ist.

2. Zusammensetzung nach Anspruch 1, wobei die Oxalsäure ein Alkalimetallsalz, Alkanolaminsalz, Alkylaminsalz, Tetraalkylatnmoniumsalz oder Aryltrialkylammoniumsalz von Oxalsäure umfasst.

3. Zusammensetzung nach Anspruch 1, wobei das Glyphosat vorwiegend in Form des Kalium-, Monoammonium-, Diammonium-, Natrium-, Monoethanolamin-, Isopropylamin-, n-Propylamin-, Ethylamin-, Ethylendiamin-, Hexamethylendiamin- oder Trimethylsulfoniumsalzes hiervon vorliegt.

4. Zusammensetzung nach Anspruch 1, wobei das Gewichtsverhältnis von Glyphosat a.e. zu dem Tensid zwischen 6:1 und 1:1 liegt,

5. Zusammensetzung nach Anspruch 1, wobei das Tensid und die Oxalsäure oder das Salz hiervon in einem Gewichtsverhältnis zwischen 5:1 und 20:1 vorliegen.

6. Zusammensetzung nach Anspruch 1, wobei die Zusammensetzung einen Trübungspunkt von mindestens 50°C und einen Kristallisationspunkt nicht größer als 0°C aufweist.

7. Zusammensetzung nach Anspruch 1, wobei die Glyphosatkonzentration größer als 500 g Glyphosat a.e. pro Liter ist.

8. Zusammensetzung nach Anspruch 7, wobei die Glyphosatkonzentration größer als 540 g Glyphosat a.e. pro Liter ist.

9. Verfahren zur Verwendung der wässrigen herbiziden Konzentratzusammensetzung nach Anspruch 1, um eine große Vielzahl an Pflanzen zu kontrollieren, umfassen das Verdünnen der Zusammensetzung nach Anspruch 1 und das Aufbringen einer herbizid wirksamen Menge der verdünnten Zusammensetzung auf die Blätter der Pflanze.

10. Verfahren nach Anspruch 9, wobei das Gewichtsverhältnis von Glyphosat a.e. zu der Oxalsäure zwischen 1:30 und 100:1 liegt.

11. Verfahren zur Verwendung nach Anspruch 9 oder Anspruch 10, **dadurch gekennzeichnet, dass** es der Kontrolle des Wachstums von Windengewächsen dient.

12. Feste herbizide Konzentratzusammensetzung, umfassend:
ein(en) Glyphosatsalz oder -ester;
eine Tensidkomponente, umfassend ein oder mehrere Tenside; und Oxalsäure oder ein Salz hiervon.

13. Zusammensetzung nach Anspruch 12, wobei die Tensidkomponente ein oder mehrere kationische oder nichtionische Tenside umfasst.

14. Verfahren zur Verwendung einer Zusammensetzung nach Anspruch 12 oder Anspruch 13, um unerwünschte Vegetation abzutöten oder zu kontrollieren, umfassend die Schritte des Verdünnens einer festen Zusammensetzung nach Anspruch 12 oder Anspruch 13 in einer geeigneten Menge an Wasser, um eine Tankmischung herzustellen, und des Aufbringens einer herbizid wirksamen Menge der Tankmischung auf das Blattwerk der unerwünschten Vegetation.

## Revendications

1. Composition aqueuse herbicide concentrée comprenant :
du glyphosate ou un sel ou un ester de celui-ci dissous dans un milieu aqueux ;
un composant surfactant en solution ou suspension, émulsion, ou dispersion stable dans ledit milieu, comprenant un ou plusieurs surfactants ; et
de l'acide oxalique ou un sel de celui-ci,
dans laquelle ledit surfactant et ledit acide oxalique ou sel de celui-ci sont présents dans un rapport pondéral entre 5:1 et 40:1 et dans laquelle la concentration en glyphosate est en excès de 400 grammes de glyphosate e.a. par litre.

2. Composition selon la revendication 1, dans laquelle ledit acide oxalique comprend un sel de métal alcalin, un sel d'alcanolamine, un sel d'alkylamine, un sel tétraalkylammonium, ou un sel aryltrialkylammonium d'acide oxalique.

3. Composition selon la revendication 1, dans laquelle le glyphosate est de manière prédominante sous la forme du sel de potassium, monoammonium, diammonium, sodium, monoéthanolamine, isopropylamine, n-propylamine, éthylamine, éthylènediamine, hexaméthylènediamine ou triméthylsulfonium de celui-ci.

4. Composition selon la revendication 1, dans laquelle le rapport pondéral de glyphosate e.a, au surfactant est entre 6:1 et 1:1.

5. Composition selon la revendication 1, dans laquelle ledit surfactant et ledit acide oxalique ou sel de celui-ci sont présents dans un rapport pondéral entre 5:1 et 20:1.

6. Composition selon la revendication 1, dans laquelle ladite composition a un point de trouble d'au moins 50°C et un point de cristallisation non supérieur à 0°C.

7. Composition selon la revendication 1, dans laquelle la concentration en glyphosate est en excès de 500 grammes de glyphosate e.a. par litre.

8. Composition selon la revendication 7, dans laquelle la concentration en glyphosate est en excès de 540 grammes de glyphosate e.a. par litre.

9. Procédé d'utilisation de la composition aqueuse herbicide concentrée selon la revendication 1 pour contrôler une grande variété de plantes, comprenant la dilution de la composition selon la revendication 1 et l'application d'une quantité efficace du point de vue herbicide de la composition diluée sur le feuillage de la plante.

10. Procédé selon la revendication 9, dans lequel le rapport pondéral de glyphosate e.a. audit acide oxalique est entre 1:30 et 100:1.

11. Procédé d'utilisation selon la revendication 9 ou la revendication 10, **caractérisé en ce qu'**il est destiné à contrôler la croissance du liseron.

12. Composition solide herbicide concentrée comprenant :
un sel ou un ester de glyphosate ;
un composant surfactant comprenant un ou plusieurs surfactants ; et
de l'acide oxalique ou un sel de celui-ci.

13. Composition selon la revendication 12, dans laquelle le composant surfactant comprend un ou plusieurs surfactants cationiques ou non ioniques.

14. Procédé d'utilisation d'une composition selon la revendication 12 ou la revendication 13 pour tuer ou contrôler une végétation indésirable comprenant les étapes de dilution d'une composition solide selon la revendication 12 ou la revendication 13 dans une quantité d'eau convenable pour former un mélange en cuve et l'application d'une quantité efficace du point de vue herbicide du mélange en cuve sur le feuillage de la végétation indésirable.
